# EUROPÄISCHE PATENTSCHRIFT

(11) **EP 4 595 922 B1**
(45) Veröffentlichungstag und Bekanntmachung des Hinweises auf die Patenterteilung: **16.09.2026**
(21) Anmeldenummer: 25183629.2
(22) Anmeldetag: 15.10.2021
(51) Int. Cl.: A61C 17/22, A46B 9/04, A61C 17/34

(54) **ELEKTRISCHES ZAHNBÜRSTENHANDTEIL**
POWER TOOTHBRUSH HANDPIECE
MANCHE DE BROSSE À DENTS ÉLECTRIQUE

(30) Priorität: 18.12.2020 EP 20215774
(43) Veröffentlichungstag der Anmeldung: 06.08.2025
(60) Teilanmeldung: 26197128.7
(62) Dokumentnummer(n) der früheren Anmeldung(en) nach Art. 76 EPÜ: 21789768.5 / 4 262 621
(73) Patentinhaber: Trisa Holding AG, 6234 Triengen (CH)
(72) Erfinder: Scherzinger, Stefan, 6130 Willisau (CH); Scherrer, Jonas, 6204 Sempach (CH)
(74) Vertreter: Latscha Schöllhorn Partner AG

(56) Entgegenhaltungen:
- WO-A1-2017/008038
- CN-U- 209 966 619
- DE-U1- 20 109 552

## Beschreibung

### Technisches Gebiet

Die Erfindung betrifft ein elektrisches Zahnbürstenhandteil.

### Stand der Technik

Aus der CH 384 539 ist eine motorisch antreibbare Zahnbürste bekannt, deren Besatzträger mit einem Abtriebglied eines Elektromotors in Verbindung steht, welcher in einem als Handgriff ausgebildeten Gehäuse angeordnet ist. Zwischen dem rotierenden Abtriebglied des Elektromotors und dem Besatzträger ist ein die rotierende Bewegung des Abtriebgliedes in eine Schwingbewegung des Besatzträgers umwandelndes Getriebe angeordnet. Zur Umwandlung der rotierenden in eine schwingende Bewegung ist insbesondere ein Doppelkurbelgetriebe vorgesehen ist. Weiterhin ist zwischen Motor und Doppelkurbelgetriebe ein Wechselgetriebe angeordnet ist.

Die spezielle Ausgestaltung des Doppelkurbelgetriebes führt insbesondere zu einer unvorteilhaft grossen Bauhöhe.

Eine elektrisch betriebene Zahnbürste mit, unter anderem, einem Pleuelgetriebe ist aus US 3,046,584 bekannt. Bei dem Pleuelgetriebe ist die Antriebswelle der Zahnbürste mit einer Scheibe verbunden, welche direkt von der Welle des Elektromotors angetrieben wird und zwar mittels einer Kurbel und einer Pleuelstange, welche zusammen verschwenkt werden von einem Gelenkstift wobei die Kurbel im Gegenzug von dem Gelenkstift exzentrisch bezüglich der Scheibe verschwenkt wird.

Dieses Pleuelgetriebe benötigt ebenfalls relativ viel Platz und führt insbesondere zu einer unerwünscht hohen Bauform.

Aus der EP 0 560 758 B1 ist weiterhin eine elektrisch antreibbare Zahnbürste mit einem in einem Handgriff angeordneten Elektromotor bekannt, der über ein Getriebe und eine von diesem angetriebene Umsteuerungsvorrichtung ein drehbar gelagertes Zahnbürstenteil oszillierend antreibt. Das Getriebe ist als Gelenkviereck ausgebildet, welches eine mittels des Elektromotors antreibbare Kurbel aufweist, die mittels einer Koppel über eine Schwinge wenigstens mittelbar eine Antriebswelle des Zahnbürstenteils oszillierend antreibt. Dabei ist die Kurbel als Exzenterscheibe und die Koppel als Pleuel ausgebildet. Der Pleuel weist ein Lagerauge auf, in dem die Exzenterscheibe drehbar aufgenommen ist, wobei die Exzenterscheibe von einer Achse durchsetzt ist, die in einem Lagerbock und einer Lagerplatte drehbar aufgenommen ist.

Das Getriebe dieser elektrischen Zahnbürste weist zwar eine platzsparendere Anordnung auf, allerdings benötigt es relativ viele Einzelkomponenten, was den Montageaufwand erhöht.

In der EP 0 850 027 B1 wird eine elektrische Zahnbürste beschrieben, die ein Griffteil und ein Bürstenteil aufweist. In dem Griffteil ist ein Elektromotor untergebracht. Des Weiteren ragt aus dem Griffteil eine Welle heraus, die mit dem Elektromotor gekoppelt ist. Das Bürstenteil ist auf das Griffteil aufsteckbar. Des Weiteren ist an dem Bürstenteil ein mit der Welle koppelbarer Borstenträger gehalten, von dem eine Vielzahl von Borsten abstehen. Im eingeschalteten Betriebszustand führt der Borstenträger eine Drehbewegung sowie eine Hubbewegung aus, wobei die Frequenz der Hubbewegung grösser ist als die Frequenz der Drehbewegung. Die Hubbewegung stellt eine Stocherbewegung der Borsten dar, mit der Plaque von den Zahnoberflächen abgelöst wird. Mit Hilfe der Drehbewegung wird die abgelöste Plaque von den Zahnoberflächen weggewischt.

Das zur Erzeugung dieser kombinierten Dreh- und Hubbewegung benötigte Getriebe ist wiederum komplex im Aufbau und somit mit einem erhöhten Herstellungsaufwand verbunden.

Viele der bekannten elektrischen Zahnbürsten weisen zudem unerwünscht hohe Geräuschemissionen auf, d.h. insbesondere oberhalb von 65 dB, was von vielen Benutzern als störend empfunden wird.

In der WO 2008/0404401 A1 wird weiterhin eine Elektrozahnbürste mit einem Getriebe beschrieben, wobei das Getriebe zur Übertragung und Umformung einer in einer Drehrichtung orientierten Drehbewegung, die von einem Elektromotor an einer Antriebswelle bereitgestellt ist, in eine Bewegung einer Abtriebsachse zum Antrieb eines bewegbaren Reinigungselementes der Elektrozahnbürste, dient. Das Getriebe weist einen mit der Antriebswelle wirkverbundenen Nocken und einen entsprechenden Abnehmer, der mit der Abtriebsachse drehfest verbunden ist, auf. Bei diesem Getriebe beträgt das Verhältnis des Abstandes zwischen der Längsmittelachse der Abtriebsachse und der Längsmittelachse der Antriebswelle im Bereich des Abnehmers einerseits zum Abstand zwischen der Längsmittelachse einer den Nocken antreibenden Achse und der Längsmittelachse des Nockens andererseits mindestens 10:1.

Dokument WO2017008038A1 offenbart ein elektrisches Zahnbürstenhandteil mit einem Gehäuse, einer Rahmeneinheit, einer Energiequelle und einer Antriebseinheit wobei die Rahmeneinheit die Energiequelle und die Antriebseinheit umgibt, das Gehäuse die Rahmeneinheit umgibt und die Rahmeneinheit zwei halbschalenartige Hälften umfasst. Eine Dichtungmanschette ist über deren als Führungszapfen ausgebildetes vorderes Ende der Rahmeneinheit geschoben.

Dokument CN209966619U offenbart ein elektrisches Zahnbürstenhandteil mit einem Gehäuse, einer Rahmeneinheit, einer Energiequelle und einer Antriebseinheit wobei die Rahmeneinheit die Energiequelle und die Antriebseinheit umgibt, das Gehäuse die Rahmeneinheit umgibt und die Rahmeneinheit zwei halbschalenartige Hälften umfasst. Eine Kappe mit einer Durchgangsbohrung für eine Antriebswelle wird über die Rahmeneinheit gestülpt, um eine Dichtung auf die Rahmeneinheit zu drücken.

Bei dieser Lösung sind insbesondere kontaktfreie Abschnitte zwischen Nocken und Abnehmer vorhanden, welche unter Umständen zu einem Rattern des Getriebes und damit ebenfalls zu einem erhöhten Geräuschpegel führen können.

Der vorliegenden Erfindung liegt somit die Aufgabe zu Grunde, eine Antriebseinheit für ein elektrisches Zahnbürstenhandteil bereitzustellen, welche einen deutlich verringerten Geräuschpegel und damit zusammenhängend einen entsprechend vibrationsarmen und kompakten Aufbau aufweist und welche einen geringen Stromverbrauch sowie ausserdem eine hohe Reinigungsleistung gewährleisten kann. Zusätzlich sollen ein entsprechendes elektrisches Zahnbürstenhandteil, ein entsprechend einfaches Herstellverfahren für ein solches Zahnbürstenhandteil, eine entsprechend passende und effiziente Aufsteckbürste sowie eine entsprechende elektrische Zahnbürste angegeben werden.

### Darstellung der Erfindung

Die Aufgabe wird erfindungsgemäss durch ein elektrisches Zahnbürstenhandteil gelöst, wie sie im unabhängigen Anspruch 1 definiert ist. Vorteilhafte Ausführungsvarianten der Erfindung ergeben sich jeweils aus den abhängigen Ansprüchen.

Ein Aspekt der Offenbarung besteht im Folgenden: Eine Antriebseinheit für ein elektrisches Zahnbürstenhandteil, welche ein Getriebe und einen Elektromotor aufweist. Das Getriebe umfasst einen Exzenter, eine Pleuelstange, eine Antriebswelle sowie ein mit der Antriebswelle fest verbundenes Gelenkstück. Dies sind somit die vier bewegten Teile des Getriebes (ab Motorenwelle und inkl. Antriebswelle). Optional können zur Verbesserung der Gleiteigenschaften noch zusätzlich ein bis zwei Gleitlager bzw. - hülsen am Gelenkzapfen und/oder der Exzenterzapfen bzw. an der Pleuelstange angebracht werden. Der Elektromotor weist eine Motorwelle auf. Der Exzenter weist einen Grundkörper mit einer Grundkörperachse sowie einen auf dem Grundkörper angeordneten Exzenterzapfen auf, welcher sich parallel zu der Grundkörperachse von dem Grundkörper erstreckt. Die Pleuelstange weist ein erstes Lager, ein zweites Lager sowie ein das erste Lager mit dem zweiten Lager verbindendes Stangenelement auf. Das Gelenkstück ist an der Antriebswelle fixiert (vorzugsweise auf die Antriebswelle aufgespritzt) und weist einen sich parallel zu der Antriebswelle und entgegengesetzt zu dem Exzenterzapfen erstreckenden Gelenkzapfen auf. Der Exzenter ist mit seinem Grundkörper entlang der Grundkörperachse auf die Motorwelle des Elektromotors aufgebracht und der Exzenterzapfen ist vom ersten Lager der Pleuelstange aufgenommen und der Gelenkzapfen des an der Antriebswelle fixierten (vorzugsweise auf die Antriebswelle aufgespritzten) Gelenkstücks ist vom zweiten Lager der Pleuelstange aufgenommen. Das Getriebe benötigt keine verzahnten Bauteile wie Zahnräder, Ritzel oder dergleichen.

Der "Elektromotor" kann grundsätzlich diverse Formen von Elektromotoren umfassen, wie etwa Gleichstrom-, Wechselstrom-, Drehstrom-, Schwinganker- oder Linearmotoren umfassen, wobei besonders bevorzugt ein Gleichstrommotor mit einer kontinuierlichen 360°-Drehung vorgesehen ist. Für die Anwendung eignen sich insbesondere Elektromotoren mit einer maximalen Effizienz bei einem Drehmoment von 0.5 bis 6 mNm, insbesondere von 1 bis 3.5 mNm. Die entsprechende Motorenleistung ist notwendig, um eine direkte bzw. untersetzungsfreie Übertragung der Motordrehung in eine periodische Hin- und Her-Schwenkbewegung der Antriebswelle zu gewährleisten. Untersetzungsfrei heisst in diesem Zusammenhang, dass jede Motorenumdrehung mit dem Getriebe in eine Hin- und Her-Bewegung der Antriebswelle umgewandelt wird. Das Getriebe kommt deshalb vorzugsweise ohne Zahnräder aus welche bei einer Untersetzung gängiger Weise verwendet werden. Es werden dadurch weniger Bauteile verwendet und das Spiel bzw. die Geräuschemissionen des Getriebes können reduziert werden.

Der Begriff "Exzenter" kann generell jegliche geeignete Form von auf eine Welle aufgebrachten Steuerungskörpern bzw. -scheiben umfassen, deren Mittelpunkt außerhalb der Wellenachse liegt. Vorliegend soll der Exzenter insbesondere eine Drehbewegung (rotatorisch) einer Motorwelle in eine rotatorische Hin- und Her-Drehbewegung einer Antriebswelle umwandeln.

Vorliegend bildet der "Grundkörper" den auf die Motorwelle, vorzugsweise im Presssitz, aufgebrachten Teil des Exzenters, welcher regelmässig grösser ausgebildet ist als der Exzenterzapfen, d.h. dass er insbesondere einen grösseren Durchmesser aufweist als der "Exzenterzapfen", welcher frei von dem Grundkörper abragt (d.h. vom Motor weg). Die "Grundkörperachse" repräsentiert vorliegend die Drehachse des Exzenters und fällt insoweit mit der Achse der Motorwelle zusammen. Die Grundkörperachse kann aber auch ausserhalb des Zentrums des Grundkörpers angeordnet sein d.h. die Grundkörperachse kann exzentrisch angeordnet sein. Damit kann die Unwucht des Exzenters welche durch den Exzenterzapfen entsteht ausgeglichen werden. Der Exzenterzapfen kann zweiteilig ausgebildet sein. Der Exzenterzapfen kann als ein separates Teil z.B. in den Exzenter Grundkörper eingesetzt werden. Der Exzenterzapfen kann aber auch in seiner Zylinder Mantelschicht aus einem anderen Material bestehen. So kann beispielsweise auf dem Exzenterzapfen eine Metallhülse aufgebracht werden. Der Exzenterzapfen besteht in diesem Fall aus zwei Teilen. Damit können die Reibungseigenschaften und auch die Wärmentwicklung im Zusammenspiel mit der Pleuelstange optimieren werden.

Das an der Antriebswelle fix montierte bzw. auf die Antriebswelle aufgespritzte "Gelenkstück" bildet vorliegend quasi das antriebswellenseitige Gegenstück zum motorseitigen Exzenter, wobei der Gelenkzapfen in entgegengesetzter Richtung bezüglich des Exzenterzapfens von dem Gelenkstück auf der Antriebswelle abragt. Der Gelenkzapfen und der Exzenterzapfen sind dabei vorzugsweise als zylinderförmige Körper ausgebildet, welche möglichst spielfrei mit den Lagern der Pleuelstange zusammenwirken.

Der Begriff "Pleuelstange" kann vorliegend jede geeignete Art von Verbindungsstück zur Übertragung einer Drehbewegung von einer motorseitigen Getriebekomponente auf eine antriebswellenseitige Getriebekomponente umfassen. Die beiden Lager an den entgegengesetzten Seiten des Stangenelements sind bevorzugt als Gleitlager für den Gelenkzapfen und den Exzenterzapfen ausgebildet. Die Gleitlager werden bevorzugt direkt in der Pleuelstange ohne Zusatzteile gebildet. Denkbar sind aber auch ein oder beidseitig in die Pleuelstange bzw. deren Lager (d.h. insbesondere wenn letztere aus Kunststoff gefertigt sind) eingelassene Lagerbuchsen bzw. Lagerhülsen.

Aufgrund der wenigen Bauteile des Getriebes kann eine besonders raumsparende und gleichzeitig geräuscharme Antriebseinheit bereitgestellt werden, welche zudem eine effiziente Übertragung der Motordrehung in eine periodische Hin- und Her-Schwenkbewegung der Antriebswelle gewährleistet. Insbesondere die verzahnungsfreie und spielarme Bewegungsübertragung trägt zu einem geräusch- und vibrationsarmen Betrieb bei. Auf eine Verzahnung kann verzichtet werden, da mit dem Getriebe keine Untersetzung mittels entsprechenden verzahnten Bauteilen wie Ritzel, Zahnräder oder dergleichen benötigt wird.

Vorzugsweise umfasst der Grundkörper des Exzenters eine oder mehrere Ausnehmungen, welche derart konfiguriert ist/sind, dass der Massenschwerpunkt des Exzenters auf der Motorwelle des Elektromotors liegt. Der hiesige Exzenter weist daher einen verbesserten Aufbau auf mit einer optimierten Unwucht, d.h. der Exzenter läuft mit weniger Unwucht als bei bekannten Lösungen und somit ruhiger bzw. vibrationsarmer. Die Massenverteilung ist im Querschnitt besonders homogen, so dass der Motor regelmässiger belastet wird.

Die Masse bzw. das Volumen der Ausnehmung(en) im Grundkörper entspricht dabei üblicherweise nicht der Masse bzw. dem Volumen des aufgesetzten Exzenterzapfens. Massgeblich ist in erster Linie die Position des Massenschwerpunkts. Die Masse bzw. das Volumen der Ausnehmung(en) im Grundkörper wird allerdings bestimmt durch die Grösse sowie die Position des Exzenterzapfens und der grundsätzlichen Anordnung des Grundkörpers und der Ausnehmung für die Motorwelle.

Der Exzenter kann grundsätzlich gegenüber der Motorwelle bzw. der Ausnehmung die die Motorwelle aufnimmt exzentrisch ausgerichtet sein und auch der Exzenterzapfen kann dann wiederum exzentrisch auf dem Grundkörper liegen. Durch die entsprechend gestalteten Abstände entsteht wiederum eine homogene Massenverteilung bzw. dass der Massenschwerpunkt auf der Motorwelle liegt.

Die Längengestaltung des Exzenters ist derart, dass die Ausnehmung für die Verbindung zur Motorwelle unterschiedlich lang bzw. tief ist. Die Exzenter können im vorliegenden Aufbau ausgetauscht werden, ohne dass weitere Anpassungen nötig sind. Die Gestaltung des Exzenters hat hierbei wesentlichen Einfluss darauf, dass dies möglich ist, denn das Ende des Exzenters bzw. die Endfläche des Exzenters auf der Seite der Pleuelstange muss im Aufbau des Getriebes immer am selben Ort liegen. Der Längenausgleich passiert über die tiefe der Ausnehmung für die Verbindung zur Motorwelle.

Dies bringt den Vorteil, dass mit demselben Aufbau des Getriebes mit wenigen Änderungen ein Getriebe für ein anderes Produkt geschaffen werden kann. Beispielsweise können auf diese Weise durch verschiedene Exzenter verschiedene Drehwinkel der Antriebswelle erreicht werden, indem die Exzentrizität des Exzenterzapfens verändert wird. Weiter kann parallel auch Motor und Schlüsselelement verändert werden, sodass eben mit demselben Getriebe eine Zahnbürste mit einer Sonic-Bewegung wie auch eine Zahnbürste mit oszillierender Bewegung (periodische Hin- und Her-Drehbewegung um die Bürstenkopfachse) geschaffen werden kann. Die Wechsel bringen mit sich, dass unterschiedliche Drehwinkel der Antriebswelle, unterschiedliche Drehgeschwindigkeiten der Antriebswelle und somit unterschiedliche Geschwindigkeiten am Bürstenkopf erreicht werden können.

Als weitere Möglichkeit ist grundsätzlich auch der Einbau bzw. die Formung eines Schwungrads denkbar, um mehr Masse an den Exzenter zu bringen, beispielsweise in Form einer Scheibe (d.h. mehr Masse wird weiter Aussen positioniert). Der Vorteil von einer derartigen Ausführungsform besteht in einem geringeren Stromverbrauch des Elektromotors im Lauf, allerdings muss beim Starten ggf. ein höherer Stromverbrauch in Kauf genommen werden. Das Schwungrad lässt auch einen ruhigeren bzw. vibrationsärmeren Betrieb zu. Durch das zusätzliche Trägheitsmoment des Schwungrads lassen sich Belastungsspitzen (z.B. hoher Druck des Benutzers auf den Bürstenkopf) besser überwinden. Das Schwungrad kann als Teil bzw. mittels Vergrösserung des Exzenters konzipiert werden.

Vorzugsweise weist der Grundkörper des Exzenters an seiner dem Elektromotor abgewandten Stirnfläche eine podestartige Erhebung auf, auf welcher der Exzenterzapfen angeordnet ist. Der auf diese Weise geschaffene Absatz am Grundkörper bzw. an dessen Stirnfläche ermöglicht es, den Exzenter näher an der Pleuelstange anzuordnen, was wiederum zu der besonders kompakten Bauweise beiträgt.

Vorzugsweise beträgt die Exzentrizität der Exzenterzapfenachse gegenüber der Grundkörperachse von 0.2 mm bis 3 mm, vorzugsweise von 0.3 mm bis 2 mm. In diesem Bereich kann generell ein besonders geräusch- und vibrationsarmer Lauf des Getriebes gewährleistet werden. In diesem Bereich beträgt die Motordrehzahl der Antriebseinheit im unbelasteten Zustand vorzugsweise von 3'000 U/min bis 12'000 U/min.

Besonders bevorzugt beträgt die Exzentrizität der Exzenterzapfenachse gegenüber der Grundkörperachse von 0.3 mm bis 1 mm, wenn eine sogenannte Sonic-Bewegung erzeugt werden soll. Bei dieser Sonic-Variante wird mittels der entsprechend gestalteten Antriebseinheit bzw. der Antriebswelle die periodisch hin- und her-schwenkende Bewegung der Antriebswelle unmittelbar auf eine entsprechende (Sonic-) Aufsteckbürste bzw. deren Bürstenkopf übertragen. Die Bürstenköpfe sind bei der Sonic-Variante in der Regel im Wesentlichen länglich oval bis rechteckig ausgestaltet, vorzugsweise mit der grösseren Längserstreckung in Richtung der Längsachse der Aufsteckbürste. Die Achse der Drehrichtung des Bürstenkopfes der (Sonic-) Aufsteckbürste ist parallel zur Antriebswelle - im Gegensatz zur Achse der Drehrichtung des Bürstenkopfes der (oszillierenden-) Aufsteckbürste, welche im Wesentlichen senkrecht zur Antriebswelle steht.

Bei einer Sonic-Bewegung beträgt der minimale Winkel zwischen der Längsrichtung des Stangenelements der Pleuelstange gegenüber der Gelenkstückachse von 50° bis 90° vorzugsweise von 62° bis 78° und der maximale Winkelbereich von 80° bis 120° vorzugsweise von 92° bis 108°. Auf diese Weise entsteht kein toter Punkt im Bewegungsablauf, der die Bewegung blockieren könnte. Als Gelenkstückachse wird die Achse auf dem Gelenkstück verstanden, welche zwischen dem Mittelpunkt der Antriebswelle und dem Mittelpunkt des Gelenkzapfens, senkrecht zur Antriebswelle ausgebildet wird.

Die Bewegung der Antriebswelle (aus ihrer Grundstellung) umfasst bei der Sonic-Variante einen Winkelbereich von +/- 1° bis +/- 15° vorzugsweise von +/- 3° bis +/- 10°.

Besonders bevorzugt beträgt die Exzentrizität der Exzenterzapfenachse gegenüber der Grundkörperachse von 1.4 mm bis 2 mm, wenn eine sogenannte oszillierende Bewegung (einer oszillierenden Aufsteckbürste) erzeugt werden soll. Bei der oszillierenden Variante wird die entsprechende periodisch hin- und her-schwenkende Bewegung der Antriebswelle mittels einer entsprechenden Umwandlungseinheit in der Aufsteckbürste umgewandelt in eine periodisch wechselnde Drehbewegung eines drehbeweglich in einem Kopfabschnitt der Aufsteckbürste gelagerten Bürstenkopfs (d.h. die Drehbewegung erfolgt senkrecht zur Bürstenkopfachse). Die Bürstenköpfe sind bei der oszillierenden Variante in der Regel im Wesentlichen rund oder leicht oval ausgestaltet. Wie bereits beschrieben, steht die Achse der Drehrichtung des Bürstenkopfes der (oszillierenden-) Aufsteckbürste im Wesentlichen senkrecht zur Antriebswelle.

Der Winkel zwischen der Längsrichtung des Stangenelements der Pleuelstange gegenüber der Gelenkstückachse beträgt für die oszillierende Variante minimal von 40° bis 75° vorzugsweise von 50° bis 65° und maximal von 90° bis 130° vorzugsweise von 105° bis 117°. Auf diese Weise entsteht wiederum kein toter Punkt im Bewegungsablauf, der die Bewegung blockieren könnte. Als Gelenkstückachse wird die Achse auf dem Gelenkstück verstanden, welche zwischen dem Mittelpunkt der Antriebswelle und dem Mittelpunkt des Gelenkzapfens ausgebildet wird.

Die Bewegung der Antriebswelle bzw. des Bürstenkopfes der (oszillierenden) Aufsteckbürste (aus ihrer Grundstellung) umfasst für die oszillierende Variante einen Winkelbereich von +/- 10° bis +/- 40° vorzugsweise von +/- 20° bis +/- 30° und am meisten bevorzugt von +/- 25°.

Die Borstenfelder auf den Bürstenköpfen der entsprechenden Aufsteckbürsten können für beide Varianten grundsätzlich gleich oder jedenfalls teilweise gleich ausgestaltet sein.

Grundsätzlich gilt im Hinblick auf die vorgenannten Exzentrizitätsunterschiede, dass je kleiner die Exzentrizität ist, desto mehr Kraft kann von der Motorwelle entwickelt werden (d.h. entsprechend dem Hebelgesetz), wobei dafür allerdings der Hub bzw. Drehwinkel der Antriebswelle bzw. des Bürstenkopfes umso geringer wird.

Vorzugsweise beträgt die Motordrehzahl im unbelasteten Zustand generell von 3'000 U/min bis 12'000 U/min. Für die oszillierende Variante beträgt die Motorendrehzahl im unbelasteten Zustand 3'500 U/min bis 10'000 U/min vorzugsweise 4'000 U/min bis 7'000 U/min. Für die Sonic-Variante beträgt die Motorendrehzahl im unbelasteten Zustand von 7'000 U/min bis 12'000 U/min vorzugsweise von 9'000 U/min bis 11'000 U/min. Damit können Zielgrössen von 7'000 - 10'000 Bewegungen pro Minute für die oszillierende Variante und von 15'000 - 25'000 Bewegungen pro Minute für die Sonic-Variante erreicht werden. Als Bewegungen werden jeweils Links- und Rechtsdrehungen aus der Mittelstellung des Bürstenkopfes gerechnet. Mit anderen Worten, bei einem Drehwinkel von +/- 10° Grad wird die Bewegung nach +10° und -10° gezählt. In diesem Bereich der Drehzahlen kann sowohl für die Sonic-Variante als auch für die oszillierende Variante ein relativ geringer Stromverbrauch erreicht werden.

Diesbezüglich sei angemerkt, dass von einem "belasteten Zustand" gesprochen wird, wenn eine Belastung bzw. ein Anpressdruck ab etwa 300 g auf eine entsprechende Aufsteckbürste ausgeübt wird. Von einem "unbelasteten Zustand" wird gesprochen, wenn kein Anpressdruck auf eine entsprechende Aufsteckbürste ausgeübt wird.

Vorzugsweise weisen der Gelenkzapfen des fix an der Antriebswelle montierten bzw. auf die Antriebswelle aufgespritzten Gelenkstücks und der Exzenterzapfen in etwa denselben Durchmesser auf. Auf diese Weise kann ein besonders runder Lauf des Getriebes sichergestellt werden. Somit kann auch die Pleuelstange symmetrisch aufgebaut bzw. ausgestaltet werden, was eine äquivalentere Massenverteilung mit sich bringt, was das Laufverhalten massgeblich beeinflusst und die Montage erleichtert, da die Pleuelstange nicht ausgerichtet werden muss. Wie weiter vorn beschrieben können die Pleuelstange bzw. deren Lager oder/und der Gelenkzapfen und/oder der Exzenterzapfen mit Hülsen versehen werden, welche die Gleiteigenschaften zwischen der Pleuelstange oder/und Gelenkzapfen bzw. Pleuelstange oder/und Exzenterzapfen optimieren.

Vorzugsweise ist/sind die Pleuelstange und/oder das auf die Antriebswelle aufgespritzte Gelenkstück aus einer Hartkomponente vorzugsweise aus Polyoxymethylen (POM) gebildet. Hierdurch können besonders geeignete Gleitlager für das Getriebe bereitgestellt werden. Zudem verfügen die entsprechenden Bauteile über eine ausgeprägte Robustheit.

Vorzugsweise ist der Exzenter aus Metall, besonders bevorzugt aus Messing, oder aber aus einer Hartkomponente bevorzugt aus Polyoxymethylen (POM) gebildet. Eine Ausbildung des Exzenters aus Metall, insbesondere aus Messing, weist ggf. etwas bessere Laufeigenschaften auf, wohingegen eine Ausbildung aus Polyoxymethylen (POM) herstelltechnisch etwas einfacher und kostengünstiger ist.

Für den Gelenkzapfen bzw. Exzenterzapfen und Pleuel können unterschiedliche Materialien verwendet werden. Bei den unterschiedlichen Materialien kann sich dabei um einen Kunststoff und Metall handeln. Bevorzugt wird dabei eine Hartkomponente wie POM und eine Kupferlegierung wie Messing verwendet.

Gelenkzapfen und/oder der Exzenterzapfen können aus einer Hartkomponente insbesondere POM bestehen. In diesem Fall wird die Pleuelstange aus Metall gefertigt.

Gelenkzapfen und/oder der Exzenterzapfen können mindestens teilweise aus Metall insbesondere aus Messing bestehen. Beispielsweise kann die Zylindermantelschicht des Gelenkzapfens und/oder des Exzenterzapfens mit einer Metallhülse insbesondere aus Messing versehen werden. In diesem Fall wird die Pleuelstange aus einer Hartkomponente insbesondere POM gefertigt.

Die Erfindung betrifft ein elektrisches Zahnbürstenhandteil mit einem Gehäuse, einer Rahmeneinheit, einer Energiequelle, einem Schlüsselelement sowie mit einer Antriebseinheit. Die Antriebseinheit ist vorzugsweise wie die vorstehend beschriebene Antriebseinheit ausgestaltet, mit einem entsprechenden Getriebe und einem entsprechenden Elektromotor. Das Gehäuse des elektrischen Zahnbürstenhandteils umgibt dabei die Rahmeneinheit, die Antriebseinheit und die Energiequelle (und das Schlüsselelement zumindest teilweise). Die Rahmeneinheit weist zumindest eine Getriebezone, eine Motorzone sowie eine Energiequellenzone auf, wobei die Getriebezone konfiguriert ist das Getriebe aufzunehmen, die Motorzone konfiguriert ist den Elektromotor aufzunehmen, und die Energiequellenzone konfiguriert ist die Energiequelle aufzunehmen. Das Schlüsselelement ist an einem vorderen Teil des Gehäuses angeordnet und weist vorzugsweise eine Schlüsselgeometrie auf, welche konfiguriert ist eine Kopplung mit einer korrespondierenden Schlüsselkopplungsgeometrie einer Aufsteckbürste einzugehen. Die Energiequelle ist konfiguriert die Antriebseinheit mit Energie zu versorgen. Die Antriebseinheit ist konfiguriert, eine Bewegung einer Antriebswelle des Getriebes zu erzeugen, wobei sich die Antriebswelle durch das Schlüsselelement hindurch erstreckt und vorzugsweise eine Achsengeometrie aufweist, welche konfiguriert ist eine Kopplung mit einer korrespondieren Achskopplungsgeometrie einer Aufsteckbürste einzugehen. Die Achsengeometrie kann insbesondere eine Abflachung und/oder eine Einkerbung bzw. Ausnehmung am vorderen bzw. freien Ende der Antriebswelle umfassen.

Unter "Rahmeneinheit" wird vorliegend generell eine Halterungsvorrichtung mit verschiedenen Aufnahmezonen für verschiedene Bauteile des elektrischen Zahnbürstenhandteils verstanden. Die Aufnahmezonen sollen die entsprechenden Bauteile jedenfalls so fest halten, dass sie bei einem Einschieben in ein Gehäuse des Zahnbürstenhandteils nicht herausfallen können und dass die Bauteile einander gegenüber die Position nicht mehr verändern können. Vorzugsweise sollen sämtliche mechanischen und elektrischen Bauteile des Zahnbürstenhandteils entsprechend fest im Rahmen gehalten werden. Dem Fachmann ist dabei bewusst, dass für die entsprechende herausfallsichere Ausgestaltung der Aufnahmezonen grundsätzlich sämtliche Klemm-, Rast-, Halte-, Vorspann-, Fixier- und/oder Positioniereinrichtungen etc. verwendet werden können, je nach Eignung für das entsprechende Bauteil.

Unter "Energiequelle" werden vorliegend auswechselbare und nicht auswechselbare sowie aufladbare und nicht aufladbare Vorrichtungen verstanden, welche elektrische Energie speichern und über einen längeren Zeitraum hinweg abgeben können, wie etwa Akkus (z.B. Nickelmetallhydrid-Akkus oder Lithium-Ionen-Akkus) oder aber Batterien (z.B. Alkaline-Batterien).

Unter "Schlüsselelement" wird vorliegend ein Bauteil, welches eine für eine oder ggf. mehrere Sorten von Aufsteckbürsten geeignete Schnittstelle zum Aufbringen des Zahnbürstenhandteils enthält, verstanden, welche eine mit der Aufsteckbürste bzw. dem Aufsteckbürstenschaft korrespondierende Geometrie bzw. Struktur aufweist, welche ggf. die Aufsteckbürsten auch gegen ein ungewolltes Abziehen vom Zahnbürstenhandteil zu sichern vermag.

Vorzugsweise weist die Getriebezone eine erste Lagereinrichtung bzw. einen Abstütz- und Einstellanschlag für ein hinteres Ende der Antriebswelle und vorzugsweise auch einen Spannarm auf, welcher konfiguriert ist mit der Antriebswelle zu verrasten und optional eine Vorspannkraft auf die Antriebswelle auszuüben. Auf diese Weise kann ein Rattern des Getriebes auf besonders effiziente Weise vermindert beziehungsweise unterbunden und das Getriebe geräuscharm betrieben werden. Die Anschlagfläche der ersten Lagereinrichtung für die Antriebswelle dient zur axialen Aufnahme der Kräfte welche auf die Antriebswelle wirken können. Die Position der Anschlagfläche dient zur Einstellung der Position der Antriebswelle gegenüber dem Schlüsselelement und damit zumindest für die oszillierenden Ausgestaltungsvariante zur Einstellung der Eingriffstiefe der Antriebswelle in die Aufsteckbürste.

Vorzugsweise ist die Motorzone konfiguriert den Elektromotor zu fixieren. Hierbei kann es sich etwa um eine oder mehrere Vorspannflächen der Motorzone handeln, durch die das Gehäuse des Elektromotors form-/kraftschlüssig gehalten wird. Hierdurch wird eine herausfallsichere Bestückung der Rahmeneinheit mit dem Elektromotor gewährleistet.

Vorzugsweise weist die Energiequellenzone zumindest eine Rasteinrichtung auf, welche konfiguriert ist mit der Energiequelle zu verrasten. Hierbei kann es sich wiederum etwa um eine oder mehrere Vorspannflächen handeln, durch die das Gehäuse von z.B. einem Akkus oder einer Batterie form-/kraftschlüssig gehalten wird. Hierdurch wird eine herausfallsichere Bestückung der Rahmeneinheit mit der Energiequelle, d.h. dem Akku oder der Batterie, gewährleistet.

Vorzugsweise weist das Zahnbürstenhandteil (in dieser Schrift synonym mit "Handteil" verwendet) bzw. die Rahmeneinheit eine Spulenzone auf, welche konfiguriert ist einen Spulenträger aufzunehmen, welcher vorzugsweise aus einer Weichkomponente, bevorzugt aus Silikon, gebildet ist. Der Spulenträger kann dabei ggf. mit in der Spulenzone ausgebildeten Schnappvorrichtungen und/oder Positionierhilfen (z.B. Führungszylinder oder Sacklöcher) der Rahmeneinheit in Eingriff gelangen bzw. mit diesen verrasten.

Auf den Spulenträger ist insbesondere eine Ladespule zum Aufladen der Energiequelle aufgebracht bzw. aufgewickelt. Der mit der Ladespule bestückte Spulenträger ist als hinterstes Träger- bzw. elektrisches Funktionselement am hinteren Ende der Rahmeneinheit angeordnet und weist ggf. eine Öffnung für einen Gehäusedeckel auf. Auf diese Weise kann der Gehäusedeckel in die Spule einfahren, damit später der Ferritkern eines Ladegeräts in der Ladespule platziert werden kann.

Alternativ kann der Spulenträger auch aus einer Hartkomponente geformt werden, vorzugsweise einem Polyamid, welches allenfalls durch beigefügte Zusätze bzw. Additive eine benötigte Weichheit erlangt. Hierdurch kann durch die Materialwahl eine Schutzfunktion bereitgestellt werden, wenn etwa das Handteil hinfällt. Weitere Schutzfunktionen für diesen Fall können durch entsprechende geometrische Gestaltungen erreicht werden. Zusätzlich erlaubt die weiche Ausgestaltung des Spulenträgers einen Längenausgleich der Rahmeneinheit innerhalb des Handteils indem sich der Spulenträger aufgrund des weichen Materials beispielsweise aus einer Weichkomponente leicht komprimieren kann und dadurch eine Vorspannung gebildet wird.

Alternativ oder zusätzlich weist der Spulenträger vorzugsweise ein Längenausgleichsmittel, vorzugsweise in Form eines elastischen Abschnitts, auf, welcher die Rahmeneinheit gegenüber einem Gehäusedeckel des Handteils abstützt. Mit anderen Worten, sorgt der elastische Abschnitt im montierten Zustand dafür, dass sich Gehäusedeckel und die Rahmeneinheit nicht berühren. Hierdurch kann ein Längenausgleich zwischen Rahmeneinheit und Spulenträger erreicht werden sowie eine schwimmende Lagerung der Rahmeneinheit innerhalb des Gehäuses. Aufgrund der damit einhergehenden Abkopplung der Rahmeneinheit vom Gehäuse kann eine optimale Dämpfungswirkung (und damit verbunden weniger Vibrationen und Geräuschentwicklung) für das gesamte Handteil erreicht werden. Weiter hilft die Dämpfungswirkung das Gerät beispielsweise bei einem Fall auf den Boden zu schützen. Der Spulenträger ist weiter jenes Teil des ganzen Aufbaus, welcher beispielsweise bei grösseren Gehäusen verlängert werden kann, um die Masse auszugleichen. Das heisst, dass der Aufbau für verschiedene Einschubgrössen bzw. verschieden lange Gehäuse genutzt werden kann und dass lediglich unterschiedliche Spulenträger für den Längenausgleich genutzt werden und die anderen Bauteile im Wesentlichen identisch bleiben.

Vorzugsweise weist die Rahmeneinheit eine Printzone auf, welche konfiguriert ist eine Printplatte aufzunehmen und welche vorzugsweise eine Vertiefung umfasst, in welcher die Printplatte aufgenommen ist. Die Printplatte dient zur Aufnahme von elektrischen Funktionsbauteilen, insbesondere zur Steuerung der Antriebseinheit und weiterer Gerätefunktionen. Über die Steuerungsfunktionsbauteile auf der Printplatte wird insbesondere die Drehzahl des Elektromotors gesteuert, wie etwa bei der Ausführung von spezifischen Reinigungs- und/oder Massageprogrammen. Zur Sicherung der Elektronik vor falsch fliessenden Strömen ist vorzugsweise ein elektrischer Verpolungsschutz im elektrischen Kreis eingebaut, welcher in der Art einer Sicherung funktioniert (z.B. in Form von Verpolungsschutz-Dioden).

Die Printplatte ist in der Vertiefung der Printzone, vorzugsweise auf der Oberseite der Rahmeneinheit, angeordnet, wobei sich die Printzone regelmässig über einen Grossteil der Gesamtlänge der Rahmeneinheit erstreckt, d.h. insbesondere über mehrere Zonen der Rahmeneinheit hinweg (d.h. insbesondere über die Motor-, Energiequellen- und Spulenzone). An der Rahmeneinheit sind bevorzugt Klemmeinrichtungen in Form von etwa Klemmarmen ausgebildet, welche die Printplatte klemmend halten und/oder in die Vertiefung hineindrücken. Weiter können an der Rahmeneinheit eine oder mehrere Nasen ausgebildet sein, welche im montierten Zustand der Printplatte in Ausnehmungen in der Printplatte eingreifen und/oder diese mindestens teilweise umgreifen. Sie sind so angeordnet, dass eine eindeutige Positionierung bzw. Montage ermöglich wird und auch, dass im montierten Zustand ein Verschieben in Längsrichtung unterbunden wird.

Vorzugsweise ist das Schlüsselelement an seinem dem Handteil zugewandten, hinteren Ende konfiguriert mit einem Schnappelement der Rahmeneinheit zu verrasten (vorzugsweise weist es hierfür eine entsprechende Ausnehmung auf). Dieser Aufbau wird insofern bevorzugt, als das Schlüsselelement erfindungsgemäß aus einer Hartkomponente, bevorzugt aus mit Glaskugeln verstärktem Polyoxymethylen (POM), gebildet ist und somit selbst weniger gut geeignet ist ein Schnappelement auszubilden, verglichen mit der Ausbildung dessen an der Rahmeneinheit.

Die Rahmeneinheit umfasst zwei halbschalenartige Häften, welche vorzugsweise aus einer Hartkomponente, bevorzugt aus Polyoxymethylen (POM), gebildet sind. Auf diese Weise kann eine ausreichende Stabilität bereitgestellt werden, auch wenn etwa aus Gründen der Materialersparnis mehrere Ausnehmungen bzw. Durchbrüche in einer oder in mehreren Zonen der Rahmeneinheit vorgesehen sind.

Vorzugsweise weist das Schlüsselelement eine Durchgangsbohrung für die Antriebswelle sowie eine zweite Lagereinrichtung für einen vorderen Bereich der Antriebswelle auf, wobei die zweite Lagereinrichtung vorzugsweise an dem Handteil abgewandten Ende des Schlüsselelements angeordnet ist. Auf diese Weise kann erreicht werden, dass die beiden Lagerpunkte für die Antriebswelle ausreichend weit auseinanderliegen, um dem Getriebe zusätzliche Stabilität zu verleihen und für einen ruhigen Lauf der Antriebswelle zu sorgen.

Vorzugsweise weist das Schlüsselelement eine Ausnehmung auf, in welcher ein Dichtungselement, vorzugsweise eine Balgdichtung, angeordnet ist, welches konfiguriert ist das Gehäuse bzw. das Schlüsselelement gegen die Antriebswelle abzudichten. Die Balgdichtung ist vorzugsweise ein einstückiges Bauteil, welches in einer korrespondierenden Ausnehmung des Schlüsselelements montiert anschliessend auf die Antriebswelle aufgeschoben wird.

Die Balgdichtung ist dabei bevorzugt rotationssymmetrisch aufgebaut. Ein ringförmiges Element der Balgdichtung, das Innen ausgebildet ist, liegt später an der Antriebswelle uns rund um diese an und dichtet diese dort ab. Ein ringförmiges Element der Balgdichtung, das Aussen ausgebildet ist, liegt später am Schlüsselelement an und dichtet dort ab. Zwischen den beiden ringförmigen Elementen ist eine tordierbares Element bzw. eine tordierbare Zone in Form einer Fläche ausgebildet. Damit dient das Dichtelement insbesondere zu einer Abdichtung des Inneren eines Gehäuses gegenüber der Antriebswelle. Das Dichtelement liegt dazu insbesondere mit Untermass an der Achse der Schnittstelle an, sodass das Dichtelement bei einer Drehbewegung der Achse der Schnittstelle zumindest teilweise tordiert. Zum anderen liegt das Dichtelement mit Übermass am Zapfen an, damit es daran möglichst fix anliegt. Durch den beschriebenen Aufbau der Balgdichtung entsteht eine Art Torsionsfeder welche auf die Antriebswelle wirkt und dadurch den Energieverbrauch gegenüber anderen Dichtungslösungen reduziert. Die Sicherung der Position der Balgdichtung erfolgt in Längsrichtung der Antriebswelle einmal vorne mittels eines Anschlags im Schlüsselelement und einmal hinten mittels eines Anschlags an der Rahmeneinheit (d.h. im fertig montierten Zustand). Die Balgdichtung wird besonders bevorzugt bei der oszillierenden Variante eingesetzt.

Vorzugsweise ist auf dem der Rahmeneinheit zugewandten Ende des Schlüsselelements ein Dicht-/Dämpfelement aus einer Weichkomponente aufgebracht, welches konfiguriert ist das Gehäuse gegen das Schlüsselelement abzudichten und welches konfiguriert ist eine dämpfende Lagerung für das Schlüsselelement bereitzustellen. Das Dicht-/Dämpfelement bietet so eine Kombination von zwei Funktionen in einem Bauteil. Das Dicht- und Dämpfelement wird über das Schlüsselelement gestülpt und ist somit zwischen dem Schlüsselelement und dem Gehäuse positioniert. Weiter dehnt es sich bis seitlich an die Rahmeneinheit aus, so wird die Rahmeneinheit auch seitlich gedämpft gelagert. Das Dicht-/Dämpfelement schnappt vorzugsweise leicht auf die Rahmeneinheit auf. Bevorzugt ist das Dicht-/Dämpfelement aus einer Weichkomponente, insbesondere aus Silikon, gebildet. Zusammen mit dem Spulenträger bildet das Dicht-/Dämpfelement die schwimmende Lagerung der Rahmeneinheit und trägt damit zu einem Geräusch- und vibrationsarmen Betrieb des Gerätes bei.

Vorzugsweise weisen die erste und die zweite halbschalenartige Hälfte der Rahmeneinheit Positionierhilfen, bevorzugt in Form von Führungszylindern und korrespondierenden Sacklöchern, auf. Die Positionierhilfen weisen bevorzugt die Form von ineinandersteckbaren und/oder ineinanderklickbaren Sacklöchern und Kreiszylindern auf. Besonders bevorzugt sind dabei 2 bis 10 vorzugsweise 4 bis 8 Positionierhilfen pro halbschalenartiger Hälfte vorgesehen. Dabei kann eine halbschalenartige Hälfte alle Sacklöcher aufweisen und eine halbschalenartige Hälfte alle Kreiszylinder. Auch gemischte Anordnungen sind denkbar. Die halbschalenartigen Hälften der Rahmeneinheit werden seitlich zusammengefügt. Die Trennlinie verläuft im Wesentlichen in Längsrichtung unter der Printplatte, um den Elektromotor, oberhalb des Energiespeichers und um das Getriebe.

Ein noch weiterer Aspekt der Offenbarung besteht in Folgendem: Ein Verfahren zum Herstellen eines elektrischen Zahnbürstenhandteils. Das herzustellende elektrische Zahnbürstenhandteil soll dabei vorzugsweise wie das vorstehend beschriebene Handteil ausgestaltet sein. Allerdings ist es auch denkbar, dass das herzustellende elektrische Zahnbürstenhandteil bei gleichermassen einfacher Herstellweise in einem oder mehreren Merkmalen abweichende Ausgestaltungen aufweist ohne den Rahmen der vorliegenden Erfindung zu verlassen. Das Verfahren umfasst die nachfolgend beschriebenen Schritte, von denen einige optional sind. Die einzelnen Schritte können, müssen aber nicht in der angegebenen Reihenfolge ausgeführt werden.

In einem Schritt (a) wird zunächst eine zweite halbschalenartige Hälfte einer die zweite und eine damit korrespondierende erste halbschalenartige Hälfte umfassenden Rahmeneinheit bereitgelegt.

In einem Schritt (b) erfolgt die (seitliche) Montage einer Antriebseinheit mit einem Elektromotor und einem Getriebe, wobei der Elektromotor mit dem Getriebe verbunden wird und der Elektromotor in einer Motorzone und das Getriebe in einer Getriebezone der zweiten halbschalenartigen Hälfte positioniert und dort fixiert werden.

Im Schritt (b) wird vorzugsweise zunächst der Exzenter auf die Motorwelle aufgebracht. Anschliessend wird vorzugsweise die Pleuelstange mit einem Lager auf den Exzenterzapfen aufgesteckt und die Antriebswelle mit dem fest aufgebrachten bzw. aufgespritzten Gelenkstück wird mittels des Gelenkzapfens in das andere Lager der Pleuelstange eingesteckt, wobei die genannten Lager nicht als separate Teile im Sinne von Lagern zu verstehen sind. Die so vormontierten Teile werden in die Motor- bzw. Getriebezone der bereitgelegten zweiten halbschalenartigen Hälfte seitlich eingelegt. Dabei verrastet die Antriebswelle vorzugsweise mit einem Spannarm in der Getriebezone und ein hinteres Ende der Antriebswelle wird von einer (ersten) Lagereinrichtung in der Getriebezone aufgenommen. Die Motorzone kann über separate Rastvorrichtung bzw. Vorspannflächen für den Elektromotor verfügen.

In einem optionalen Schritt (c) kann ggf. die Montage eines hinteren und eines vorderen Federblechs in der zweiten halbschalenartigen Hälfte erfolgen, wobei vorzugsweise das hintere und das vordere Federblech jeweils von Haltearmen in Position gehalten werden. Die beiden Federbleche werden dabei vorzugsweise seitlich in entsprechende Aufnahmen der zweiten halbschalenartigen Hälfte eingesteckt. Die Federbleche werden bevorzugt vor einer möglichen Printplatte montiert, da die Federbelche ggf. noch in die Printplatte eingesteckt bzw. durch diese hindurchgeführt werden müssen, um ggf. später dort verbunden beispielsweise verlötet zu werden.

In einem Schritt (d) erfolgt die Montage einer Printplatte in einer Printzone der zweiten halbschalenartigen Hälfte, wobei die Printplatte bevorzugt seitlich in eine korrespondierende Vertiefung der Printzone eingesteckt wird. Ggf. werden jeweils zumindest ein erstes Verbindungsstück des hinteren Federblechs und ein erstes Verbindungsstück des vorderen Federblechs durch korrespondierende Ausnehmungen in der Printplatte geführt und die Printplatte wird vorzugsweise in der Vertiefung der Printzone verrastet bzw. dort klemmend gehalten.

In einem Schritt (e) erfolgt die Montage der ersten halbschalenartigen Hälfte an der zweiten halbschalenartigen Hälfte, wobei die beiden halbschalenartigen Hälften vorzugsweise an mehreren Stellen ineinandergesteckt und/oder geklickt bzw. verrastet werden. Dabei wird bevorzugt eine leichte Vorspannung aufgebaut. Aufgrund dieser Vorspannung können sich die beiden halbschalenartigen Hälften gegeneinander verspannen, was der Gesamtstabilität der Rahmeneinheit dient.

Die Schritte (a), (b), (d) und (e) bilden grundsätzlich die Basis des vereinfachten Herstellverfahrens. Hierbei kann weiterhin umfasst sein:

In einem optionalen Schritt (f) kann ggf. die Montage eines Schlüsselelements an der Rahmeneinheit erfolgen, wobei das Schlüsselelement über die Antriebswelle aufgeschoben wird und vorzugsweise mit der Rahmeneinheit verrastet. Vorzugsweise wird das Schlüsselelement vorher noch mit einer Balgdichtung bestückt zur Abdichtung des Gehäuses gegenüber der Antriebswelle (d.h. insbesondere bei der oszillierenden Variante).

In einem optionalen Schritt (g) kann ggf. die Montage eines Spulenträgers mit einer Ladespule in der Spulenzone der Rahmeneinheit erfolgen, wobei der Spulenträger auf einen hinteren Endbereich der Rahmeneinheit (Spulenzone) aufgebracht, vorzugsweise aufgesteckt, wird. Dieser Schritt erfolgt regelmässig nicht bei Verwendung von auswechselbaren Batterien.

In einem Schritt (h) kann ggf. das Herstellen von elektrischen Verbindungen erfolgen, wobei vorzugsweise Drähte (bzw. Metalllitzen oder Kabel) von der Printplatte zum Elektromotor (oder umgekehrt) geführt werden und die ersten Verbindungsstücke des hinteren und des vorderen Federblechs sowie die Enden der Kabel der Ladespulen mit der Printplatte verlötet werden.

In einem Schritt (i) kann ggf. die Montage einer Energiequelle erfolgen, wobei die Energiequelle in einer Energiequellenzone der Rahmeneinheit, ggf. klemmend zwischen einem Federstück des hinteren Federelements und einem Federstück des vorderen Federelements aufgenommen wird. Der Akku bzw. die Batterie wird dabei bevorzugt von der Unterseite her durch eine entsprechende Öffnung der Rahmeneinheit in die Energiequellenzone eingebracht, wobei der Akku bzw. die Batterie ggf. zusätzlich von seitlichen Vorspannflächen der Rahmeneinheit aufgenommen und mit einem Vorspann gehalten wird. Diese Art der Montage des Akkus bzw. der Batterie erlaubt ein einfaches Auswechseln ohne dass feste Verbindungen gelöst werden müssen (z.B. Ablöten, Trennen von elektrischen Verbindungen etc.). Im Zusammenhang mit einem wiederverschliessbaren Gehäusedeckel und einer entnehmbaren bzw. montierbaren Einschubeinheit bzw. Rahmeneinheit lässt sich so das Gerät bez. Akku einfach reparieren. Unterstützend können entlang seitlich der Vorspannflächen an der Rahmeneinheit, an der Kante der Öffnung der Rahmeneinheit Halterippen angebracht sei, die den Akku bzw. die Batterie ebenfalls halten bzw. das Halten unterstützen.

In einem optionalen Schritt (j) kann ggf. schliesslich ein Einschieben der (bestückten) Rahmeneinheit (vorliegend auch als "Einschubeinheit" bezeichnet) in das Gehäuse des Handteils und ggf. ein Aufbringen eines Gehäusedeckels erfolgen. Die Rahmeneinheit mitsamt allen Bauteilen ist dann fest innerhalb des Gehäuses positioniert.

Das Einschieben der vollständig bestückten Rahmeneinheit in das Gehäuse des Handteils wird vorzugsweise unterstützt durch Einschubhilfen, wie beispielsweise durch Einschubrippen oder -schienen, welche etwa seitlich an der Rahmeneinheit bzw. einem Dicht-/Dämpfelement und/oder seitlich an der Innenwand des Gehäuses angeordnet sind. Hierdurch kann die Rahmeneinheit sicher in die vorgesehene Zielposition gleiten. Insbesondere kann ein "blindes" Einführen der Einschubeinheit in das Gehäuse mit entsprechender Fehlausrichtung vermieden werden.

Vorzugsweise wird im Schritt (b) das Getriebe aufweisend einen Exzenter, eine Pleuelstange, eine Antriebswelle sowie ein fest mit Antriebswelle verbundenes, vorzugsweise darauf aufgespritztes bzw. montiertes, Gelenkstück mit dem Elektromotor verbunden, indem der Exzenter auf eine Motorwelle des Elektromotors aufgebracht wird und die Pleuelstange auf den Exzenter sowie auf das fest mit der Antriebswelle verbundene Gelenkstück aufgebracht, vorzugsweise aufgesteckt, wird. Hierdurch kann auf einfache Weise ein besonders platzsparendes und geräuscharmes Getriebe bereitgestellt werden.

Vorzugsweise wird im Schritt (b) die Antriebswelle in der Getriebezone der ersten halbschalenartigen Hälfte verrastet und vorzugsweise ausserdem in einer ersten Lagereinrichtung der Getriebezone gelagert. Auf diese Weise kann ein besonders geräuscharmer Betrieb gewährleistet werden.

Vorzugsweise wird vor dem Schritt (f) ein Dichtungselement, vorzugsweise eine Balgdichtung, in das Schlüsselelement eingebracht. Dieses zusätzliche Element dient einer effizienten Abdichtung des Gehäuses bzw. des Schlüsselelements gegenüber der Antriebswelle.

Vorzugsweise wird nach dem Schritt (f) ein Dicht-/Dämpfelement an der Rahmeneinheit, bzw. einem vorderen Ende davon, montiert, wobei das Dicht-/Dämpfelement über das Schlüsselelement aufgeschoben wird und vorzugsweise mit der Rahmeneinheit bzw. dem Gehäuse verrastet. Das Dicht-/Dämpfelement dichtet und dämpft zwischen Schlüsselelement und Gehäuse. Zusätzlich unterstütz das Dicht-/Dämpfelement die schwimmende bzw. weiche Lagerung der Rahmeneinheit.

Ein noch weiterer Aspekt der Offenbarung besteht in Folgendem. Eine Aufsteckbürste für ein elektrisches Zahnbürstenhandteil. Das elektrische Zahnbürstenhandteil soll dabei vorzugsweise wie das vorstehend beschriebene Handteil ausgestaltet sein. Die Aufsteckbürste umfasst insbesondere einen Kopfabschnitt, der einen Bürstenkopf aufweist, einen Aufsteckabschnitt, sowie einen den Kopfabschnitt mit dem Aufsteckabschnitt verbindenden Halsabschnitt. Der Bürstenkopf weist ein Borstenfeld auf. Das Borstenfeld umfasst dabei zumindest einen inneren Kreis mit einer ersten Form von Borstenbündeln sowie einen äusseren Kreis mit einer zweiten Form von Borstenbündeln, wobei sich die erste Form von Borstenbündeln von der zweiten Form von Borstenbündeln unterscheidet. Zwischen den einzelnen Borstenbündeln der ersten Form auf dem inneren Kreis sind Lücken vorgesehen und zwischen den einzelnen Borstenbündeln der zweiten Form auf dem äusseren Kreis sind ebenfalls Lücken vorgesehen.

Der "Bürstenkopf" umfasst vorliegend etwa Ausgestaltungen mit einem in eine Ausnehmung des Bürstenkopfs eingebrachten Trägerplättchen für die Borsten bzw. die Borstenbündel für das Borstenfeld. Das Trägerplättchen kann dabei beweglich, insbesondere drehbar, im Bürstenkopf angeordnet sein. Ebenso sind Ausgestaltungen umfasst, bei denen die Borsten bzw. Borstenbündel direkt auf dem Bürstenkopf montiert sind, d.h. ohne ein Trägerplättchen.

Das "Borstenfeld" umfasst insbesondere einzeln angeordnete oder in Borstenbündeln zusammengefasste Borsten, wobei auch anderweitige Funktionselemente, wie etwa Polier- und Massageelemente (aus Weichkomponente(n)), Teil des Borstenfelds sein können. Beispiele für solche Funktionselemente und bevorzugte Materialien für die einzelnen Elemente bzw. für die Borsten sind weiter unten aufgeführt.

Unter "Formen" von Borstenbündeln werden vorliegend insbesondere geometrische Formen verstanden (beispielsweise der Querschnitt des Borstenbündels beim Austreten aus dem Bürstenkopf), welche durch die Borsten eines Borstenbündels ausgebildet werden. Die Borsten welche die einzelnen Borstenbündel bilden können aneinander anliegend oder mit einem geringen Abstand zueinander angeordnet sein.

Unter "Lücken" werden vorliegend im Wesentlichen unbesetzte Stellen bzw. Unterbrechungen zwischen zwei benachbarten Borstenbündeln auf den jeweiligen Ringen des Borstenfelds verstanden. Es ist allerdings denkbar, dass Borstenbündel eines weiter innen auf dem Borstenfeld angeordneten Rings jedenfalls teilweise in die Lücken zwischen den Borstenbündeln eines weiter aussen gelegenen Rings eingreifen.

Die einzelnen "Kreise" des Borstenfelds sind im Wesentlichen konzentrisch zum Zentrum des Bürstenkopfs, meist das Drehzentrum, angeordnete ring- oder ovalförmige Gebilde, auf welchen die Borstenbündel liegen. In der Regel weist ein Bürstenkopf einen inneren und einen äusseren Kreis mit Borstenbündeln sowie ggf. auch einen mittleren Kreis mit Borstenbündeln zwischen dem inneren und äusseren Kreis mit Borstenbündeln auf. Ausgestaltungen mit mehr als drei Kreisen mit Borstenbündeln sind, je nach verfügbarem Platz auf dem Bürstenkopf, grundsätzlich auch denkbar. Bei einem oval ausgebildeten Bürstenkopf würden die Borstenbündel analog auf konzentrischen ovalen Linien angeordnet werden. Die ovalen Linien können elliptisch bis rechteckige ausgebildet sein.

Vorzugsweise umfasst die erste Form von Borstenbündeln auf dem inneren Kreis kreissegmentförmige, rautenförmige oder dreieckförmige Borstenbündel und die zweite Form von Borstenbündeln auf dem äusseren Kreis umfasst kreissegmentförmige, dreieckförmige oder ovale Borstenbündel. Diese Borstenbündelformen haben sich als besonders geeignet für die Verwendung im Zusammenhang mit der vorbeschriebenen Sonic-Variante sowie insbesondere mit der vorbeschriebenen oszillierenden Variante erwiesen, da hiermit eine besonders gute Reinigungswirkung in den Zahnzwischenräumen sowie im Bereich des Zahnfleischrands erzielt werden kann.

Vorzugsweis weist das Borstenfeld weiterhin einen mittleren Kreis mit einer dritten Form von Borstenbündeln auf, wobei zwischen den einzelnen Borstenbündeln der dritten Form auf dem mittleren Kreis Lücken vorgesehen sind, wobei vorzugsweise die dritte Form von Borstenbündeln kreissegmentförmige, ovale oder dreieckförmige Borstenbündel umfasst. Auf diese Weise kann der vorbeschriebene Reinigungseffekt weiter optimiert werden.

Vorzugsweise korrespondiert die dritte Form von Borstenbündeln auf dem mittleren Kreis mit der zweiten Form von Borstenbündeln auf dem äusseren Kreis - weist dabei aber eine kleinere Dimensionierung auf. Hierdurch kann die Flexibilität des Borstenfelds im mittleren Bereich des Bürstenkopfs vorteilhaft gestaltet werden.

Vorzugsweise sind die Borstenbündel der dritten Form auf dem mittleren Kreis versetzt zu den Borstenbündeln der zweiten Form auf dem äusseren Ring angeordnet und greifen bevorzugt jedenfalls teilweise in die Lücken zwischen den Borstenbündeln der zweiten Form auf dem äusseren Kreis. Hierdurch können insbesondere Beläge im Bereich des Zahnfleischrands effektiv entfernt werden.

Vorzugsweise sind die Borstenbündel der ersten Form auf dem inneren Kreis versetzt zu den Borstenbündeln der zweiten Form auf dem äusseren Kreis angeordnet und greifen bevorzugt jedenfalls teilweise in die Lücken zwischen den Borstenbündeln der zweiten Form auf dem äusseren Kreis. Hierdurch können ebenfalls Beläge im Bereich des Zahnfleischrands effektiv entfernt werden.

Vorzugsweise weist, insbesondere für die oszillierende Variante, der Aufsteckabschnitt eine Kopplungsgeometrie auf, die konfiguriert ist eine Kopplung mit einer korrespondierenden Kopplungsgeometrie eines elektrischen Zahnbürstenhandteils einzugehen. Hierbei entspricht die Kopplungsgeometrie des Aufsteckabschnitts besonders bevorzugt der Geometrie des Schlüsselelements des vorbeschriebenen elektrischen Zahnbürstenhandteils und wird somit auch als Schlüsselkopplungsgeometrie bezeichnet. Die Sonic Variante hingegen verzichtet auf eine Kopplungsgeometrie am Schlüsselelement. Diese Aufgabe wird von der Antriebswelle übernommen, welche die Kopplungsgeometrie für Sonic Aufsteckbürste aufweist.

Ein noch weiterer Aspekt der vorliegenden Offenbarung besteht im Folgenden:
Eine elektrische Zahnbürste mit einem elektrischen Zahnbürstenhandteil, vorzugsweise wie vorstehend beschrieben und mit einer Aufsteckbürste, vorzugsweise wie vorstehend beschrieben.

Weitere bevorzugte Ausführungsformen und Spezifizierungen der vorliegenden Offenbarung, welche generell sowohl für die Sonic-Variante als auch für die oszillierende Variante oder aber speziell für eine der beiden Varianten vorgeschlagen werden, werden im Folgenden angegeben, wobei auch bereits angesprochene Aspekte ggf. detaillierter beschrieben oder erläutert werden.

Im Rahmen der vorliegenden Anmeldung wird, wie bereits vorstehend dargelegt, generell unterschieden zwischen einer oszillierenden Variante und einer Sonic-Variante. Die jeweils zur Anwendung kommende Variante hängt letztlich von der entsprechend auf das elektrische Zahnbürstenhandteil aufzubringende Aufsteckbürste ab.

Bei der oszillierenden Variante wird mittels der entsprechend gestalteten Antriebseinheit eine periodisch hin- und her-schwenkende Bewegung der Antriebswelle erzeugt, welche in eine oszillierende Bewegung des Bürstenkopfs einer entsprechend ausgestalteten Aufsteckbürste umgewandelt wird.

Bei der Sonic-Variante wird mittels der entsprechend gestalteten Antriebseinheit eine periodisch hin- und her-schwenkende Bewegung der der Antriebswelle unmittelbar auf eine entsprechend ausgestaltete Aufsteckbürste bzw. deren Bürstenkopf übertragen. Der Winkelbereich der periodisch hin- und herschwenkenden Bewegung der Antriebswelle ist hier regelmässig kleiner als bei der oszillierenden Variante.

Allgemein kann aber festgehalten werden, dass im Wesentlichen die gleiche Grundgestaltung der Einschubeinheit für die oszillierende Variante und für die Sonic-Variante gilt.

Bestimmte Teile weisen allerdings, wie bereits oben angesprochen, Unterschiede auf. Insbesondere liegt eine unterschiedliche Gestaltung bei den jeweils zum Einsatz kommenden Exzentern vor. Bei der oszillierenden Variante ist insbesondere der Exzenterzapfen weiter von der Motorwelle bzw. der Grundkörperachse entfernt als bei der Sonic-Variante.

Des Weiteren kann eine unterschiedliche Performance bei den Motoren vorgesehen sein, wobei vorzugsweise eine höhere Motordrehzahl bei Sonic-Variante zum Einsatz kommt als bei der oszillierenden Variante.

Unterschiede bestehen auch im Hinblick auf die Verbindung vom Handteil zur Aufsteckbürste.

Bei der oszillierenden Variante erfolgt die Verbindung zum Handteil über die Antriebswelle und am Schlüsselelement. Dabei fixiert das Schlüsselelement den Aufsteckabschnitt und die Antriebswelle ist fest mit einem entsprechenden Wellenabschnitt in der Aufsteckbürste verbunden, welcher ggf. mittels einer entsprechenden Umwandlungseinheit für eine periodische (Dreh-) Bewegung des Bürstenkopfs, d.h. senkrecht zur Bürstenkopfachse, sorgt.

Bei der Sonic-Variante erfolgt eine feste Verbindung nur gegenüber der Antriebswelle.

Generell gilt, dass das Handteil der jeweiligen elektrischen Zahnbürste ein Gehäuse mit Gehäusedeckel sowie eine Rahmeneinheit umfasst.

In der Rahmeneinheit sind sämtliche Bauteile der Antriebseinheit, d.h. der Elektromotor und das Getriebe, vorliegend in Form eines Pleuel-Getriebes, verbaut. Die bestückte Rahmeneinheit stellt somit eine Einschubeinheit dar, welche nach der Montage sämtlicher für die Rahmeneinheit vorgesehenen Bauteile in das Gehäuse der des elektrischen Zahnbürstenhandteils eingeschoben wird.

Im Folgenden werden nochmals die Bestandteile sowie der generelle Aufbau des elektrischen Zahnbürstenhandteils beschrieben.

Das Gehäuse und der Gehäusedeckel sind vom Aufbau her grundsätzlich bekannt, weisen aber gewisse Besonderheiten auf.

So ist etwa die Lagerung der Rahmeneinheit im Gehäuse flexibel ausgestaltet. Die flexible Lagerung im Gehäuse dient zur Dämpfung, damit das Handteil nicht bzw. so wenig als möglich vibriert.

Die Lagerung der Rahmeneinheit erfolgt bevorzugt an zwei Positionen, nämlich einmal vorne am Schlüsselelement mittels dem Dicht-/Dämpfelement sowie hinten am Spulenträger.

Das Dicht-/Dämpfelement bietet dabei eine Kombination von zwei Funktionen in einem Teil. Zum einen wird das Innenleben des Handteils gegen Aussen und zwischen Gehäuse und Rahmeneinheit abgedichtet. Zum anderen wird eine Dämpf- und Lagerfunktion bereitgestellt. Das Dicht- und Dämpfelement ist dabei über das Schlüsselelement gestülpt und ist somit zwischen dem Schlüsselelement und dem Gehäuse positioniert.

Der Spulenträger weist ein Längenausgleichsmittel, vorzugsweise in Form eines elastischen Abschnitts, auf, welcher die Rahmeneinheit gegenüber einem Gehäusedeckel des Handteils abstützt. Hierdurch kann ggf. ein Längenausgleich zwischen Rahmeneinheit und Spulenträger erreicht werden sowie eine schwimmende Lagerung der Rahmeneinheit innerhalb des Gehäuses. Aufgrund dieser Abkopplung der Rahmeneinheit kann eine Dämpfungswirkung (weniger Vibrationen bzw. Geräuschentwicklung) für das gesamte Handteil erreicht werden.

Als weitere Besonderheiten des Gehäuses sind zudem Einschub- und Positionierhilfen vorgesehen. Bevorzugt sind an der Gehäuseinnenseite, im vorderen Bereich (in Richtung des Antriebswellen-Austritts) auf der linken wie der rechten Seite Flaps/Rippen/Schienen ausgeformt. Aussen an der Rahmeneinheit sind als Gegenstücke ebenfalls bevorzugt zwei Flaps/Rippen/Schienen ausgeformt. Die Flaps/Rippen/Schienen des Gehäuses und der Rahmeneinheit passen jeweils zusammen und werden ineinandergesteckt. Dies dient zwei Funktionen, nämlich einmal der Drehmomentabstützung und einmal der Positionierung der Rahmeneinheit innerhalb des Gehäuses. Das Dicht-/Dämpfelement kann vom Schlüsselelement her bis zur Rahmeneinheit reichen und die Flaps/Rippen/Schienen überziehen, damit kann eine weitere Dämpfung erreicht werden.

Eine blosse Führung der Rahmeneinheit im Gehäuse erfolgt im hinteren Teil (d.h. eine Ausrichtung erfolgt nur im vorderen Bereich). Als Führungen an der Rahmeneinheit sind Ausnehmungen in Form von Längsnuten vorgesehen. Am Gehäuse sind entsprechende seitliche Kanten vorgesehen.

Im Handteil ist weiterhin bevorzugt das Getriebe in Form eines Pleuel-Getriebes vorgesehen.

Die Energiequelle für das elektrische Zahnbürstenhandteil wird bevorzugt durch Akkus (Nickel-Metallhydrid- oder Lithium-Ionen-Akkus) gebildet, wobei vorzugsweise nur eine Energieträgereinheit verwendet wird. Die Ladung der Akkus erfolgt vorzugsweise induktiv oder aber direkt mit einer Steckverbindung.

Die Montage des Handteils läuft dabei generell folgendermassen ab. Zunächst wird das Innenleben bzw. die einzelnen Komponenten desselben an Rahmeneinheit montiert bzw. in die erste halbschalenartige Hälfte eingelegt und mit der zweiten halbschalenartigen Hälfte fixiert. Dann wird die Rahmeneinheit samt Innenleben in das Gehäuse geschoben. Anschliessend wird der Gehäusedeckel auf das Gehäuse geschraubt und dort verriegelt bzw. fixiert. Die Rahmeneinheit samt Innenleben ist hierdurch fixiert bzw. wird im Gehäuse klemmend bzw. mit Vorspann gehalten. Die Klemmung erfolgt zwischen dem Schlüsselelement und dem Spulenhalter.

Ausserdem wird das Innenleben nach aussen hin abgedichtet, damit kein Wasser bzw. keine Feuchtigkeit eindringen kann. Am hinteren Ende wird dazu das Handteil mit dem Gehäusedeckel abgedichtet. Der Gehäusedeckel enthält eine Dichtung, welche zwischen Gehäusedeckel und Gehäuse dichtet (vorzugsweise mittels O-Ring). Am vorderen Ende des Handteils erfolgt eine Abdichtung gegenüber aussen mittels z.B. einer Balgdichtung, welche innerhalb des Schlüsselelements angeordnet und auf die Antriebswelle aufgeschoben ist und dem Dicht-/Dämpfelement zwischen dem Schlüsselelement und dem Gehäuse.

Die Rahmeneinheit ist somit eine Art Chassis für die verschiedenen elektrischen und mechanischen Komponenten des Handteils. Weiterhin ist sie eine Einschubeinheit, d.h. sie wird komplett mit den elektrischen/mechanischen Komponenten bestückt, bevor sie in das Gehäuse eingeschoben wird.

Die Gestaltung der Rahmeneinheit umfasst zwei bevorzugt in Längsrichtung
ausgerichtete halbschalenartige Hälften bzw. Hälften, die miteinander verbunden werden. Dadurch ergibt sich eine gute Stabilität und es kommt zu weniger Verbiegungen/Verdrehungen bzw. zu einer geringeren Torsionsanfälligkeit im Vergleich zu einem modularen Aufbau mit auf der Längsachse hintereinander angebrachten Elementen, welche die einzelnen Bauteile wie Motor, Akku und Getriebe aufnehmen. Zudem kann so die Lagerung des Pleuelgetriebes mit der Antriebswelle stabiler gestaltet werden. Der Aufbau der Rahmeneinheit ist mithin zweiteilig mit einer rechten Seite und einer linken Seite bzw. mit einer ersten halbschalenartigen Hälfte und einer zweiten halbschalenartigen Hälfte.

Die seitliche Zweiteiligkeit wird vorliegend bevorzugt, da auf die Printplatte des Handteils üblicherweise ein Schutzlack aufgebracht ist, der durch Vibrationen etc. abgerieben werden kann. Dabei kann der abgeriebene Schutzlack einen möglichen Kurzschluss zwischen Motor und Printplatte verursachen. Deshalb muss ein Abstand zwischen Motor und Printplatte geschaffen werden. Die Printplatte wird daher vorzugsweise in einer Vertiefung im oberen Bereich Rahmeneinheit montiert und ist vorzugsweise auf ihrer Unterseite zum grössten Teil mit Kunststoff abgeschirmt/gestützt. Die Rahmeneinheit bildet eine Kunststoffschicht zwischen Printplatte und Motor bzw. zwischen Printplatte und Akku/Batterie.

Es wird darauf geachtet, dass der Schlitz bzw. die Anstosslinie in der Mitte wo die beiden halbschalenartigen Hälften zusammenkommen so klein wie möglich gehalten wird. Hierdurch wird die Printplatte ebenfalls gestützt, was insbesondere im Hinblick auf den Ein-/Aus-Schalter realisiert sein muss, damit sich die Printplatte beim Betätigen desselben nicht durchbiegt und beschädigt wird. Durch ein entsprechend adaptiertes Design der Printplatte wird es möglich, die Stützstreben bzw. die Abstützung der Printplatte durch Elemente an der Rahmeneinheit zu reduzieren und dennoch dieselbe Stabilität und Sicherheit zu erhalten.

Die Bestückung der Rahmeneinheit erfolgt hauptsächlich von der Seite. Dabei wird zunächst die erste halbschalenartige Hälfte bestückt, danach wird die zweite halbschalenartige Hälfte angefügt und anschliessend werden beide halbschalenartigen Hälften miteinander verbunden und bilden zusammen, wie erwähnt, die Einschubeinheit.

Die Gesamtlänge der Einschubeinheit (d.h. vom hinteren Ende des Spulenträgers bis zum vorderen Ende der Antriebswelle) beträgt von 170 mm bis 220 mm vorzugsweise von 180 mm bis 190 mm. Die Länge der Einschubeinheit ist für die oszillierende Variante bei gleichem Aufbau etwas länger als die Einschubeinheit für die Sonic-Variante (aufgrund der unterschiedlichen Ausgestaltung des Schlüsselelementes). Bei gleichem Aufbau beträgt die Längendifferenz zwischen der oszillierenden Variante und der Sonic- Variante zwischen 3 mm und 8 mm.

Die Innenlänge der Einschubeinheit (d.h. vom hinteren Ende des Spulenträgers bis zum Austritt der Antriebswelle aus dem vorderen Ende der Rahmeneinheit) beträgt bei beiden Varianten zwischen 135 mm bis 170 mm vorzugsweise 145 mm bis 160 mm. Die Innenlänge bis Austritt der Antriebswelle aus dem Körper (d.h. vom hinteren Ende des Spulenträgers bis zum Austritt der Antriebswelle aus dem Körper bzw. dem Schlüsselelement) beträgt bei der oszillierenden Variante von 150 mm bis 185 mm vorzugsweise von 160 mm bis 175 mm und bei der Sonic-Variante von 135 mm bis 170 mm vorzugsweise von 145 mm bis 160 mm, was dem Mass der Innenlänge der Einschubeinheit entspricht, da bei der Sonic-Variante keine Schlüsselgeometrie ausgebildet ist.

Die maximale Breite der Einschubeinheit beträgt von 15 mm bis 27 mm vorzugsweise von 18 mm bis 23 mm.

Die maximale Höhe der Einschubeinheit beträgt von 15 mm bis 30 mm vorzugsweise von 19 mm bis 25 mm.

Der Rahmeneinheit weist verschiedene aneinandergereihte Geometrien für die Aufnahme der unterschiedlichen Bauteile des Innenlebens auf. Die Bestückung der Rahmeneinheit erfolgt dabei hauptsächlich von der Seite aber z.T. auch von oben oder von unten. Die Rahmeneinheit ist hierfür insbesondere in verschiedene Zonen unterteilt.

Dabei bildet die Spulenzone, vom vorderen Ende her gesehen, die letzte Zone und dient zur Montage der Ladespule. Die Montage des Spulenträgers erfolgt erst, wenn die halbschalenartigen Hälften zusammengesetzt bzw. montiert sind.

Direkt anschliessend an Spulenzone folgt die Energiequellen- bzw. Akkuzone. Diese stellt den Montageplatz für den Akku bzw. die Batterie dar. Die Montage des Akkus bzw. der Batterie erfolgt von unten durch eine entsprechende Ausnehmung bzw. Öffnung in der Rahmeneinheit.

Auf die Energiequellen-Zone folgt die Motorzone. Diese ist der Einbauplatz für den Elektromotor. Die Montage des Elektromotors erfolgt bevorzugt von der Seite. Insbesondere kann in die Motorzone beispielsweise ein Gleichstrommotor mit kontinuierlicher 360°-Drehung (einstückig) aufgenommen werden.

Auf die Motorzone folgt die Getriebezone. Diese ist der Einbauplatz für das Getriebe. Die Montage des Getriebes erfolgt bevorzugt gleichzeitig mit der Montage des Motors von der Seite her.

Die Print-Zone befindet sich bevorzugt auf der Oberseite der Rahmeneinheit und erstreckt sich vorzugsweise über die Spulen-, Akku- und die Motorzone. Die Montage der Printplatte erfolgt auch von der Seite.

Das bevorzugte Kunststoffmaterial für die Rahmeneinheit ist eine Hartkomponente, besonders bevorzugt ein Polyoxymethylen (POM).

Spezifische Merkmale der Rahmeneinheit umfassen, wie oben angesprochen, einen Längenausgleich sowie eine Drehmomentabstützung. Ein weiteres spezifisches Merkmal ist die Fixierung der beiden halbschalenartigen Hälften. Die halbschalenartigen Hälften werden seitlich miteinander verbunden und zwar vorzugsweise mittels Rasteinrichtungen und Positionierhilfen, d.h. beispielsweise einer Kombination aus Rasten/Einklicken und Überstülpen/Führen, bzw. einer Kombination von form-/kraftschlüssigen Verbindungen und formschlüssigen Verbindungen.

Alternative Verbindungsmöglichkeiten können ein Verkleben oder ein Verschrauben umfassen.

Die Anzahl der Rasteinrichtungen beträgt von 4 bis 12 vorzugsweise von 4 bis 8. Besonders bevorzugt werden Rasteinrichtungen in Form von Schnapp- oder Vorspannarmen.

Die Rasteinrichtungen sind bevorzugt regelmässig in Längsrichtung der Rahmeneinheit verteilt, vorzugsweise vorne, hinten und in der Mitte. Weiter vorzugsweise sind sie, so weit als möglich, symmetrisch an den entsprechenden Längspositionen angeordnet.

Eine Verbindung durch Überstülpen erfolgt etwa am Antriebswellen-Austritt des Gehäuses. Dabei wird das Schlüsselelement über die beiden verbundenen halbschalenartigen Hälften erfindungsgemäß über die beiden vorderen Führungszapfenhälften der Rahmeneinheit gestülpt.

Als weitere spezifische Ausgestaltung der Rahmeneinheit sind Materialeinsparungen in Form von Ausnehmungen in den halbschalenartigen Hälften zu nennen. Insbesondere im Bereich der Energiequellen-Zone wird hierbei eine fachwerkähnliche Konstruktion mit Durchbrüchen und Verbindungsstegen geschaffen, deren Ziel es ist, Material einzusparen, dabei aber die Stabilität der Rahmeneinheit zu erhalten sowie deren Funktionalität nicht einzuschränken.

Die Mindestabmessungen für die Verbindungsstege zwischen den Durchbrüchen betragen dabei hinsichtlich der Breite (seitliche Draufsicht) von 1 mm bis 6 mm vorzugsweise von 2 mm bis 4 mm und hinsichtlich der Materialstärke (Dicke) der Stege (entspricht der Dicke der Rahmeneinheit) von 0.5 mm bis 4 mm vorzugsweise von 0.75 mm bis 2 mm.

Die Formen der Durchbrüche sind bevorzugt dreieckförmig, wobei jeweils eine Diagonale eines Rechtecks stehenbleibt. Auf diese Weise wird eine besonders stabile Fachwerkstruktur ausgebildet.

Die Durchbrüche können auch dazu dienen, zusätzliche Funktionen zu ermöglichen. Beispielsweise können bei engen Platzverhältnissen bestimmte Elemente wie etwa die Pleuelstange mehr Platz beanspruchen, wenn in ihrer Umgebung entsprechende Durchbrüche werden. Das Getriebe ragt dann in entsprechende Durchbrüche in der Getriebezone hinein.

Als weitere spezifische Merkmale der Rahmeneinheit sind an zwei Positionen bzw. für zwei Elemente Durchbrüche für Kabelführungen vorgesehen. Einmal sind beim Motor, gegenüberliegend von der Motorwelle, Durchbrüche für zwei Kabel vorgesehen. Des Weiteren sind bei den Federelementen, d.h. jeweils vor und hinter dem Akku, Durchbrüche für je ein Federelement vorgesehen.

Für die Positionierung der linken gegenüber der rechten halbschalenartigen Hälfte sind hier jeweils Positionierhilfen insbesondere in Form von Führungszylindern und Sacklöchern ausgeformt, welche eine entsprechende Positionierungs- bzw. Orientierungshilfe bringen.

Vorzugsweise sind 2 bis 10 vorzugsweise 4 bis 8 Positionierhilfen pro halbschalenartiger Hälfte vorgesehen. Die Positionierhilfen weisen dabei bevorzugt die Form von korrespondierenden Sacklöchern und Kreiszylindern auf, die (formschlüssig) ineinander gesteckt werden.

Besonders bevorzugt wird der Halt der beiden halbschalenartigen Hälften über ein Klicksystem gestaltet. Dabei sind 4 bis 12 vorzugsweise 6 bis 10 Klickpositionen vorgesehen. Davon befinden sich vorzugsweise zwei Klickpositionen in Längsrichtung im Bereich des Schlüsselelements. Die Klickpositionen können durch Schnapp- und/oder Vorspannelemente gebildet werden.

Die Rahmeneinheit hält, wie bereits erwähnt, einmal die Ladespule und den Spulenträger. Diese sind als hinterstes Träger- bzw. elektrisches Funktionselement am hinteren Ende der Rahmeneinheit, d.h. auf der Seite des Gehäusedeckels, angeordnet. Der Gehäusedeckel fährt in die Spule ein, damit später der Ferritkern des Ladegeräts innerhalb der Ladespule platziert werden kann.

Die Montage/Halterung von Ladespule/Spulenträger erfolgt entlang der Längsachse. Der Spulenhalter wird über das hintere Ende der Rahmeneinheit gestülpt. Aufgrund der Herstellung des Spulenträgers aus Weichkomponente insbesondere Silikon oder einer weichen Hartkomponente ist dieser flexibel ausgebildet. Der Spulenträger ist somit nicht fix am hinteren Ende der Rahmeneinheit montiert, sondern kann von diesem abgezogen werden. Die Ladespule ist auf den Spulenträger aufgewickelt.

Die elektrischen Verbindungen umfassen Drähte welche von der Ladespule zur Printplatte geführt und dort verlötet werden. Die Drähte liegen in entsprechenden Führungen am Spulenträger. Die Führungen sind wiederum in Armen angeordnet, welche über die Printplatte geführt werden.

Der Ladespulen-Innendurchmesser beträgt von 7 mm bis 15 mm vorzugsweise von 9 mm bis 13 mm.

Der Ladespulen-Aussendurchmesser beträgt von 13 mm bis 21 mm vorzugsweise von 15 mm bis 19 mm.

Die Höhe der Ladespule beträgt von 3 mm bis 10 mm vorzugsweise von 4 mm bis 8 mm.

Die Anzahl der Spulenwicklungen beträgt von 60 bis 200 vorzugsweise von 80 bis 120.

Der Drahtdurchmesser beträgt von 0.1 mm bis 0.5 mm vorzugsweise von 0.2 mm bis 0.4 mm. Der Draht wird dabei bevorzugt aus Kupfer gebildet.

Der Spulenträger ist konfiguriert die Ladespule zu tragen. Weiterhin positioniert er die Spule gegenüber der Printplatte. Er sorgt ausserdem für eine Dämpfung und einen Längsausgleich, wie bereits oben erwähnt. Der Spulenträger drückt hinten auf dem Gehäusedeckel und liegt vorne an der Rahmeneinheit an.

Zwischen dem Spulenträger und der Rahmeneinheit ist im Spulenträger bevorzugt ein Federelement angeordnet.

Dem Spulenträger kommt auch eine Schutzfunktion zu. Er kann das Innenleben bis zu einem gewissen Grad schützen, wenn das Gerät hinfällt. Der Spulenträger wird nämlich bevorzugt aus einer Weichkomponente insbesondere Silikon oder einer weichen Hartkomponente gebildet.

Gemäss einer alternativen Ausgestaltung ist die Ladespule möglichst nahe am Zapfen des Ladegeräts positioniert. Die Ladespule berührt dabei den Gehäusedeckel und zwischen der Ladespule und der Rahmeneinheit befindet sich der Silikon-Spulenhalter.

Das Innenleben der Rahmeneinheit umfasst weiterhin zumindest einen Akku oder ggf. eine Batterie als Energiequelle. Vom hinteren Ende her gesehen, ist der Akku bzw. die Batterie direkt auf die Spule folgend positioniert. Die Montage des Akkus bzw. der Batterie erfolgt durch eine Ausnehmung bzw. Öffnung in der Unterseite - aber regelmässig erst im Anschluss an die Montage der restlichen Komponenten an der Rahmeneinheit.

Beide halbschalenartigen Hälften definieren dabei vorzugsweise die untere Ausnehmung bzw. Öffnung, damit der Akku bzw. die Batterie von unten in die Rahmeneinheit eingeschoben werden kann, d.h. die beiden Öffnungshälften der beiden halbschalenartigen Hälften passen im montierten Zustand der Rahmeneinheit zusammen und bilden so eine grosse untere Öffnung. Der Vorteil dabei ist, dass der Akku bzw. die Batterie erst bei der Endmontage verbaut werden muss, wodurch das Handling des Akkus bzw. der Batterie deutlich einfacher wird. Akkus bzw. die Batterie können mit dieser Ausgestaltung auch einfach ausgewechselt werden.

In der Energiequellenzone werden ausserdem noch zwei Federbleche eingebaut. Die beiden Federbleche befinden sich dabei in Längsachsenrichtung vor und hinter dem Akku bzw. der Batterie. Mittels der Federbleche wird der Akku, wenn er eingeschoben ist, vorne und hinten geklemmt und so in Längsrichtung federnd gehalten. Die Federbleche werden an der Rahmeneinheit in eigens dafür vorgesehenen Aussparungen geführt und darin geklemmt. Die Form der Federbleche ist so gestaltet, dass ein Klemmen bzw. Halten an der Rahmeneinheit und ein Klemmen bzw. Kontaktieren des Akkus oder aber der Batterie möglich ist. Die Federbleche sind durch die entsprechende Materialwahl elektrisch leitend und vorzugsweise vernickelt, um die Kontaktkorrosion zu vermindern.

Im Zentrum der Federbleche befindet sich eine Hauptfläche welche in der Rahmeneinheit geklemmt wird. Oben und unten am Federblech sind Positionsschultern ausgebildet, welche ein Verrutschen im Zusammenspiel mit der Rahmeneinheit verhindern sollen. Weiterhin weist das Federelement nach oben wie nach unten je ein abstehendes Bein auf, wobei das obere Bein das spätere Verbindungsstück zur Printplatte bildet. Das untere Bein bildet das Federstück und somit die Kontaktstellen zum Akku bzw. zur Batterie aus. Seitlich der Hauptfläche kann das Federblech reduziert sein, um beispielsweise Material zu sparen oder auch um im Bereich des Federblechs auf der Seite des Motors Distanz zu schaffen, um die Gefahr von Kurzschlüssen zu vermindern.

Die Montage der Federbleche erfolgt bevorzugt durch seitliches Einschieben in der Rahmeneinheit. Die Federbleche werden dabei durch Haltearme der Rahmeneinheit in Position gehalten. Die Federbleche werden seitlich zwischen den halbschalenartigen Hälften fixiert bzw. geklemmt und so am Herausfallen gehindert.

In radialer Richtung ist jeweils vorne und hinten an der Rahmeneinheit ein vorstehendes Element geformt. Die Federbleche weisen ihrerseits eine Schulter auf, welche jeweils mit dem vorstehenden Element zusammenwirkt. Das vorstehende Element wirkt dabei als Anschlag für die Schulter des jeweiligen Federelements. Eine weitere Verschiebung des Federelements ist daher nicht mehr möglich. Durch die Federbleche kann eine Längsverschiebung des Akkus bzw. der Batterie unterbunden werden und es können somit auch Fertigungstoleranzen bei den Akkus bzw. Batterien aufgefangen werden.

An der Rahmeneinheit ist weiterhin vorzugsweise eine Vorspannfläche pro halbschalenartiger Hälfte für den Akku bzw. die Batterie ausgebildet. Bei der Montage des Akkus bzw. der Batterie in die zusammengefügten halbschalenartigen Hälften klemmen die Vorspannflächen den Akku bzw. die Batterie entsprechend ein.

Die elektrische Verbindung zur Printplatte erfolgt über die Federbleche. Die Federbleche werden dabei in der Rahmeneinheit gehalten und durch Ausnehmungen in der Printplatte geführt. Die Federbleche werden dann mit der Printplatte verlötet.

Zwar können die Akkus selbst so nicht eindeutig positioniert werden, da keine eindeutigen geometrischen Elemente vorhanden sind, die ein falsches Einsetzen unterbinden würden. Allerdings erfolgt die Sicherung der Elektronik bevorzugt auf elektrische Art und Weise. Hierfür ist etwa ein elektrischer Verpolungsschutz in der Schaltung auf der Printplatte eingebaut, welcher in der Art einer Sicherung funktioniert (z.B. in Form von Verpolungsschutz-Dioden).

Die Printplatte wird bevorzugt auf der Oberseite der Rahmeneinheit angeordnet. Die Printplatte ist dabei regelmässig über einen Grossteil der Gesamtlänge der Rahmeneinheit aufgebracht, d.h. über mehrere Zonen hinweg. In die Oberseite der Rahmeneinheit ist vorzugsweise eine Vertiefung für die Printplatte ausgeformt. An beiden halbschalenartigen Hälften sind weiter vorzugsweise Klemmarme geformt, welche die Printplatte in die Vertiefung in der Rahmeneinheit drücken.

Die Vertiefung und die Klemmarme sind entsprechend in beiden halbschalenartigen Hälften vorgesehen. Für den Einbringvorgang der Printplatte ist hier vorzugsweise eine leichte Vorspannung vorgesehen, damit nach der Montage ein sattes Halten gewährleistet werden kann. Die Position der Printplatte wird dadurch fixiert. Eine Verschiebung in Längsrichtung sowie in Querrichtung wird durch die Vertiefung verhindert. Eine Verschiebung in der Höhe wird durch die Klemmarme verhindert. Es erfolgt also ein Form- und Kraftschluss, wenn beide halbschalenartigen Hälften montiert sind.

Alternativ zur Vertiefung oder wenn die Vertiefung nicht rund um die Printplatte ausgebildet ist, können Kombinationen von Nasen an der Rahmeneinheit mit Ausnehmungen an der Printplatte geformt sein. Die Nase der Rahmeneinheit greift in die Ausnehmung an der Printplatte ein. Dadurch kann die Printplatte ausgerichtet werden (eindeutige Montage) und ein Verschieben in Längsrichtung kann verhindert werden. Des Weiteren kann durch das Nutzen der Nasen-Ausnehmungs-Kombination auch eine Fixierung sichergestellt werden, wenn beispielsweise im selben Aufbau verschieden lange Printplatten eingesetzt werden, welche nur an den Längsseiten geführt sind bzw. die Vertiefung da eine Wand aufweist und die kurzen Seiten frei sind. Dann findet die Längsfixierung über die Nasen-Ausnehmungs-Kombination statt und kann für die verschieden Langen Printplatten identisch genutzt werden.

An beiden halbschalenartigen Hälften sind weiterhin an gewissen Stellen, zumindest im Bereich der Antriebseinheit und des Ein-/Aus-Schalters bevorzugt Haltearme bzw. Stützstreben für die Printplatte vorgesehen. Diese sind seitlich der Längsachse angebracht und vorzugsweise regelmässig verteilt. Die Halterung erfolgt zumindest im hinteren und vorderen Bereich in Längsachsenrichtung. Die Anzahl der Haltearme bzw. Stützstreben liegt von 5 bis 12 pro Rahmeneinheit-Hälfte vorzugsweise bei 7 oder 11 pro Rahmeneinheit-Hälfte.

Die Haltearme bzw. Stützstreben für die Printplatte können reduziert bzw. entfernt werden, wenn Printplatte dicker und somit stabiler ausgestaltet wird. Daher ist es auch möglich, die Stützstreben bzw. die Abstützung der Printplatte durch Elemente an der Rahmeneinheit zu reduzieren und dennoch dieselbe Stabilität und Sicherheit zu erhalten.

Eine weitere Orientierungshilfe für die Montage der Printplatte ist durch die Ausnehmungen für die Federelemente gegeben. Zudem geben die bereits montierten Federelemente die vorne-hinten Ausrichtung vor, da diese bei falscher Ausrichtung an der Unterseite der Printplatte anstehen würden. Die Ausnehmungen sind dabei in der Regel nicht symmetrisch gegenüber der Printplattenform gestaltet.

Mögliche alternative Orientierungshilfen können darin bestehen, dass die Printplatte ggf. nicht rechteckig geformt ist, sondern beispielsweise eine gekappte Ecke oder andere Ausnehmung an der Seite aufweist, so dass die Montage nur in einer Art und Weise möglich ist (d.h. wie etwa bei einer SIM-Karte für ein Mobiltelefon).

Die Montage der Printplatte erfolgt durch das Einfahren der Verbindungsstücke der Federbleche, anschliessendes seitliches Einschieben in die erste Rahmeneinheit-Hälfte und das anschliessende Aufschieben der zweiten Rahmeneinheit-Hälfte.

Die Elemente auf der Printplatte sind etwa Leitungen, Widerstände, LEDs, Steuereinheiten, Ein-/Aus-Schalter und ähnliche Komponenten. Die Funktion der Printplatte besteht insbesondere im Verbinden der elektrischen Funktionselemente sowie in deren Steuerung.

Ein weiteres Element des Innenlebens, welches in der Rahmeneinheit montiert wird, ist der Elektromotor. Dessen Motorwelle stellt dabei eine Schnittstelle zum Getriebe dar. Der Motor ist beispielsweise in Form eines DC Motors (Gleichstrommotor) vorgesehen mit kontinuierlicher 360°-Drehung. Für die Anwendung eignen sich grundsätzlich Motoren mit einer maximalen Effizienz bei einem Drehmoment von 0.5 mNm - 6 mNm, insbesondere von 1. mNm - 3.5 mNm.

Vorzugsweise beträgt die Motordrehzahl im unbelasteten Zustand von 3'500 U/min bis 12'000 U/min. Für die oszillierende Variante beträgt die Motorendrehzahl im unbelasteten Zustand 3'500 U/min bis 10'000 U/min, vorzugsweise 4'000 U/min bis 7'000 U/min. Für die Sonic-Variante beträgt die Motorendrehzahl im unbelasteten Zustand von 7'000 U/min bis 12'000 U/min, vorzugsweise von 9'000 U/min bis 11'000 U/min. Damit können Zielgrössen von 10'000 Bewegungen für die oszillierende Variante und von 20'000 Bewegungen für die Sonic-Variante erreicht werden.

Für die Halterung des Motors sind vorzugsweise Auflagen in der Rahmeneinheit bzw. in der Motorzone vorgesehen. Auf jeder halbschalenartigen Hälfte der Rahmeneinheit sind vorzugsweise etwa 2 bis 3 Auflagen oben und etwa 2 bis 3 Auflagen unten vorgesehen (besonders bevorzugt jeweils 2 Auflagen, da hiermit ein besserer Halt und Ausgleich erzielt werden kann). Vorzugsweise sind die Auflagen oben und unten symmetrisch angeordnet. Dies bringt dann die radiale Positionierung des Motors innerhalb der Rahmeneinheit. Die Längsstabilisierung des Motors erfolgt weiter vorzugsweise durch vordere und hintere Anschläge und zwar an beiden halbschalenartigen Hälften. Die elektrische Verbindung zur Printplatte erfolgt über entsprechende Kabel. Die gegenüber liegenden Auflagen können auf den Motor einen gewissen Vorspann ausüben und damit auch die Motorenposition unter Last stabil halten.

Die Vormontage von Motor und Getriebe erfolgt so, dass der Motor mit dem Exzenter, der Pleuelstange und der Antriebswelle mit dem angespritzten Gelenkstück vormontiert wird. Hierbei werden die Teile anschliessend gemeinsam von der Seite her in die entsprechende halbschalenartige Hälfte, welche für die Aufnahme vorgesehen ist, eingelegt.

Das vorliegende Getriebe liefert einen im Wesentlichen spielfreien Antrieb. Die Getriebe-Elemente sind (im Gegensatz zu einem Getriebe mit verzahnten Elementen wie Ritzel, Zahnräder, etc.) hierbei vorzugsweise direkt miteinander verbunden und bleiben miteinander in Kontakt, d.h. sie sind regelmässig nicht lediglich lose ineinander geführt (d.h. sie weisen keine kontaktfreien Abschnitte auf). Daher ergibt sich eine besonders präzise definierte Bewegung des Getriebes ohne Schläge, Vibrationen oder Rattern und mit minimaler Geräuschentwicklung.

Das vorliegende Getriebe setzt eine kontinuierliche 360°-Drehbewegung der Motorwelle in eine reversierende Dreh- bzw. Schwenkbewegung der Antriebswelle um. Eine Umdrehung der Motorwelle ergibt dabei einen Zyklus der Antriebswelle (z.B. linksrechts-links bzw. einmal hin und zurück).

Der Exzenter wiederum ist die Schnittstelle des Getriebes zum Motor. Er ist auf die Motorwelle aufgebracht vorzugsweise aufgepresst (Presssitz). Des Weiteren besteht eine Verbindung zur Pleuelstange. Dies ist keine fixe Verbindung, die einzelnen Elemente sind vorzugsweise übereinander gestülpt bzw. ineinandergesteckt und können auch wieder auseinandergenommen werden. Sie müssen daher zur Sicherung positionsfest gehalten sein. Alternativ kann die Pleuelstange auf den Exzenter geschnappt werden.

Der Grundkörper des Exzenters hat eine Länge von 4 mm bis 9 mm vorzugsweise von 5.5 mm bis 7.5 mm und einen Durchmesser von 3 mm bis 8 mm vorzugsweise von 4.5 mm bis 6.5 mm.

Der Exzenterzapfen des Exzenters hat eine Länge von 1 mm bis 6 mm vorzugsweise von 2 mm bis 4 mm und einen Durchmesser von 1 mm bis 4 mm vorzugsweise von 1.5 mm bis 2.5 mm.

Die Exzentrizität der Exzenterzapfen-Achse gegenüber der Grundkörperachse beträgt generell von 0.2 mm bis 3 mm vorzugsweise von 0.3 mm bis 2 mm. Für die oszillierende Variante wird insbesondere ein Bereich von 1.4 mm bis 2 mm und für Sonic-Variante insbesondere ein Bereich von 0.3 mm bis 1 mm bevorzugt.

Der Exzenter wird bevorzugt aus Metall gebildet, am meisten bevorzugt aus Messing. Die Herstellung erfolgt vorzugsweise mittels Fräsen. Alternativ kann auch eine Hartkomponente (mittels Spritzguss) eingesetzt werden wie beispielsweise ein Polyoxymethylen (POM). Hier erfolgt die Herstellung mittels Spritzgiessen. Wie bereits beschrieben kann der Exzenter auch zweiteilig ausgestaltet sein. Der Exzenterzapfen kann mindestens teilweise aus Metall bestehen. Beispielsweise kann darauf eine Hülse aufgebracht werden.

Der Exzenter ist grundsätzlich aus zwei übereinander angeordneten Kreiszylindern aufgebaut. Der erste, grössere Zylinder ist dabei der Grundkörper und der zweite, kleinere Zylinder ist der Exzenterzapfen.

Der Exzenter weist vorliegend einen verbesserten Aufbau auf mit insbesondere einer optimierten Unwucht, d.h. der Exzenter läuft mit weniger Unwucht und somit ruhiger. Die Massenverteilung ist hierbei im Querschnitt besonders homogen, so dass der Motor regelmässiger belastet wird.

Durch eine oder mehrere, vorzugsweise zwei, Ausnehmungen im Grundkörper liegt der Massenschwerpunkt des Exzenters auf der Motorwelle. Die Ausnehmung(en) entspricht/entsprechen dabei regelmässig nicht der Masse bzw. dem Volumen des Exzenterzapfens. Massgeblich ist vorliegend die Position des Massenschwerpunkts. Die Masse bzw. das Volumen der Ausnehmung(en) wird allerdings bestimmt durch die Grösse sowie die Position des Exzenterzapfens.

Als weitere Möglichkeit ist der Einbau bzw. die Formung eines Schwungrads denkbar, um mehr Masse an den Exzenter zu bringen, beispielsweise in Form einer Scheibe (d.h. mehr Masse wird weiter Aussen positioniert). Der Vorteil hiervon besteht in weniger Stromverbrauch im Lauf, allerdings muss ggf. beim Starten ein höherer Stromverbrauch in Kauf genommen werden.

Für die kompakte Bauweise des Getriebes ist an der Stirnseite des Grundkörpers eine schmale podestartige Erhebung angeformt. Die auf diese Weise geschaffene Ausnehmung am Grundkörper ermöglicht es, den Exzenter näher an der Pleuelstange anzuordnen.

Als weiteres Element des Getriebes ist eine Pleuelstange vorgesehen. Diese weist ein Lager an jedem Ende auf, welche von einem Stangenelement miteinander verbunden werden. Die Lager sind jeweils nicht als eigenständiges Element zu verstehen sondern als Teil der Pleuelstange. Alternativ können wie beschrieben Lagerhülsen eingesetzt werden. Das Stangenelement ist regelmässig schmaler ausgebildet als die Lager, es kann allerdings auch eine Breite aufweisen, welche dem Durchmesser der Lager entspricht. Das Stangenelement ist zudem regelmässig länger ausgebildet als die Lager, es kann allerdings auch eine Länge aufweisen, welche kleiner ist als der Durchmesser eines Lagers. Die Verbindung zum Exzenterzapfen sowie die Verbindung zum Gelenkzapfen des auf die Antriebswelle aufgespritzten Gelenkstücks wird jeweils durch die Lager der Pleuelstange hergestellt.

Die Verbindung zwischen dem Exzenterzapfen und der Pleuelstange ist dabei vorzugsweise keine feste Verbindung. Die beiden Elemente sind lediglich ineinander gesteckt, d.h. sie können auch wieder auseinandergenommen werden. Zur Sicherung müssen sie allerdings positionsfest gehalten sein. Gleiches gilt für die Verbindung zwischen der dem anderen Lager der Pleuelstange und dem Gelenkzapfen des Gelenkstücks. Wie weiter unten weiter ausgeführt kann durch die definierte Positionierung der Antriebswelle mit Gelenkstück und die definierte Positionierung des Motors mit Exzenter innerhalb der Rahmeneinheit auch die Position der Pleuelstange zwischen Exzenterzapfen bzw. Gelenkstückzapfen innerhalb des Getriebes fixiert. Das Gelenkstück und der Exzenter verfügen über entsprechende Anschlagflächen für die Pleuelstange. Damit kann auf zusätzliche Positionier- bzw. Fixierungshilfen für die Pleuelstange verzichtet werden.

Der Gelenkzapfen entspricht hinsichtlich seiner Abmessungen vorzugsweise dem Exzenterzapfen. Der Gelenkzapfen und der Exzenterzapfen weisen eine Länge von 1 mm bis 6 mm vorzugsweise von 2 mm bis 4 mm und einen Durchmesser von 1mm bis 4 mm vorzugsweise von 1.5 mm bis 2.5 mm auf.

Wie bereits beschrieben kann das Gelenkstück auch zweiteilig ausgestaltet sein. Der Gelenkzapfen kann mindestens teilweise aus Metall bestehen. Beispielsweise kann darauf eine Hülse aufgebracht werden.

Die Länge der Pleuelstange (von Lagermitte zu Lagermitte) beträgt von 3 mm bis 8 mm vorzugsweise von 4.5 mm bis 6.5 mm.

Die Dicke der Pleuelstange (in Richtung der Lagerachsen) beträgt von 1 mm bis 5 mm vorzugsweise von 1.5 mm bis 3.5 mm.

Die Breite der Pleuelstange (senkrecht zu den Lagerachsen) beträgt von 1.5 mm bis 6.5 mm vorzugsweise von 3 mm bis 5 mm.

Das Material für die Pleuelstange ist eine Hartkomponente vorzugsweise Polyoxymethylen (POM). Ein Vorteil dieses Materials ist, dass es gute Gleiteigenschaften aufweist und die Lager entsprechend direkt mit dem gleitfähigen Material ausgebildet sind und kein weiteres Element benötigt wird. Die Hartkomponente der Pleuelstange kann allenfalls mit Additiven ausgestattet sein, um die nötigen Eigenschaften zu unterstützen beispielsweise mit Teflon. Die Pleuelstange kann auch aus Metall gefertigt werden, beispielsweise mittels Stanzen.

Die Pleuelstange ist bevorzugt knochenartig ausgebildet, d.h. die zwei grösseren Enden bzw. die Lager sind über ein schmaleres Stangenelement verbunden und weisen vorzugsweise denselben Durchmesser auf. Diese Ausgestaltung bietet einen optimalen Kraftfluss. Die symmetrische Ausgestaltung erlaubt eine einfachere Montage. Die knochenartige Ausgestaltung verringert das Gewicht der Pleuelstange was wichtig ist, da dieses bewegliche Bauteil hohen Beschleunigungen ausgesetzt ist.

Das Gelenkstück stellt die Verbindung zwischen Pleuelstange und Antriebswelle her. Die Verbindung mit der Antriebswelle ist dergestalt, dass das Gelenkstück auf die Antriebswelle aufgespritzt ist. Eine diesbezüglich spezielle Ausgestaltung der Antriebswelle besteht in einer Verbesserung der Verbindung beim Umspritzen durch eine Riffelung oder Randrierung der Oberfläche und/oder in einer speziell dafür ausgestalteten Geometrie. (Alternativ kann das Gelenkstück auch auf die Antriebswelle positionssicher montiert werden - z.B. mittels Presssitz.)

Eine derartige spezielle Geometrie der Antriebswelle kann etwa ein Sackloch oder ein Durchgangsloch oder aber eine Ausnehmung in der Antriebswelle umfassen. Die Ausnehmung kann längs oder quer ausgebildet sein. Vorzugsweise wird ein Formschluss durch eine Kerbe bereitgestellt, wobei die Kerbe bevorzugt dieselbe Geometrie und Orientierung aufweist wie eine Kerbe der Antriebswelle an der Schnittstelle zur Aufsteckbürste. Dies, damit die Herstellung vereinfacht wird.

Die vorbeschriebenen Ausgestaltungsformen dienen der Verhinderung einer Längsverschiebung des Gelenkstücks sowie der Verhinderung einer Drehung/Rotation des Gelenkstücks.

Über die Position des Gelenkstückes wird auch die Lage der Antriebswelle in axialer Richtung mind. teilweise definiert. Das Gelenkstück blockiert die verbundene Antriebswelle auf axialen Zug gegenüber einer entsprechenden Anschlagfläche an der Rahmeneinheit. Die Antriebswelle wird somit gegen axialen Zug mittels Anschlag des Gelenkstückes und gegen axialen Druck jeweils an der Rahmeneinheit abgestützt bzw. positioniert. Durch die definierte Positionierung der Antriebswelle mit Gelenkstück und die definierte Positionierung des Motors mit Exzenter innerhalb der Rahmeneinheit wird auch die Position der Pleuelstange zwischen Exzenterzapfen bzw. Gelenkstückzapfen innerhalb des Getriebes fixiert. Das Gelenkstück und der Exzenter verfügen über entsprechende Anschlagflächen für die Pleuelstange. Damit kann auf zusätzliche Positionier- bzw. Fixierungshilfen für die Pleuelstange verzichtet werden.

Das Gelenkstück hat eine Länge (von Lagermitte zu Lagermitte) von 2 mm bis 6 mm vorzugsweise von 3.5 mm bis 4.5 mm.

Bevorzugtes Material für das Gelenkstück ist wiederum Polyoxymethylen (POM).

Damit die Antriebswelle nicht in Längsrichtung herausgezogen werden kann, ist die Anspritzung so geformt, dass das Gelenkstück an einem Anschlag an einer oder an beiden halbschalenartigen Hälften stoppt. Vorzugsweise liegt das Gelenkstück am Rast- bzw. Spannarm an, welcher auf die Antriebswelle drückt.

Durch die Anspritzung an die Antriebswelle mit den o.g. Formschlusselementen ist zudem ein Lösen des Gelenkstücks von der Antriebswelle nicht möglich. Dies bringt es auch mit sich, dass das Getriebe nicht überdreht werden kann, d.h. beim Überdrehen mit massiver Gewalt würde das Gelenkstück brechen. Das Gelenkstück bildet damit eine Verdrehsicherung und eine Längssicherung der Antriebsachse aus.

Die Antriebswelle ihrerseits ist generell dafür vorgesehen, die vom Getriebe erzeugte Bewegung auf die Aufsteckbürste zu übertragen. Das freie Ende der Antriebswelle bildet dabei die Schnittstelle zur Aufsteckbürste. Dabei können verschiedene Antriebswellen für die verschiedenen Aufsteckbürsten vorgesehen sein.

Für die oszillierende Variante (Drehbewegung/Rundkopf) sind zwei Fixierungen zum Handteil vorgesehen. Eine Fixierung besteht zwischen dem Schlüsselelement und dem Aufsteckabschnitt, damit sich der Bürstenkopf dreht und das Gehäuse fix bleibt. Die Fixierung wird etwa in Form eines Schnappers oder eines Klemmenarms ausgestaltet. Die zweite Fixierung besteht gegenüber der Antriebswelle und zwar mittels Schnapp- und/oder Klemmelementen innerhalb der Aufsteckbürste, welche mit entsprechenden Geometrien auf der Antriebswelle zusammenwirken.

Für die Sonic-Variante (Hin- und Her-Schwenkbewegung des ovalen/rechteckigen Kopfs) dagegen ist nur eine Fixierung gegenüber der Antriebswelle vorgesehen. Die gesamte Aufsteckbürste wird hier gegenüber dem Handteil mit der Antriebswelle bewegt bzw. verschwenkt. Die Fixierung erfolgt wiederum in Form eines Aufschnappens oder Klemmens der Aufsteckbürste auf der Antriebswelle. An der Antriebswelle sind jeweils Geometrien mit Flächen, Winkeln und/oder Vertiefungen ausgestaltet, welche die gegengleiche Geometrie der Aufsteckbürste optimal bzw. passend aufnehmen.

Die Antriebswelle hat einen Durchmesser von 1.5 mm bis 4.5 mm vorzugsweise von 2.5 mm bis 3.5 mm.

Die Grundform der Antriebswelle ist zylindrisch. Abweichungen von der Grundform können vorgesehen sein und zwar einmal vorne für die Kopplung mit der Aufsteckbürste sowie hinten zum Aufbringen bzw. Aufspritzen des Gelenkstücks.

In einer alternativen Ausgestaltung kann anstelle von Gelenkstück und Pleuelstange auch ein (einziges) Element vorgesehen sein, welches über ein Filmscharnier verfügt, welches an der Stelle, wo sonst die Verbindung Pleuelstange-Gelenkstück bzw. Gelenkzapfen ausgebildet ist, vorgesehen ist. Der Vorteil hiervon ist eine (vollkommen) spielfreie Gestaltung in diesem Bereich des Getriebes. Dafür wird vorzugsweise eine Hartkomponente verwendet.

Die Lagerung der Antriebswelle erfolgt vorzugsweise einmal in einer ersten Lagereinrichtung innerhalb der Getriebezone der Rahmeneinheit und einmal vorne in der Durchgangsbohrung am jeweiligen Schlüsselelement.

Für die Lagerung der Antriebswelle ist dabei vorzugsweise in der Getriebezone der ersten halbschalenartigen Hälfte eine Ausnehmung zum Einbringen geformt, wobei die zweite halbschalenartige Hälfte die Ausnehmung so schliesst, dass in der verbundenen Endform der Rahmeneinheit eine Art Sackloch gebildet wird. Die Lagergeometrie ist aussen mit zudem vorzugsweise mit Abstützungen hinterlegt, damit die Lagerung möglichst stabil gestaltet werden kann.

Die Rahmeneinheit ist aus einer Hartkomponente, bevorzugt aus Polyoxymethylen (POM) gebildet, wodurch sich wiederum der Einbau eines separaten Lagers erübrigt, denn POM hat, wie bereits erwähnt, gute Gleiteigenschaften und bildet so ein Gleitlager für die Antriebswelle aus.

Die Hartkomponente für das Schlüsselelement (vorzugsweise POM) ist in der Regel mit Glaskugeln verstärkt, so dass die Abriebfestigkeit im Gebrauch besser ist und die Lagereigenschaften dennoch gegeben sind.

Die Länge des Getriebes L_{G} vom motorseitigen Ende des Exzentergrundkörpers bis zum vorderen Ende der Fixierung des Gelenkstücks an der Antriebswelle beträgt von 8 mm bis 20 mm vorzugsweise von 11 mm bis 17 mm.

Bezüglich der Fixierung des Getriebes sei angemerkt, dass nicht alle Verbindungen fix sind, d.h. manche Verbindungen (insbesondere die der Pleuelstange) sind vorzugsweise lediglich ineinander geschoben bzw. gesteckt.

Für die Sicherung des Getriebes sind vorzugsweise entsprechende Anschläge vorgesehen. Für die Antriebswelle ist in ihrer Lagereinrichtung ein hinterer Anschlag (in der Ausnehmung, in welcher sie gelagert ist) an der Rahmeneinheit vorgesehen (etwa in der Ebene des vorderen Motorenendes) und weiterhin ist für die Antriebswelle ein vorderer Anschlag vorgesehen, wobei das Gelenkstück mit seiner vorderen Stirnfläche an einem Anschlagelement der Rahmeneinheit anschlägt bzw. ansteht. Hiermit wird bezweckt, dass die Antriebswelle nicht verrutschen kann, so dass die verschiedenen Getriebeteile nicht ausser Eingriff gelangen können, sondern positionssicher gehalten sind.

Das Schlüsselelement, welches quasi die Verbindung bzw. die Schnittstelle zwischen der Rahmeneinheit und der Aufsteckbürste herstellt, wird vorzugsweise an der Rahmeneinheit mittels von an der Rahmeneinheit angeordneten Schnappelementen fixiert. Am Schlüsselelement selbst sind vorzugsweise Ausnehmungen eingebracht, in welche die Schnappelemente der Rahmeneinheit einrasten können.

Dieser Aufbau wird insofern bevorzugt, als die Hartkomponente (in der Regel POM) des Schlüsselelements vorzugsweise mit Glaskugeln verstärkt ist und somit selbst weniger gut geeignet ist ein Schnappelement auszubilden.

Pro halbschalenartiger Hälfte der Rahmeneinheit sind am vorderen Ende vorzugsweise je ein Schnappelement und eine Führungszapfen-Hälfte ausgeformt. Unterstützend ist über die beiden halbschalenartigen Hälften hinweg ein vorderes Schnappelement, etwa in Form eines Schnapprings geformt, welches in die korrespondierende(n) Schnappausnehmung(en) des Schlüsselelements eingreift.

Als weitere Funktion neben der als Schnittstelle kommt dem Schlüsselelement noch das Verbinden der beiden halbschalenartigen Hälften zu, d.h. das Schlüsselelement wird jeweils über deren (vorzugsweise zylinderförmiges) vorderes Ende, d.h. die beiden halbzylinderförmigen Führungszapfen der Rahmeneinheit geschoben, damit die beiden halbschalenartigen Hälften insbesondere im vorderen Bereich sicher zusammengehalten werden.

Das Schlüsselelement ist derart geformt, dass eine möglichst konstante Wandstärke eingehalten wird. Dies wird vorzugsweise über Ausnehmungen im Inneren des Schlüsselelements gesteuert. Hierdurch kann eine bessere Stabilität des Schlüsselelements erreicht werden und eine optimierte Herstellung mit insbesondere weniger Einfallstellen. Es können auch weitere Ausnehmungen/Durchbrüche vorgesehen sein, um Materialansammlungen zu vermeiden und um Verzug zu minimieren.

Im Bereich der Anlage des Schlüsselelements an der Rahmeneinheit wird eine Art Teller ausgebildet, wobei der Teller vorzugsweise asymmetrisch zum Schlüsselelement angelegt ist. Am Teller werden bevorzugt Funktionselemente ausgeformt, wie etwa das Gegenstück zu den Schnappelementen der halbschalenartigen Hälften sowie eine Aufnahme für den zylinderförmigen Führungszapfen der zusammengesetzten Rahmeneinheit.

Die Innengeometrie des Schlüsselelements (insbesondere für die oszillierende Variante) umfasst vorzugsweise insgesamt vier Durchmesser-Stufen, welche im Folgenden beschrieben werden.

Die erste Stufe umfasst die Kopplung zur Rahmeneinheit und den Kontaktbereich zur Balgdichtung. In Richtung der Öffnung ist bevorzugt eine (starke) Anfasung geschaffen, damit die Montage der Balgdichtung auf einfache Weise erfolgen kann. Der Durchmesser der ersten Stufe beträgt von 5 mm bis 10 mm vorzugsweise von 6 mm bis 8 mm.

Die zweite Stufe stellt den Übergangsbereich dar und dient als Freiraum für eine Bewegung der Balgdichtung. Der Durchmesser der zweiten Stufe beträgt von 4 mm bis 9 mm vorzugsweise von 5 mm bis 7 mm.

Die dritte Stufe umfasst die Antriebswellen-Durchführung und ist regelmässig kleiner als die zweite Stufe. Der Durchmesser der dritten Stufe beträgt von 2 mm bis 6 mm vorzugsweise von 2.5 mm bis 4.5 mm. Der Durchmesser ist hier vorzugsweise nicht konstant, da Ausnehmungen in die Durchführung eingeformt sein können, welche als Verzugsoptimierung dienen. Materialanhäufungen können so vermieden werden und das Schlüsselelement kann besser verzugsfrei hergestellt werden.

Die vierte Stufe umfasst die (zweite) Lagereinrichtung der Antriebswelle. Sie ist regelmässig kleinerer Durchmesser als die dritte Stufe. Der Durchmesser beträgt von 1 mm bis 5 mm vorzugsweise von 2 mm bis 4 mm.

Die Ausgestaltung des Schlüsselelements ist jedoch bei der Sonic-Variante in der Regel unterschiedlich. Bei der Sonic-Variante wird das Schlüsselelement üblicherweise nicht mit einer speziellen Schnittstellen- bzw. Kopplungsgeometrie für die Aufsteckbürste ausgeformt, da eine Fixierung der Aufsteckbürste nur gegenüber der Antriebswelle stattfindet. Die Aufsteckbürste ist in diesem Fall relativ zum Gehäuse beweglich. Das Schlüsselelement ist bei der Sonic-Variante somit auch kürzer als bei der oszillierenden Variante.

Zudem wird insofern auch der Durchmesser gemäss der dritten Stufe bei der Sonic-Variante nicht ausgeformt, so dass die dritte Stufe bei der Sonic-Variante quasi der vierten Stufe bei der oszillierenden Variante entspricht, wo die Antriebswelle gelagert ist. Weiter wird keine Balgdichtung im Schlüsselelement montiert, die Dichtung erfolgt über das Dicht-/Dämpfelement. Dies ist aufgrund der geringeren Auslenkung bei der Sonic-Variante möglich.

Die maximale Wandstärke des Schlüsselelements beträgt von 0.5 mm bis 2 mm vorzugsweise von 0.75 mm bis 1.25 mm.

Die Länge des Schlüsselelements beträgt bei der oszillierenden Variante von 20 mm bis 40 mm vorzugsweise von 25 mm bis 35 mm.

Die Länge des Schlüsselelements beträgt bei der Sonic-Variante von 5 mm bis 20 mm vorzugsweise von 10 mm bis 15 mm.

Im Inneren des Schlüsselelements ist vorzugsweise eine Dichtung in Form einer Balgdichtung angeordnet, welche auf die Antriebswelle aufgebracht ist. Die Balgdichtung ist bevorzugt ein einstückiges Element, welches das Gehäuse gegen die Antriebswelle abdichtet. Die Balgdichtung wird vorzugsweise im Schlüsselelement montiert und anschliessend auf die Antriebswelle aufgeschoben.

Die Sicherung der Position der Balgdichtung erfolgt vorzugsweise in Längsrichtung der Antriebswelle einmal vorne mittels eines Anschlags im Schlüsselelement selbst und einmal hinten mittels eines Anschlags an der Rahmeneinheit (d.h. im montierten Zustand am Führungszapfen).

Von der Vorderseite her wird - als äussere Dichtung - ein Dicht-/Dämpfelement über das Schlüsselelement gestülpt, welches das Schlüsselelement gegenüber dem Gehäuse abdichtet.

Das Dicht-/Dämpfelement ist schalenartig aufgebaut, von der Funktion her ist es wie eine Haut, die eben über das Schlüsselelement und einen Teil der Rahmeneinheit gestülpt wird. Somit liegt das Dicht-/Dämpfelement aussen am Schlüsselelement an. Das Dicht-/Dämpfelement weist seitliche Führungsschienen auf, welche beim Einführen/Positionieren des Innenlebens der Einschubeinheit ins Handteils helfen und ggf. mit entsprechenden Schienen an der Innenseite des Gehäuses zusammenwirken. Dabei schaffen sie durch die eingesetzte Weichkomponente eine Dämpfung bezüglich Vibrationen und Geräuschen zwischen dem Gehäuse und dem Innenleben. Im zylindrischen Teil des Dicht-/Dämpfelements sind ein bis fünf Wülste geformt, die um die Längsachse des Dicht-/Dämpfelements laufen. Diese dienen dazu die Dichtung zwischen dem Dicht-/Dämpfelement und dem Gehäuse sicherzustellen. Die Wülste liegen im montierten Zustand am Gehäuse an.

Die Aufsteckbürsten für das erfindungsgemässe Zahnbürstenhandteil werden ebenfalls
grundsätzlich im Hinblick auf die Bewegungsarten unterschieden.

Bei der oszillierenden Variante weist die Aufsteckbürste regelmässig mehrere bewegliche Teile auf. Die Aufsteckbürste umfasst mindestens einen Kopfabschnitt, der einen Bürstenkopf aufweist, einen Aufsteckabschnitt, sowie einen den Kopfabschnitt mit dem Aufsteckabschnitt verbindenden Halsabschnitt, wobei der (bewegliche) Bürstenkopf ein Borstenfeld aufweist. Der Aufsteckabschnitt weist dabei eine Umwandlungseinheit mit ggf. mehreren Verbindungs- und Lagerelementen auf mit welchen die periodische Hin- und Her-Schwenkbewegung der Antriebswelle in eine (oszillierende) Drehbewegung des Bürstenkopfs umgewandelt werden kann.

Die Kopplungsgeometrie korrespondiert insoweit mit der Geometrie der Antriebswelle welche in den Aufsteckabschnitt der Aufsteckbürste eingreift. Die periodische Schwenkbewegung der Antriebswelle wird somit im Aufsteckabschnitt der Aufsteckbürste umgewandelt in die (oszillierende) Drehbewegung des Bürstenkopfs senkrecht zur Bürstenkopfachse.

Bei der Sonic-Variante besitzt die Aufsteckbürste dagegen keine beweglichen Teile. Die Aufsteckbürste umfasst einem Kopfabschnitt, der einen (unbeweglichen) Bürstenkopf aufweist, einen Aufsteckabschnitt sowie mit einen den Kopfabschnitt mit dem Aufsteckabschnitt verbindenden Halsabschnitt, wobei der Bürstenkopf ein Borstenfeld aufweist. Der Aufsteckabschnitt kann einteilig sein (z.B. vollständig gespritzt) oder er kann mehrteilig sein (z.B. kann der Aufsteckabschnitt gespritzt und die Kopplungsgeometrie in einem Element angeordnet sein, welches in den Aufsteckabschnitt eingeschoben wird).

Der Aufsteckabschnitt korrespondiert mit der Geometrie der Antriebswelle, welche direkt in den Aufsteckabschnitt der Aufsteckbürste eingeführt wird. Die periodische Schwenkbewegung der Antriebswelle wird hier direkt auf die Aufsteckbürste übertragen. Insofern besteht bei dieser Variante keine (zusätzliche) Fixierung des Aufsteckabschnitts gegenüber dem elektrischen Zahnbürstenhandteil, wie es bei der oszillierenden Variante der Fall ist.

Im Folgenden werden weitere bevorzugte Ausführungsformen zum elektrischen Zahnbürstenhandteil bzw. von einzelnen Bauteilen davon, angegeben.

Die Motorleistung des Elektromotors umfasst besonders bevorzugt ein Drehmoment von 0.5 mNm bis 1.96 mNm, weiter vorzugsweise von 1.2 mNm bis 1.8 mNm. Dies ist unabhängig vom Akkutyp. Die Motorenkennlinie gibt dabei das Drehmoment an.

Die Stromaufnahme des Motors ist aber jeweils abhängig von der Belastung. Diesbezüglich sei nochmals angemerkt, dass vorliegend von einem "belasteten Zustand" gesprochen wird, wenn eine Belastung bzw. ein flächiger Anpressdruck von etwa 300 g auf den Bürstenkopf der Aufsteckbürste ausgeübt wird. Von einem "unbelasteten Zustand" wird gesprochen, wenn kein Anpressdruck auf die Aufsteckbürste ausgeübt wird.

Bei einer oszillierenden Bewegung beträgt die Stromaufnahme im unbelasteten Zustand von 0.2 A bis 0.5 A und im belasteten Zustand von 0.3 A bis 0.6 A.

Die Drehgeschwindigkeitsbereiche für die beiden Varianten oszillierend und Sonic sind grundsätzlich gleich. Dabei beträgt die Motordrehzahl im unbelasteten Zustand von 5'000 U/min bis 15'000 U/min vorzugsweise von 7'000 U/min bis 13'000 U/min. Im unbelasteten Zustand beträgt die Motordrehzahl von 5'000 U/min bis 15'000U/min vorzugsweise von 7'000 U/min bis 13'000 U/min.

Die Bewegung der Antriebswelle (aus der Grundstellung) umfasst bei einer oszillierenden Bewegung einen Winkelbereich von +/- 10° bis +/- 40° vorzugsweise von +/- 20° bis +/- 30° und am meisten bevorzugt von +/- 25°.

Bei einer Sonic-Bewegung umfasst die Bewegung der Antriebswelle (aus der Grundstellung) einen Winkelbereich von +/- 1° bis +/- 15° vorzugsweise von +/- 3° bis +/- 10°.

Bei unterschiedlichen Drehwinkeln gibt es allerdings, wie oben ausgeführt, Veränderungen im Hinblick auf den Exzenter bzw. die Exzentrizität, d.h. für die oszillierende Bewegung ist etwa der Exzenterzapfen stärker gegenüber der Motorwelle versetzt als für die Sonic-Bewegung.

Die Länge der Antriebswelle ab dem Gehäuseaustritt (d.h. dem vorderen Ende des Schlüsselelements) bis zu ihrem freien Ende beträgt für eine oszillierende Bewegung von 10 mm bis 30 mm vorzugsweise von 14 mm bis 22 mm und für eine Sonic-Bewegung von 20 mm bis 40 mm vorzugsweise von 26 mm bis 34 mm.

Der Winkel zwischen der Längsrichtung des Stangenelements der Pleuelstange gegenüber der Gelenkstückachse beträgt für eine oszillierende Bewegung minimal von 40° bis 75° vorzugsweise von 50° bis 65° und maximal von 90° bis 130° vorzugsweise von 105° bis 117°. Auf diese Weise entsteht kein toter Punkt, der die Bewegung blockieren könnte.

Bei einer Sonic-Bewegung beträgt der minimale Winkelzwischen der Längsrichtung des Stangenelements der Pleuelstange gegenüber der Gelenkstückachse von 50° bis 90° vorzugsweise von 62° bis 78° und der maximale Winkelbereich von 80° bis 120° vorzugsweise von 92° bis 108°.

Betrachtet man das Handteil mit aufgesteckter Aufsteckbürste, so beträgt der Drehwinkel des Bürstenkopfs bei einer oszillierenden Bewegung im unbelasteten Zustand +/- 15° bis +/- 40° vorzugsweise von +/- 20° bis +/- 30°.

Bei einer Sonic-Bewegung beträgt der Schwenkwinkel des Bürstenkopfs im belasteten Zustand +/- 1° bis +/- 15° vorzugsweise von +/- 3° bis +/- 10°, was der Bewegung der Antriebswelle aus der Grundstellung entspricht..

Im Hinblick auf den Anpressdruck sei angemerkt, dass die Stromaufnahme des Motors mit zunehmender Belastung ansteigt. Je stärker die Veränderung des Anpressdrucks ist, desto einfacher ist die indirekte Messung der Last mit Hilfe des Motorstroms. Die Zunahme des Motorstroms zwischen dem unbelasteten Zustand der Aufsteckbürste und einer Belastung der Aufsteckbürste mit 500 g liegt etwa zwischen 20 % bis 80 %, idealerweise im Bereich von 30 % bis 50 %.

Für das vorliegende elektrische Zahnbürstenhandstück werden insbesondere Nickel-Metallhydrid-Akkus (NiMH) sowie Lithium-Ionen-Akkus (Li-Ionen) eingesetzt. Bei NiMH-Akkus liegt die Spannung etwa bei 1.2 V. Die Energiedichte beträgt etwa 70 W/kg bis 90 W/kg. Bei Li-Ionen-Akkus liegt die Spannung bei etwa 3.6 V. Vorzugsweise ist bei den Li-Ionen-Akkus eine Schutzschaltung vorgesehen.

Für die Schutzschaltung wird vorzugsweise ein Schutzschaltungs-IC ("IC" steht für integrated circuit) mit einer möglichst tiefen Überstromerkennungs-Spannung von bevorzugt kleiner als 0,15 V, noch bevorzugter von kleiner als 0.12 V und im Idealfall von 0.1 V gewählt, um auch kleine RDSon Widerstände ("RDSon" steht für Einschaltwiderstand) bei den Abschalt-MOSFETs ("MOSFET" steht für Metall-Oxid-Halbleiter-Feldeffekttransistor) zu ermöglichen.

Bei höherer Uberstromerkennungs-Spannung ergeben sich nämlich höhere maximale Ausschaltströme bei gleichem RDSon. Dies wiederum kann zu einer zu grossen Verlustleistung am MOSFET führen. Deshalb soll ein MOSFET mit einem RDSon in der Toleranz von etwa 8 mOhm bis 23 mOhm vorzugsweise von etwa 9 mOhm bis 20 mOhm verwendet werden. Dies ergibt einen Ausschaltstrom der zum einen hoch genug ist, um bei Stromspitzen nicht versehentlich das Gerät auszuschalten, der andererseits aber tief genug ist, um den maximalen Entladestrom des Akkus nicht zu überschreiten sowie die maximale Verlustleistung am MOSFET nicht zu überschreiten.

Mittels dieser Schaltung kann ein tieferer Ruhestrom erreicht werden. Dies führt zu einer längeren Lagerfähigkeit der Akkus, d.h. insbesondere fertige Produkte mit installiertem Akku können länger gelagert werden, ohne dass der Akku sich entleert und dessen Funktionsfähigkeit beeinträchtigt wird.

Vorliegend haben sich ausserdem LMO (Lithium-Mangan-Oxid-Spinell) Li-Ionen Akkus als besonders geeignet erwiesen, da sie höhere Entladeströme von bis zu 10 C erlauben. Für die hiesige Anwendung sind maximale Entladeströme von 1 C bis 3 C vorzugsweise von 1 C bis 2 C besonders geeignet. Dies ist insoweit von Bedeutung, als durch den Aufbau mit Motor und Getriebe höhere Startströme benötigt werden. Zudem enthalten LMO-Akkus kein Kobalt, was sie umweltfreundlicher macht. Weiterhin weisen sie eine höhere thermische Stabilität auf, was eine grössere Sicherheit bedeutet. Die Energiedichte dieser Akkus liegt bei etwa 100 W/kg bis 150 W/kg.

Auch NMC-Akkus ("NMC" steht für Lithium-Nickel-Mangan-Cobalt-Oxide) kommen ebenfalls bevorzugt zum Einsatz, da sie eine vergleichsweise hohe Energiedichte von etwa 150 W/kg bis 220 W/kg aufweisen.

Die verwendeten Akkus weisen generell eine Spannung von 1 V bis 5 V und vorzugsweise von 1.2 V bis 3.6 V auf.

Als Alternative zu den Akkus können, bei entsprechend angepasstem Produktaufbau, etwa auch auswechselbare (Einweg-) Alkaline-Batterien verwendet werden.

Für die vorliegende Offenbarung besonders relevante Abstände umfassen etwa den Abstand der Motorwelle gegenüber der Antriebswelle. Dieser beträgt von 4 mm bis 12 mm vorzugsweise von 5 mm bis 8 mm. Die Motorwelle liegt dabei oberhalb der Antriebswelle, was eine besonders kompakte Bauweise ermöglicht.

Weiterhin beträgt der Abstand vom Austritt der Motorwelle aus dem Motor bis zum Austritt der Antriebswelle aus dem Gehäuse (d.h. dem vorderen Ende des Schlüsselelements) bei der oszillierenden Variante von 40 mm bis 60 mm vorzugsweise von 45 mm bis 55 mm und bei der Sonic-Variante von 25 mm bis 45 mm vorzugsweise von 30 mm bis 40 mm.

Im Hinblick auf die Längenverhältnisse der Pleuel im Getriebe wird ein Längenverhältnis der Pleuelstange zum Gelenkstück von mindestens 2:1 bevorzugt und noch mehr ein Längenverhältnis von mindestens 3.5:2. Die Pleuelstange bzw. das Gelenkstück haben dabei dieselbe Länge für die oszillierende sowie für die Sonic-Variante. Die Unterschiede in der Bewegung werden über die unterschiedliche Gestaltung des Exzenters bzw. der Exzentrizität erreicht.

Als wichtige Schutzfunktionen für das erfindungsgemässe elektrische Zahnbürstenhandteil sind Wasserdichtheit, eine geringe Lautstärke, bzw. Vibrationen im Betrieb sowie Chemikalienbeständigkeit vorgesehen.

Die Wasserdichtheit wird über Dichtungselemente hergestellt und zwar einmal gegenüber dem Gehäuse, gegenüber der Antriebswelle und ausserdem gegenüber dem Gehäusedeckel. Das Gehäuse selbst ist in sich wasserdicht. Die Ein-/Ausschalter der Zahnbürste sind jeweils über eine Membran aus vorzugsweise einer Weichkomponente vorzugsweise aus elastomeren Kunststoff betätigbar.

Eine Dichtung ist dabei auf dem Schlüsselelement angeordnet und dichtet das Schlüsselelement gegenüber dem Gehäuse ab. Diese Dichtung ist das vorbeschriebene Dicht-/Dämpfelement. Eine weitere Dichtung ist innerhalb des Schlüsselelements angeordnet und dichtet die Antriebswelle gegenüber dem Schlüsselelement ab. Diese Dichtung ist die vorbeschriebene Balgdichtung. Das Dicht-/Dämpfelement kann auch durch eine Weichkomponente, welche an die Hartkomponente des Schlüsselelementes vorzugsweise im 2-Komponentenspritzguss angespritzt wird, ersetzt werden.

Eine noch weitere bevorzugte Dichtung in Form eines O-Rings ist am Gehäusedeckel selbst (d.h. nicht an der Rahmeneinheit) angeordnet. Der O-Ring stellt dabei eine Abdichtung zwischen Gehäusedeckel und Gehäuse her. Der O-Ring kann auch durch eine Weichkomponente, welche an die Hartkomponente des Gehäusedeckels vorzugsweise im 2-Komponentenspritzguss angespritzt wird, ersetzt werden.

Mit der geringeren Lautstärke im Betrieb kann eine deutliche Komfort-Verbesserung erzielt werden. Insbesondere wurde hierzu das Spiel zwischen den bewegten Teilen reduziert, so dass die Bewegungsübertragungen mit direkteren bzw. engeren Kontakten und ohne Verzahnung erfolgen. Zudem wurde die Anzahl der Bauteile reduziert.

Ausserdem liegen, wie vorstehend beschrieben, die Lagerpunkte für die Antriebswelle weit auseinander, was dem Getriebe zusätzliche Stabilität und Ruhe verleiht. Des Weiteren ist der Rahmeneinheit dämpfend im Gehäuse gelagert, was eine Vibrations- und Geräuschentkopplung und eine Dämpfung bringt. Schliesslich wird bevorzugt ein Motor mit weniger Spiel in sich bzw. mit einer verbesserten Lagerung der Motorwelle verwendet.

Die Chemikalienbeständigkeit wird durch geeignete Materialien der Dichtungen bereitgestellt. Zudem ist das Innenleben der Zahnbürste ansonsten nicht gegenüber der Aussenwelt exponiert.

Zwischen dem Getriebe für die oszillierende Bewegung und dem Sonic-Getriebe bestehen auch Unterschiede hinsichtlich der zu wechselnden Bauteile. Es sind insbesondere jeweils andere Exzenter, andere Antriebswellen, andere Dicht-/Dämpfelemente sowie andere Schlüsselelemente vorgesehen. Weiter wird die Balgdichtung weggelassen. Allerdings ist das Umstellen der Produktion von einer oszillierenden Zahnbürste auf eine Sonic-Zahnbürste (oder umgekehrt) insoweit gerade nicht mit einem allzu grossen Aufwand verbunden. Ein wesentlicher Anteil der Bauteile bleibt unverändert.

Als weitere bevorzugte Funktion des elektrischen Zahnbürstenhandteils sind diverse Reinigungsprogramme umfasst.

Die Reinigungsprogramme sind dabei über Drehzahlmuster definiert. Grundsätzlich kann vorliegend ein Reinigungsprogramm auch als eine Abfolge von Drehzahlmustern definiert werden.

Die Reinigungsprogramme können bei einer konstanten Drehzahl laufen, beispielsweise bei 100 %, was auch als "Clean" bezeichnet wird. Hier ist der Auslastungsgrad bei 100 %, d.h. der Motor ist immer unter Strom. Denkbar ist auch eine konstante Drehzahl bei 60 % bis 80 %, was auch als "Sensitiv" bezeichnet wird. Hier ist der Auslastungsgrad bei 60 % bis 80 %, d.h. der Motor ist nicht immer unter Strom.

Es sind aber auch Reinigungsprogramme umfasst, bei denen die Drehzahl zwischen zwei oder mehreren Werten schwankt. Die Drehzahl ändert sich also im Betrieb. Dies kann in Form eines An- und Abschwellens erfolgen oder aber auch durch ein Anschwellen mit einem Sprung auf einen Basiswert mit erneutem Anschwellen. Es kann auch ein direktes Springen zwischen Drehzahlwerten erfolgen. Beispielsweise Stufe 1 hohe Drehzahl, Stufe 2 tiefe Drehzahl, Stufe 1.. usw. Es sind aber auch Massageprogramme denkbar, bei denen der Auslastungsgrad zwischen 0 % und 100 % wechselt.

Weiterhin ist vorzugsweise eine Timer-Funktion zur Indikation der Putzzeit vorgesehen. Hier können etwa vier Signale, jeweils immer nach 30 Sekunden vorgesehen sein, wobei ggf. das vierte Signal etwas länger ist, um das Ende der Putzzeit zu signalisieren. Es kann aber natürlich auch nur ein Signal am Ende der Putzzeit vorgesehen sein.

Als Signalformen kommen etwa eine (kurzzeitige) Drehzahländerung als akustische Signalform oder aber die Verwendung von LEDs als optische Signalform in Frage (oder ggf. auch eine Kombination von beiden).

Die Drehzahländerung kann dabei in Form einer Reduktion, einem Stoppen (bis auf eine Drehzahl von Null) oder einer abrupten Erhöhung der Drehzahl erfolgen. Andererseits können aber auch LED-Lämpchen vorgesehen sein, welche ggf. verschiedenfarbige Blink- und/oder Leuchtsignale erzeugen.

Weiterhin ist auch eine Auto-Off-Funktion denkbar. Dies umfasst eine Funktion zum Abschalten des Geräts im Falle eines unbeabsichtigten Einschaltens (z.B. auf Reisen oder beim Transport). Das Gerät schaltet sich dann nach einer vorgegebenen Zeitdauer ab. Die vorgegebene Zeitdauer kann etwa zwischen 2 min und 10 min vorzugsweise zwischen 2 min und 6 min betragen.

Weiterhin kann auch eine Easy-Start-Funktion vorgesehen sein. Diese Funktion erleichtert dem Benutzer die Eingewöhnung in die Handhabung des Produkts. Dies bedeutet etwa, dass im Laufe der ersten Anzahl Nutzungen (z.B. ab dem Neukauf oder ab einem Reset) die Bewegung bzw. die Motorendrehzahl allmählich gesteigert wird. Die Steigerung kann dabei bei jeder Nutzung erfolgen oder aber erst nach mehreren Nutzungen.

Zum Beispiel kann die Motorgeschwindigkeit bei der ersten Nutzung 40 % bis 70 % vorzugsweise 45 % bis 55 % der Höchstgeschwindigkeit bzw. der maximalen Motorendrehzahl betragen. Dies hängt jeweils ab vom verwendeten Reinigungsprogramm.

Die Erhöhung der Motorgeschwindigkeit kann pro Nutzung unbegrenzt sein oder aber zumindest 5 % betragen. Ebenso kann sie linear ausgestaltet sein und zwar mit oder ohne eine zugrundeliegende Funktion. Die Funktion ist ggf. speziell auf das entsprechende Reinigungsprogramm abgestimmt.

Die Anzahl der Nutzungen für die Eingewöhnung beträgt von 4 bis 12 Mal vorzugsweise von 8 bis 10 Mal. Das Endlevel hängt wiederum vom Reinigungsprogramm ab. Falls das Reinigungsprogramm mit etwa 80 % der maximalen Motorgeschwindigkeit läuft, erfolgt keine weitere Erhöhung über diesen Wert hinaus.

Des Weiteren kann auch eine Soft-Start-Funktion vorgesehen sein. Hierbei startet die Bewegung bei jedem Einschalten langsam an, d.h. der Motor wird langsam auf die Motorendrehzahl hochgefahren. Dies kann anhand einer linearen oder aber anhand einer nicht-linearen (z.B. einer progressiven) Kurve bzw. Funktion erfolgen.

Die Zeit welche benötigt wird um von 0 % auf 100 % der Motordrehzahl zu kommen beträgt von 200 ms bis 1200 ms vorzugsweise von 400 ms bis 800 ms. Die Drehzahl muss nicht zwangsläufig 100 % der Motordrehzahl umfassen, bestimmte Reinigungsprogramme können auch bei einer tieferen Drehzahl laufen.

Weiterhin kann eine Soft-Stopp-Funktion vorgesehen sein. Hier stoppt die Bewegung bei jedem Ausschalten langsam, d.h. der Motor wird langsam runtergefahren. Dies kann anhand einer linearen oder aber anhand einer nicht-linearen (z.B. einer degressiven) Kurve bzw. Funktion erfolgen.

Die Zeit, welche benötigt wird, um von 100 % auf 0 % der Motordrehzahl zu kommen beträgt von 100 ms bis 800 ms vorzugsweise von 300 ms bis 600 ms. Die Drehzahl muss nicht zwangsläufig 100 % der Motordrehzahl umfassen, bestimmte Reinigungsprogramme können auch bei einer tieferen Drehzahl laufen.

Als weitere Funktion kann auch die Möglichkeit eines Umprogrammierens auf der Ladestation vorgesehen sein. Die Umprogrammierfunktion ist besonders geeignet für Eigenschaften, bei denen zwischen zwei Werten eingestellt werden kann, wie etwa beim Ein- und Ausschalten (d.h. es wird jeweils vom einen auf den anderen Wert gewechselt).

Beispiele für Umprogrammiermöglichkeiten umfassen beispielsweise das Ein- und Ausschalten bzw. Abändern einer Anpressdruckobergrenze und ggf. auch einer Anpressdruckuntergrenze, das Umschalten zwischen zwei Reinigungsmodi, das Auto-Off zwischen zwei Werten (Ein- und Aus) umschalten, den Easy Start ein- bzw. ausschalten, den Soft Start ein- bzw. ausschalten sowie den Soft-Stopp ein- bzw. auszuschalten. Wenn das Gerät auf der Ladestation steht, können somit solche Funktionen ein- bzw. ausgeschaltet werden und/oder es können Schwellwerte für solche Funktionen verändert werden.

Hierzu wird vorzugsweise das Gerät auf die angeschlossene Ladestation gestellt. Anschliessend wird der Ein-/Ausschalter für eine gegebene Zeitdauer gedrückt gehalten (wobei dies grundsätzlich auch ein anderer vorhandener Schalter sein kann). Die gegebene Zeitdauer beträgt zwischen 1 s und 10 s vorzugsweise zwischen 3 s und 7 s.

Die Bestätigung für den Wechsel des jeweiligen Werts kann auf akustische oder auf optische Weise dem Benutzer bestätigt werden. Beispielsweise kann eine ansteigende Tonfolge beim Einschalten vorgesehen sein bzw. eine sinkende Tonfolge beim Ausschalten oder aber eine entsprechende LED-Signalisierung mittels blinkender/leuchtender Lämpchen. Im Anschluss an die Bestätigung kann der entsprechende Schalter wieder losgelassen werden.

Optional können auch mehrere der o.g. Funktionen auf diese Weise gesteuert werden. So kann etwa nach 3 s des Niederdrückens des entsprechenden Schalters eine erste Funktion eingestellt werden, nach weiteren 2 s eine zweite Funktion und nach weiteren 2 s eine dritte Funktion. Die erste, zweite und dritte Funktion können jeweils eine erste, eine zweite sowie eine dritte Dauer aufweisen.

Der Zeitpunkt in dem man den Schalter loslässt entscheidet dabei vorzugsweise darüber, welche Funktion eingestellt wird. Mit anderen Worten können durch verschieden lange Drückzeiten unterschiedliche Funktionen angewählt bzw. eingestellt werden. Beispielsweise kann nach 3 s Niederdrücken die erste Funktion eingestellt werden oder nach 5 s Niederdrücken (direkt) die zweite Funktion bzw. nach 7 s Niederdrücken (direkt) die dritte Funktion.

Durch ein entsprechendes Leuchtsignal eines zugehörigen LED-Lämpchens kann für den Benutzer auch auf optisch definierte Weise angezeigt werden, welche Funktion eingestellt wurde.

Als Signalformen zur Bestätigung der Ausführung von bestimmten Aktionen an der Zahnbürste eigenen sich LEDs und vom Motor erzeugte Signale. Beispielsweise kann nach dem Abstellen der Zahnbürste auf der Ladestation eine Bestätigung des Ladevorgangs anhand eines optischen oder akustischen Signals erfolgen. Auch eine Umprogrammierung kann entsprechend durch ein optisches oder akustisches Signal bestätigt werden.

Im Folgenden soll nochmals kurz auf mögliche alternative Antriebsmöglichkeiten zu dem vorstehend beschriebenen Pleuel-Getriebe, mit denen ebenfalls eine kontinuierliche Drehbewegung der Motorwelle in eine reversierende Dreh-/Schwenkbewegung der Antriebswelle umgesetzt werden kann, eingegangen werden.

In einer ersten Getriebevariante gemäss WO 2008/040402 A1 wird ein Nocken mit einer Untersetzung bereitgestellt. Dabei dreht die Motorwelle kontinuierlich um 360° und treibt ein Zahnrad an. Das Zahnrad greift in weiteres Zahn- bzw. Kronrad ein, welches den Exzenter antreibt. Der Exzenter wird von der Gabel (als Abnehmer) abgegriffen, wobei die Antriebswelle an der Gabel hängt. Hierbei ergibt eine Umdrehung der Motorwelle weniger als eine Umdrehung der Antriebswelle. Dieser Antrieb ist im Zusammenhang ist ebenfalls denkbar aber weniger bevorzugt.

In einer zweiten Getriebevariante gemäss WO 2008/040402 A1 wird ein Direktantrieb mit einem Nocken bereitgestellt. Dabei dreht wiederum die Motorwelle kontinuierlich um 360°, wobei ein Exzenter auf die Motorwelle aufgebracht ist. Der Exzenter wird von der Gabel mit der Antriebswelle abgegriffen. Hierbei entspricht eine Umdrehung der Motorwelle genau einer Umdrehung der Antriebswelle. Dieser Antrieb ist im Zusammenhang ist ebenfalls denkbar aber weniger bevorzugt.

Im Folgenden soll nunmehr auch auf wesentliche Aspekte der Aufsteckbürsten gemäss der vorliegenden Offenbarung eingegangen werden.

Für die Aufsteckbürsten werden bevorzugt (konventionelle) extrudierten Borsten verwendet, d.h. sowohl in zugespitzter als auch in zylindrischer Form, aus Hart- und/oder Weichkomponente gebildet und zwar bevorzugt aus Polyamid (PA) oder Polyester (PBT).

Die Herstellung kann durch Extrusion eines Materials oder durch Extrusion von mehr als einem Material (Co-Extrusion) erfolgen. Im Gegensatz zu gespritzten Borsten oder gummielastischen Massage- und/oder Reinigungselementen, welche mittels Spritzguss hergestellt sind, werden konventionelle Borsten extrudiert, geschnitten und ggf. bearbeitet bevor sie am Borstenträger anhand eines geeigneten Verfahrens eingesetzt werden.

Die Längsform der Borsten bzw. Borstenfilamente kann zylindrisch, mechanisch oder chemisch zugespitzt (vor allem bei Polyester (PBT)), gewellt, gedreht und/oder wendelförmig sein.

Bevorzugte Querschnittsformen sind kreisförmig, rund, dreieckig, rechteckig, quadratisch, elliptisch, polygonförmig, trapezförmig, parallelogrammförmig oder rhombusförmig.

Für Mundhygiene-Produkte beträgt dabei ein Durchmesser von 0,075 mm bis 0,25 mm und eine Querschnitts-Fläche von 0. 002 mm² bis 0.2 mm². Der Durchmesser beschreibt den kleinsten Kreis welcher um die Querschnittsform der Borste gebildet werden kann.

Für Kosmetik-Produkte, die im vorliegenden Rahmen ebenfalls vorstellbar sind als Aufsteckbürsten, reicht ein Durchmesser von 0,025 mm bis 0,2 mm und eine Querschnitts-Fläche von 0.001 mm² bis 0.15 mm².

Die Oberfläche der Borsten ist vorzugsweise glatt oder texturiert. Die Borsten werden regelmässig in Bündeln zusammengefasst.

Es können in bevorzugten Ausführungsformen auch Zungenreiniger an den Aufsteckbürsten vorgesehen sein, welche aus Hartkomponenten und/oder aus Weichkomponenten und/oder Kombinationen von Hartkomponenten und Weichkomponenten und/oder Material für gespritzte Borsten gebildet sind. Die Herstellung der Zungenreiniger erfolgt regelmässig im Spritzgussverfahren.

Die im Rahmen der vorliegenden Offenbarung bevorzugt als Hartkomponenten verwendeten Kunststoffe umfassen generell Styrolpolymerisate wie Styrolacrylnitril (SAN), Polystyrol (PS), Acrylnitrilbutadienstyrol (ABS), Styrolmethylmethacrylat (SMMA) oder Styrolbutadien (SB); Polyolefine wie Polypropylen (PP) oder Polyethylen (PE) (vorzugsweise auch in Form von High Density Polyethylen (HDPE) oder Low Density Polyethylen (LDPE)); Polyester wie Polyethylenterephthalat (PET) in Form von säuremodifiziertem Polyethylenteraphthalat (PETA) oder glycolmodifiziertem Polyethylenterephthalat (PETG) ,Polybutylenterephthalat (PBT), säuremodifizierte Polycyclohexylendimethylenterephthalat (PCT-A) oder glycolmodifiziertem Polycyclohexylendimethylenterephthalat (PCT-G); Cellulosederivate wie Celluloseacetat (CA), Celluloseacetobutyrat (CAB), Celluloseproprionat (CP), Celluloseacetatphthalat (CAP) oder Cellulosebutyrat (CB); Polyamide (PA) wie PA 6.6, PA 6.10 oder PA 6.12; Polymethylmethacrylat (PMMA); Polycarbonat (PC); Polyoxymethylen (POM); Polyvinychlorid (PVC); Polyurethan (PUR) und/oder Polyamid (PA).

Polyethylen (PE) kann vorliegend sowohl als Hartkomponente als auch als Weichkomponente eingesetzt werden. Gleichermassen kann Polyurethan (PU) sowohl als Hartkomponente als auch als Weichkomponente eingesetzt werden.

Bevorzugt wird Polypropylen (PP) mit einem Elastizitätsmodul von 1000 bis 2400 N/mm², vorzugsweise von 1200 bis 2000 N/mm², und besonders bevorzugt von 1300 bis 1800 N/mm² verwendet.

Im Rahmen der vorliegenden Offenbarung wird die Hartkomponente (bzw. Kombinationen davon) vorzugsweise für bzw. in instabilen strukturtragenden Elementen eingesetzt.

Dies sind beim elektrischen Zahnbürstenhandteil grundsätzlich etwa das Gehäuse, die Rahmeneinheit, das angespritzte Gelenkstück mit dem Gelenkzapfen, die Pleuelstange, der Exzenter, das Schlüsselelement und der Gehäusedeckel.

Für die Aufsteckbürste sind dies grundsätzlich etwa der Kopfabschnitt, der Aufsteckabschnitt, der Halsabschnitt sowie der Bürstenkopf.

Werden mehrere Hartkomponenten eingesetzt (beispielsweise im Zwei- oder Mehr-Komponenten-Spritzguss) oder werden Materialien mittels Ultraschallschweissen verbunden, bilden die eingesetzten Hartkomponenten untereinander vorzugweise einen Materialschluss.

Alternativ können mehrere Materialien eingesetzt werden, welche im Zwei- oder Mehrkomponenten-Spritzguss keinen Materialschluss eingehen. Bei diesen Paarungen wird ein Formschluss vorgesehen (z.B. durch Hinterschnitte und/oder Durchbrüche sowie teilweise und/oder vollständige Umspritzung, etc.).

Die zweite verspritzte Hartkomponente schwindet dann bei der Abkühlung auf die erste verspritzte Hartkomponente auf und bildet eine Schwundverbindung. Beispiele für mögliche Hartkomponentenpaarungen, welche keinen Materialschluss eingehen sind Polypropylen und Polyester oder aber Polypropylen und Styrolacrylnitril.

Im Rahmen der vorliegenden Offenbarung ist bzw. sind generell die Weichkomponente(n) aus einem thermoplastischem Styrolelastomer (TPE-S) (vorzugsweise einem Styrolethylenbutylenstyrolcopolymer (SEBS) oder Styrolbutadienstyrolcopolymer (SBS)); einem thermoplastischem Polyurethanelastomer (TPE-U); einem thermoplastischem Polyamidelastomer (TPE-A); einem thermoplastischem Polyolefinelastomer (TPE-O); thermoplastischem Polyesterelastomer (TPE-E) und/oder Silikonen gebildet.

Weichkomponenten kommen im Rahmen der vorliegenden Offenbarung etwa bei gespritzten Borsten, bei Reinigungs- und Massageelementen auf dem Bürstenkopf einer Aufsteckbürste, bei Zungenreinigern auf oder am Bürstenkopf einer Aufsteckbürste oder aber als griffigkeitsfördernde Materialien am Handteil und/oder im Bereich der Schalter des Handteils zum Einsatz.

Polyethylen (PE) und Polyurethan (PU) können sowohl als Hartkomponente als auch als Weichkomponente eingesetzt werden. Weichkomponenten sind vorliegend besonders bevorzugt thermoplastische Elastomere (TPE's) mit einer Shore A Härte kleiner 90, vorzugsweise von kleiner 50 und noch weiter vorzugsweise von kleiner 30. Die Weichkomponenten bilden mit Hartkomponenten beim Überspritzen im Zwei- oder Mehrkomponenten-Spritzgiessverfahren bevorzugt einen Materialschluss.

Weiter vorzugsweise werden das bzw. die Material(ien) für die gespritzten Borsten gebildet aus thermoplastischen Polyurethan-Elastomeren (TPE-U). Die weisen gegenüber den Standard TPE bessere Fliesseigenschaften auf sowie eine schnellere Erstarrung (d.h. eine schnellere Kristallisation wobei sich die Molekülketten schon bei hohen Temperaturen verbinden).

Alternative Materialien umfassen etwa Polyethylen (PE), beispielsweise in Form von Low Density Polyethylen (LDPE) oder Linear Low Density Polyethylen (LLDPE) oder thermoplastische Polyester-Elastomere (TPE-E) oder aber thermoplastische Polyamid-Elastomere (TPE-A).

Die Materialien für gespritzte Borsten umfassen weiter vorzugsweise Weichkomponenten bevorzugt thermoplastische Elastomere und weisen eine Shore D Härte von 0 bis 100 vorzugsweise von 30 bis 80 auf. Für gespritzte Borsten werden spezielle Formen von Weichkomponenten eingesetzt, welche in der Regel höhere Shore Härten aufweisen als Weichkomponenten, aus welchen weichelastische Reinigungs-/Massageelemente oder Handgriffzonen oder etwa Zungenreiniger hergestellt werden.

Während dem Spritzgussprozess (z.B. einem Zwei- oder Mehrkomponenten-Spritzgiessverfahren) gehen die Materialien für gespritzte Borsten in der Regel mit den anderen eingesetzten Weich- und/oder Hartkomponenten (z.B. mit einem Trägerplättchen oder einem Bürstenkopf) keinen Materialschluss ein. Folglich wird für allfällige Verbindungen mit anderen Hart- beziehungsweise Weichmaterialien ein Formschluss vorgesehen (z.B. durch Hinterschnitte und/oder Durchbrüche sowie teilweise und/oder vollständige Umspritzungen, etc.). Das als zweites verspritzte Material für die gespritzten Borsten schwindet bei der Abkühlung auf das erste verspritzte Hart- oder Weichkomponente auf und bildet so eine Schwundverbindung.

Als spezielle Materialien können vorliegend generell auch zum Einsatz kommen sogenannte Biokunststoffe (also Kunststoffe, die aus nachwachsenden Rohstoffen bestehen) oder aber auch wasserlösliche Polymere.

Biokunststoffe bestehen aus Grundstoffen aus folgenden Rohstoffen. Als Rohstoffe in Frage kommen vorliegend beispielsweise Mais, Hanf, Zucker, Rizinusöl, Palmöl, Kartoffeln, Weizen, Zuckerrohr, Kautschuk, Holz oder die Castor Pflanze/Wunderbaum. Beispiele von Grundstoffen umfassen Cellulose, Stärke, Milchsäure (PLA), Glucose, Chitin oder Chitosan.

Die Hauptgruppen der hier bevorzugten Biokunststoffe umfassen stärkebasierte Biokunststoffe, cellulosebasierte Biokunststoffe, Polyhydroxialkanoate (z.B. Polyhydroxibuttersäure (PHB)), Polymilchsäure (PLA) oder aliphatische/aromatische Copolyester. Weitere bevorzugte Biokunststoffe umfassen etwa Lignin-basierte Biokunststoffe.

Im Folgenden sollen insbesondere für die Bauteile der Antriebseinheit, des elektrischen Zahnbürstenhandteils sowie für die Aufsteckbürsten relevante Herstell- und ggf. Beborstungsverfahren generell sowie auch anhand von diversen bevorzugten Ausgestaltungsvarianten beschrieben werden.

Das Spritzgiessen wird generell in einem Spritzgusswerkzeug (bzw. einer entsprechenden Maschine) vorzugsweise in Form eines Mehrkomponenten-Spritzgusses ausgeführt. Dabei können sich die Materialien verbinden und zwar durch Materialschluss oder durch Stoffschluss. Es ist aber auch möglich, dass sich die Materialien nicht verbinden, d.h. es wird etwa mittels Formschluss eine Schwundverbindung mit Beweglichkeit bzw. einem Gelenk erzeugt. Es können generell sowohl Heisskanal-, Kaltkanal- oder Co-Injektions-Verfahren angewandt werden. Die Lage der Anspritzpunkte kann dabei je nach Bauteil variieren, d.h. die Anspritzpunkte können vorne am Bauteil, mittig am Bauteil oder aber hinten am jeweiligen Bauteil angeordnet sein.

Bei den bevorzugten Beborstungsverfahren für die hier beschriebenen Bürstenköpfe handelt es sich insbesondere um Ankerstanzverfahren sowie um ankerlose Beborstungsverfahren.

Beim Ankerstanzverfahren wird zunächst der Grundkörper mit entsprechenden Sacklöchern für die Borsten gespritzt. Anschliessend werden die Borsten gefaltet und mittels Ankern, welche regelmässig aus Stanzdraht gebildet sind (bzw. von einem solchen abgetrennt werden), in den Sacklöchern befestigt. Für das Ankerstanzverfahren werden entsprechend neben den Borsten eine Stanzeinrichtung, ein Stanzwerkzeug, Stanzdraht bzw. Anker und entsprechende Formeinsätze benötigt.

Eine Variante des Ankerstanzens, welche vorliegend ebenfalls Anwendung finden kann, ist das sogenannte Schlingenstanzen. Hierbei werden die Borsten mittels von Drahtschlingen, welche ebenfalls aus Stanzdraht gebildet werden, eingeschnürt und in die Sacklöcher eingebracht.

Bei den ankerlosen Beborstungsverfahren werden die Borsten dagegen nicht gefaltet und es wird kein Stanzdraht verwendet. Die Borsten weisen mithin, verglichen mit den Borsten aus dem Anker- bzw. Schlingenstanzverfahren, nur die halbe Länge auf.

Der Ablauf einer ersten bevorzugten Verfahrensvariante ist wie folgt: Zunächst werden die Borstenbündel vereinzelt, anschliessend werden die Borstenenden verschmolzen und danach werden die Borstenenden direkt umspritzt. Die Borstenbündel können hier generell zusammengeführt, d.h. zu einem grösseren Bündel vereinigt werden. Wenn das Umspritzen auch das Spritzgiessen des Griffs beinhaltet, spricht man vom sogenannten "In Mold Tufting" Verfahren (IMT-Verfahren). Werden zuerst die Borsten mit Plättchen umspritzt und anschliessend die Plättchen mit dem Griff umspritzt, spricht man von einer Integrated Anchorless Production.

Der Ablauf einer zweiten bevorzugten Verfahrensvariante ist wie folgt: Zunächst erfolgt das Spritzgiessen von (separaten) Trägerplättchen für die Borsten mit Durchgangslöchern, anschliessend werden die Borsten bereitgestellt und durch das Trägerplättchen geführt. Danach werden die Borsten an ihrem rückwärtigen Enden angeschmolzen und mit dem Trägerplättchen verschmolzen und schliesslich wird das beborstete Trägerplättchen mit dem ebenfalls separat hergestellten Griff mittels Ultraschall verschweisst. Können dabei Borstenbündel im Prozess zusammengeführt werden oder nicht.

Der Ablauf einer dritten bevorzugten Verfahrensvariante ist wie folgt: Zunächst erfolgt das Spritzgiessen des Grundkörpers mit Durchgangslöchern für Borsten im Kopfbereich, anschliessend werden die Borsten bereitgestellt und durch die Durchgangslöcher im Kopfbereich geführt. Dann werden die Borsten auf der Rückseite des Kopfbereichs verschmolzen und anschliessend wird die Borstenschmelze mit Weichmaterial überspritzt. Bekannte Verfahren umfassen die Möglichkeiten bei welchen das Zusammenführen von Borsten nicht möglich ist sowie Verfahren, bei welchen das Zusammenführen von Borsten möglich ist.

Der Ablauf der vierten Verfahrensvariante ist wie folgt: Zunächst wird ein Grundkörper mit Sacklöchern bzw. Aussparungen für die Borsten im Kopfbereich gespritzt, anschliessend werden die Borsten bündelweise bereitgestellt. Danach werden die Borsten bündelweise verschmolzen, anschliessend wird der Grundkörper im Kopfbereich (d.h. insbesondere der Borstenträger bzw. der Bürstenkopf) etwa auf Glastemperatur erwärmt und schliesslich werden die verschmolzenen Borstenenden in die Sacklöcher bzw. Aussparungen eingeführt und die Borstenbündel mit Druck in dem Borstenträger verankert. Mit anderen Worten wird hier die Grösse der Sacklöcher reduziert bzw. die Geometrie des Borstenträgers bzw. des Bürstenkopfs verformt, um so die Borstenbündel zu verankern).

Ein weiteres bevorzugtes Beborstungsverfahren ist das Eindrehverfahren. Hierbei werden zunächst die Borstenfilamente zugeführt, gebündelt und vorgezogen. Insbesondere werden die Borstenfilamente ab einer Rolle zugeführt. Dabei können mehrere Filamentstränge auf einer Rolle aufgewickelt sein. Für die Maschinenbeschickung sind jeweils mehrere Rollen vorgespannt, denn jedes Borstenfilament in der Bürste entspricht einem Filamentstrang. Die Filamente werden passend ausgebreitet, damit sie die Breite aufweisen, in welcher sie in die Bürste eingeführt werden. Anschliessend werden die Filamente so vorgezogen, dass sie für den nächsten Schritt freistehen, d.h. dass der Draht darüber geführt werden kann.

Nunmehr wird der Draht zugeführt, geschnitten und gebogen. Der Draht wird dabei ab einer Drahtrolle zu der Beborstungsmaschine geführt (d.h. abgewickelt) und in den Prozess eingeführt. Der Draht wird auf eine Länge zugeschnitten welche grösser ist als die abgewickelte Länge der eingedrehten Borstenfilamente (die endgültige Ablängung erfolgt nach dem Eindrehen). Der Draht wird dann zu einem U gebogen, damit die offene Seite später über die Filamente geschoben werden kann (man spricht hier auch vom Einfädeln der Borsten).

Nunmehr werden die Filamente und der gebogene Draht zusammengeführt. Der Draht wird dabei von aussen über die Filamente geschoben, wobei der Draht in der Biegung bzw. am Boden des U's gehalten wird. Das offene Drahtende wird dann geklemmt, so dass die Filamente zwischen den Drahtstücken halten. Anschliessend werden die Filamente auf eine Länge geschnitten, welche grösser ist als die Endlänge in der Bürste, damit die Bürste nachdem die Filamente eingedreht sind, korrekt zugeschnitten werden kann.

Nunmehr erfolgt das Eindrehen und Profilieren der Filamente. D.h. der Draht wird gedreht, so dass die Filamente zwischen dem Draht eingeklemmt bzw. fixiert sind. Nachdem die Filamente zwischen dem Draht eingeklemmt bzw. fixiert wurden, werden sie auf die gewünschte Länge geschnitten bzw. entsprechend profiliert. Nachdem der entsprechende Bürstenteil fertig gestellt ist, wird der überschüssige Draht abgeschnitten.

Die vorliegende Offenbarung umfasst generell Bürstenprodukte für die Körperpflege, die Mundhygiene sowie insbesondere für elektrische Zahnbürsten.

Für die Aufsteckbürsten werden insbesondere die drei nachfolgend beschriebenen Ausführungsformen besonders bevorzugt.

Bei der ersten bevorzugten Ausführungsform bestehen vorzugsweise alle Elemente des Borstenfelds auf dem Bürstenkopf aus zylindrischen Borsten bzw. Borstenfilamenten. Grundsätzlich sind jedoch alle möglichen Filamentarten denkbar.

Der Durchmesser der Borsten bzw. Borstenfilamente beträgt bevorzugt von 0,075 mm bis 0,25 mm und die Querschnitts-Fläche bevorzugt von 0. 002 mm² bis 0.2 mm².

Bevorzugt senken sich die Borsten bzw. die Borstenbündel in Richtung des Zentrums des Bürstenkopfs ab, wobei die Differenz zwischen dem höchsten und dem tiefsten Punkt von 1 mm bis 4 mm vorzugsweise von 2 mm bis 3 mm beträgt.

Bevorzugt kommen hier drei unterschiedliche Formen von Borstenbündeln zum Einsatz, nämlich kreissegmentförmige Borstenbündel, kleine ovale Borstenbündel und grosse ovale Borstenbündel. Bevorzugt sind die einzelnen Formen von Borstenbündeln dabei kreisringförmig zueinander angeordnet, d.h. vorzugsweise in drei konzentrischen Kreisen, wobei aber auch die Borstenbündel einer Form leicht nach Innen (d.h. in Richtung des Zentrums des Bürstenkopfs) versetzt zwischen den Borstenbündeln einer anderen Form von Borstenbündeln angeordnet sein können.

Dabei umfasst der innerste Kreis bevorzugt identische Borstenbündel, welche weiter vorzugsweise eine einheitliche, gleichbleibende Höhe aufweisen. Die Borstenbündel sind dabei bevorzugt in vier Kreissegmenten angeordnet und bilden so einen unterbrochenen Kreisring.

Die Länge der einzelnen Kreissegmente ist abhängig von der Anzahl der jeweils verwendeten Bündel und den zwischen ihnen liegenden Lücken. Die Breite der einzelnen Kreissegmente beträgt von 0.2 mm bis 1 mm vorzugsweise von 0.3 mm bis 0.6 mm. Die Höhe der einzelnen Kreissegmente beträgt von 4 mm bis 8 mm vorzugsweise von 5.5 mm bis 6.5 mm.

Die Fläche der Borstenbündel beträgt von 2 mm² bis 4.5 mm² vorzugsweise von 2.3 mm² bis 3 mm².

Der abgedeckte Winkelbereich der Borstenbündel beträgt von 45° bis 360° vorzugsweise von 70° bis 120°.

Die Anzahl der Borstenbündel beträgt von 1 bis 8 Stück vorzugsweise von 2 bis 5 Stück.

Der Durchmesser des Kreises auf welchem die Borstenbündel liegen (durch das Zentrum des Bündels hindurch) beträgt von 2 mm bis 5 mm vorzugsweise von 2.5 mm bis 4 mm.

Die Länge der Lücken zwischen den einzelnen Kreissegmenten beträgt von 0.5 mm bis 1.4 mm vorzugsweise von 0.7 mm bis 1.1 mm.

Der mittlere Kreis umfasst vorzugsweise identische Borstenbündel in Form von grossen Ovalen. Die Zentren der grossen Ovale liegen dabei vorzugsweise auf diesem Kreis. Die grossen ovalen Borstenbündel weisen weiter vorzugsweise eine in Richtung des Zentrums abfallende Abschrägung (d.h. an ihrem oberen Ende) auf. Die Borstenbündel sind grösser als die Borstenbündel des äusseren Kreises.

Die Länge der grossen ovalen Borstenbündel beträgt von 3 mm bis 6 mm vorzugsweise von 4 mm bis 5 mm.

Die Breite der grossen ovalen Borstenbündel beträgt 0.8 mm bis 2.4 mm vorzugsweise von 1.2 mm bis 1.8 mm.

Die äussere Höhe der grossen ovalen Borstenbündel beträgt von 7 mm bis 10 mm vorzugsweise von 8 mm bis 9 mm. Die innere Höhe der grossen ovalen Borstenbündel beträgt von 5.5 mm bis 8.5 mm vorzugsweise von 6.5 mm bis 7.5 mm.

Die Fläche der grossen ovalen Borstenbündel beträgt von 3 mm² bis 14 mm² vorzugsweise von 4.5 mm² bis 7 mm².

Die Anzahl der grossen ovalen Borstenbündel beträgt von 4 bis 11 vorzugsweise von 6 bis 9. Die Anzahl der grossen ovalen Borstenbündel des mittleren Kreises ist vorzugsweise gleich gross wie die Anzahl der kleinen ovalen Borstenbündel des äusseren Kreises, da die Borstenbündel vorzugsweise abwechselnd angeordnet sind.

Der Radius des Kreises auf welchem die Borstenbündel liegen (durch das Zentrum der grossen ovalen Borstenbündel) beträgt von 3 mm bis 6.5 mm vorzugsweise von 4.2 mm bis 5.2 mm.

Vorzugsweise liegen die Borstenbündel des mittleren und äusseren Kreises ineinander (bevorzugt leicht nach Innen versetzt) und wechseln sich ab.

Das Verhältnis der Fläche der kleinen ovalen Borstenbündel zu der Fläche der grossen ovalen Borstenbündel beträgt von 1:7 bis 5:7vorzugsweise von 2:7 bis 1:2.

Der äussere Kreis umfasst vorzugsweise identische Borstenbündel in Form von kleinen Ovalen. Die Zentren der kleinen Ovale liegen dabei vorzugsweise auf diesem Kreis. Die kleinen ovalen Borstenbündel weisen weiter vorzugsweise eine in Richtung des Zentrums abfallende Abschrägung auf

Die Länge der kleinen ovalen Borstenbündel beträgt von 2 mm bis 3.5 mm vorzugsweise von 2.5 mm bis 3 mm.

Die Breite der kleinen ovalen Borstenbündel beträgt 0.5 mm bis 2mm vorzugsweise von 1 mm bis 1.5 mm.

Die äussere Höhe der kleinen ovalen Borstenbündel beträgt von 5.5 mm bis 8.5 mm vorzugsweise von 6.5 mm bis 7.5 mm. Die innere Höhe der kleinen ovalen Borstenbündel beträgt von 4.5 mm bis 7.5 mm vorzugsweise von 5.5 mm bis 6.7 mm.

Die Fläche der kleinen ovalen Borstenbündel beträgt von 2 mm² bis 7 mm² vorzugsweise von 3 mm² bis 4.5 mm².

Die Anzahl der kleinen ovalen Borstenbündel beträgt von 4 bis 11 vorzugsweise von 6 bis 9.

Der Radius des Kreises auf welchem die Borstenbündel liegen (durch das Zentrum der kleinen ovalen Borstenbündel) beträgt von 3.5 mm bis 6.5 mm vorzugsweise von 4.5 mm bis 5.5 mm.

Beim der zweiten bevorzugten Ausführungsform bestehen vorzugsweise alle Elemente des Borstenfelds auf dem Bürstenkopf aus zylindrischen Borsten bzw. Borstenfilamenten. Grundsätzlich sind jedoch alle möglichen Filamentarten denkbar.

Der Durchmesser der Borsten bzw. Borstenfilamente beträgt bevorzugt von 0,075 mm bis 0,25 mm und die Querschnitts-Fläche bevorzugt von 0.002 mm² bis 0.2 mm².

Bevorzugt senken sich die Borsten bzw. die Borstenbündel in Richtung des Zentrums des Bürstenkopfs ab, wobei die Differenz zwischen dem höchsten und dem tiefsten Punkt von 1 mm bis 4 mm vorzugsweise von 2 mm bis 3 mm beträgt.

Bei dieser Ausführungsform kommen bevorzugt zwei Formen von Borstenbündeln zum Einsatz, nämlich dreieckige Borstenbündel und rautenförmige Borstenbündel, welche jeweils auf Kreisringen angeordnet sind.

Dabei umfasst der innerste Kreis bevorzugt identische Borstenbündel, insbesondere rautenförmige Borstenbündeln (vorzugsweise mit dachförmiger Endfläche, wobei die Rautenachse den First bildet). Weiter vorzugsweise sind die Rauten mit einer Spitze gegen das Zentrum des Bürstenkopfs gerichtet.

Die Länge der einzelnen rautenförmigen Borstenbündel beträgt von 3 mm bis 6 mm vorzugsweise von 4 mm bis 5 mm.

Die Breite der einzelnen rautenförmigen Borstenbündel beträgt von 0.7 mm bis 2.5 mm vorzugsweise von 1.2 mm bis 2 mm.

Die Höhe der einzelnen rautenförmigen Borstenbündel an den Ecken (die Ecken innen und die Ecken aussen sind vorzugsweise auf derselben Höhe angeordnet) beträgt von 5 mm bis 8 mm vorzugsweise von 6 mm bis 7 mm.

Die Höhe der einzelnen rautenförmigen Borstenbündel am First beträgt von 7 mm bis 9 mm vorzugsweise von 7.5 mm bis 8 mm.

Die Fläche der einzelnen rautenförmigen Borstenbündel beträgt von 2 mm² bis 7 mm² vorzugsweise von 5 mm² bis 7 mm².

Die Anzahl der Borstenbündel beträgt von 3 bis 12 vorzugsweise von 5 bis 8. Der Durchmesser des Kreises auf welchem die Borstenbündel liegen (durch das Zentrum des Bündels hindurch) beträgt von 5.5 mm bis 8.5 mm vorzugsweise von 6.5 mm bis 7.5 mm.

Die Länge der Lücken zwischen den einzelnen Kreissegmenten beträgt von 0.5 mm bis 1.4 mm vorzugsweise von 0.7 mm bis 1.1 mm.

Der äussere Kreis umfasst vorzugsweise identische Borstenbündel in Form von Dreiecken. Jeweils eine Spitze der Dreiecke ist dabei gegen das Zentrum des Bürstenkopfs gerichtet.

Die dreieckförmigen Borstenbündel weisen einen gerade abfallenden Schnitt auf, d.h. die Fläche fällt gegen das Zentrum hin ab. Die dreieckförmigen Borstenbündel sind bevorzugt kleiner als die Borstenbündel des inneren Kreises.

Die Seitenlänge der Dreieckbasis beträgt von 1.5 mm bis 4 mm vorzugsweise von 2.2 mm bis 3.2 mm.

Die Seitenlänge der Dreieckschenkel beträgt jeweils von 2 mm bis 4 mm vorzugsweise von 2.5 mm bis 3.5 mm.

Die äussere Höhe der dreieckförmigen Borstenbündel beträgt von 6.5 mm bis 9.5 mm vorzugsweise von 7.5 mm bis 8.5 mm.

Die innere Höhe der dreieckförmigen Borstenbündel beträgt von 5 mm bis 8 mm vorzugsweise von 6 mm bis 7 mm.

Die Fläche der dreieckförmigen Borstenbündel beträgt von 1 mm² bis 5.5 mm² vorzugsweise von 3 mm² bis 4.5 mm².

Die Anzahl der dreieckförmigen Borstenbündel beträgt von 3 bis 12 vorzugsweise von 5 bis 8. Die Anzahl der dreieckförmigen Borstenbündel des äusseren Kreises ist vorzugsweise gleich gross wie die Anzahl der Borstenbündel des inneren Kreises, da die Borstenbündel vorzugsweise abwechselnd angeordnet sind.

Der Radius des Kreises auf welchem die Borstenbündel liegen (durch das Zentrum des Bündels) beträgt von 3 mm bis 7 mm vorzugsweise von 4 mm bis 5.5 mm.

Das Verhältnis der Fläche der kleinen Borstenbündel zu der Fläche der grossen dreieckförmigen Borstenbündel beträgt von 1:5 bis 5:7 vorzugsweise von 1:3 bis 4:7.

Bei der dritten bevorzugten Ausführungsform bestehen vorzugsweise alle Elemente des Borstenfelds auf dem Bürstenkopf aus zylindrischen und zugespitzten Borsten bzw. Borstenfilamenten. Grundsätzlich sind jedoch alle möglichen Filamentarten denkbar.

Der Durchmesser der Borsten bzw. Borstenfilamente beträgt bevorzugt von 0,075 mm bis 0,25 mm und die Querschnitts-Fläche bevorzugt von 0. 002 mm² bis 0.2 mm².

Vorzugsweise sind alle Borstenbündel gleich hoch, nämlich von 5 mm bis 9 mm vorzugsweise von 6 mm bis 8 mm. In einer alternativen Ausführungsform können sich die Borstenbündel-Höhen in Richtung des Zentrums des Bürstenkopfs absenken (d.h. analog zu den obigen Ausführungsbeispielen).

Bei dieser Ausführungsform kommen bevorzugt drei Formen von Borstenbündeln zum Einsatz, nämlich dreieckförmige Borstenbündel, erste kreissegmentförmige Borstenbündel und zweite kreissegmentförmige Borstenbündel. Die Borstenbündel sind dabei vorzugsweise auf Kreisringen angeordnet.

Der innerste Kreis umfasst bevorzugt identische Borstenbündel mit einheitlicher, gleichbleibender Höhe. Die vorzugsweise vier dreieckförmigen Borstenbündel bilden dabei eine im Wesentlichen quadratische Struktur mit Lücken dazwischen (wobei die Lücken etwa eine Kreuzform ausbilden). Statt bzw. an Stelle der vier dreieckförmigen Borstenbündel können auch (dritte) kreissegmentförmige Borstenbündel vorgesehen werden, welche kleiner sind als die ersten und zweiten kreissegmentförmigen Borstenbündel.

Die Seitenlänge der Dreieckbasis beträgt von 1.5 mm bis 3.5 mm vorzugsweise von 1.7 mm bis 2.7 mm.

Die Seitenlänge der Dreieckschenkel beträgt jeweils von 0.8 mm bis 2.5 mm vorzugsweise von 1.2 mm bis 2 mm.

Die Fläche der dreieckförmigen Borstenbündel beträgt von 1 mm² bis 4 mm² vorzugsweise von 2 mm² bis 3 mm².

Die Anzahl der dreieckförmigen Borstenbündel beträgt von 1 bis 8 vorzugsweise von 3 bis 5.

Der Durchmesser (durch das Zentrum des Bündels) beträgt von 1.5 mm bis 4 mm vorzugsweise von 2 mm bis 3 mm.

Die Länge der Lücken zwischen den dreieckförmigen Borstenbündeln beträgt von 0.5 mm bis 1.5 mm.

Der mittlere Kreis umfasst vorzugsweise identische Borstenbündel mit einheitlicher, gleichbleibender Höhe, in Form von ersten Kreissegmenten, welche einen unterbrochenen Kreisring bilden. Die ersten kreissegmentförmigen Borstenbündel sind dabei kleiner als die zweiten kreissegmentförmigen Borstenbündel des äusseren Kreises.

Die Breite der ersten kreissegmentförmigen Borstenbündel beträgt 0.3 mm bis 1.5 mm vorzugsweise von 0.5 mm bis 1 mm.

Die Fläche der ersten kreissegmentförmigen Borstenbündel beträgt von 1.5 mm² bis 5 mm² vorzugsweise von 2 mm² bis 3.5 mm².

Der abgedeckte Winkelbereich der ersten kreissegmentförmigen Borstenbündel beträgt von 25° bis 360° vorzugsweise von 50° bis 120°.

Die Anzahl der ersten kreissegmentförmigen Borstenbündel beträgt von 2 bis 12 vorzugsweise von 4 bis 8.

Der Radius der kreissegmentförmigen Borstenbündel beträgt von 5.5 mm bis 8.5 mm vorzugsweise von 6.5 mm bis 7.5 mm.

Die Länge der Lücke zwischen den ersten kreissegmentförmigen Borstenbündeln beträgt von 0.8 mm bis 2 mm vorzugsweise von 1 mm bis 1.5 mm.

Der äussere Kreis umfasst vorzugsweise identische Borstenbündel mit einheitlicher, gleichbleibender Höhe, in Form von zweiten Kreissegmenten, welche einen unterbrochenen Kreisring bilden. Die zweiten kreissegmentförmigen Borstenbündel sind dabei grösser als die ersten kreissegmentförmigen Borstenbündel des mittleren Kreises.

Die Breite der zweiten kreissegmentförmigen Borstenbündel beträgt 0.3 mm bis 1.5 mm vorzugsweise von 0.5 mm bis 1 mm (d.h. vorzugsweise gleiche Abmessungen wie beim mittleren Ring).

Die Fläche der zweiten kreissegmentförmigen Borstenbündel beträgt von 2 mm² bis 7 mm² vorzugsweise von 2.5 mm² bis 4 mm².

Der abgedeckte Winkelbereich der zweiten kreissegmentförmigen Borstenbündel beträgt von 25° bis 360° vorzugsweise von 50° bis 120°.

Die Anzahl der zweiten kreissegmentförmigen Borstenbündel beträgt von 2 bis 12 vorzugsweise von 6 bis 10.

Der Durchmesser (durch das Zentrum des Bürstenkopfs) beträgt von 8 mm bis 14 mm vorzugsweise von 10 mm bis 12 mm.

Die Länge der Lücke zwischen den zweiten kreissegmentförmigen Borstenbündeln beträgt von 0.8 mm bis 2.4 mm vorzugsweise von 1.2 mm bis 2 mm.

Das Verhältnis der Fläche der ersten kreisförmigen Borstenbündel zur Fläche der zweiten kreisförmigen Borstenbündel beträgt von 1:5 bis 4.5:5 vorzugsweise von 2:5 bis 4:5.

### Kurze Beschreibung der Zeichnungen

Weitere vorteilhafte Ausgestaltungen ergeben sich aus der nachfolgenden Beschreibung von Ausführungsbeispielen mit Hilfe der schematischen Zeichnungen. Insbesondere werden im Folgenden die Antriebseinheit, das erfindungsgemässe elektrische Zahnbürstenhandteil, das Herstellungsverfahren, die Aufsteckbürsten sowie elektrische Zahnbürsten unter Bezugnahme auf die beigefügten Zeichnungen anhand von Ausführungsbeispielen detaillierter beschrieben. Es zeigen:
- Fig. 1:: eine perspektivische Ansicht einer elektrischen Zahnbürste bzw. eines erfindungsgemässen Handteils mit einer montierten Aufsteckbürste in der Vorderansicht gemäss der oszillierenden Variante;
- Fig. 2:: eine Draufsicht auf das Handteil gemäss Fig. 1;
- Fig. 3:: eine Seitenansicht des Handteils gemäss Fig. 1;
- Fig. 4:: eine Unteransicht des Handteils gemäss Fig. 1;
- Fig. 5:: einen Längsschnitt entlang der Linie B - B in Fig. 2;
- Fig. 6:: einen Längsschnitt entlang der Linie A -A in Fig. 3;
- Fig. 7:: eine perspektivische Ansicht des Innenlebens des Handteils von vorne;
- Fig. 8:: eine perspektivische Ansicht des Innenlebens des Handteils von hinten;
- Fig. 9:: eine erste Seitenansicht des Innenlebens des Handteils gemäss Fig. 7;
- Fig. 10:: eine zweite Seitenansicht des Innenlebens des Handteils gemäss Fig. 7;
- Fig. 11a:: eine Draufsicht auf das Innenleben des Handteils;
- Fig. 11b:: eine Unteransicht des Innenlebens des Handteils;
- Fig. 12a:: eine Detailansicht der Antriebseinheit
- Fig. 12b:: eine Detailansicht des hinteren Endes der Rahmeneinheit mit aufgebrachtem Spulenträger;
- Fig. 13:: eine Explosionsansicht des Innenlebens des Handteils von oben;
- Fig. 14:: eine Explosionsansicht des Innenlebens des Handteils von unten;
- Fig.15:: eine perspektivische Ansicht eines Exzenters von einem Getriebe;
- Fig.16:: eine perspektivische Ansicht einer Pleuelstange von einem Getriebe;
- Fig.17:: eine perspektivische Ansicht eines Gelenkstücks mit Gelenkzylinder von einem Getriebe;
- Fig.18:: eine perspektivische Ansicht einer elektrischen Zahnbürste bzw. eines erfindungsgemässen Handteils mit einer montierten Aufsteckbürste in der Vorderansicht gemäss der Sonic-Variante
- Fig. 19:: Draufsicht auf das Handteil gemäss Fig. 18;
- Fig. 20:: Seitenansicht des Handteils gemäss Fig. 18;
- Fig. 21:: einen Längsschnitt entlang der Linie B - B in Fig. 19;
- Fig. 22:: einen Längsschnitt entlang der Linie A - A in Fig. 20;
- Fig. 23:: eine Detailansicht eines Getriebes;
- Fig. 24:: einer Explosionsansicht des Innenlebens des Handteils von oben;
- Fig. 25:: eine Explosionsansicht des Innenlebens des Handteils von unten;
- Fig. 26:: eine perspektivische Ansicht einer ersten Ausführungsform eines Bürstenkopfs;
- Fig. 27:: eine Seitenansicht des Bürstenkopfs gemäss Fig. 26;
- Fig. 28:: eine Draufsicht auf den Bürstenkopf gemäss Fig. 26;
- Fig. 29:: eine perspektivische Ansicht einer zweiten Ausführungsform eines Bürstenkopfs;
- Fig. 30:: eine Seitenansicht des Bürstenkopfs gemäss Fig. 29;
- Fig. 31:: eine Draufsicht auf den Bürstenkopf gemäss Fig. 29;
- Fig. 32:: eine perspektivische Ansicht einer dritten Ausführungsform eines Bürstenkopfs;
- Fig. 33:: eine Seitenansicht des Bürstenkopfs gemäss Fig. 32;
- Fig. 34:: eine Draufsicht auf den Bürstenkopf gemäss Fig. 32;
- Fig. 35:: eine perspektivische Ansicht einer weiteren Ausgestaltung des Innenlebens des Handteils von vorne;
- Fig. 36:: eine perspektivische Ansicht einer weiteren Ausgestaltung aus Fig. 35 des Innenlebens des Handteils von hinten;
- Fig. 37:: eine Seitenansicht des Innenlebens des Handteils gemäss Fig. 35;
- Fig. 38a:: eine Detailansicht der Antriebseinheit aus Fig. 35;
- Fig. 38b:: eine Detailansicht des hinteren Endes der Rahmeneinheit aus Fig. 35 mit aufgebrachtem Spulenträger;
- Fig. 39:: eine Explosionsansicht des Innenlebens des Handteils aus Fig. 35 von oben;
- Fig. 40:: eine Explosionsansicht des Innenlebens des Handteils aus Fig. 35 von unten;
- Fig. 41a:: eine perspektivische Ansicht eines Exzenters von einem Getriebe in einer anderen Ausführungsform von vorne;
- Fig. 41b:: eine perspektivische Ansicht eines Exzenters von einem Getriebe in einer Ausführungsform aus Fig. 40a von hinten;
- Fig. 42a:: eine perspektivische Ansicht eines Exzenters von einem Getriebe in einer weiteren anderen Ausführungsform von vorne;
- Fig. 42b:: eine perspektivische Ansicht eines Exzenters von einem Getriebe in einer Ausführungsform aus Fig. 41a von hinten;
- Fig. 43: eine Hülse für den erfindungsgemässen Exzenterzapfen, den Gelenkzapfen oder aber die erfindungsgemässe Pleuelstange bzw. deren Lager.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts", "vorne", "hinten" oder ähnliche werden zur Beschreibung der Anordnung bezeichneter Teile zueinander, der Bewegung bezeichneter Teile zueinander und der Richtungen hin zum oder weg vom geometrischen Mittelpunkt der Offenbarung sowie benannter Teile derselben wie in den Figuren dargestellt verwendet. Diese räumlichen Relativangaben umfassen auch andere Positionen und Ausrichtungen als die in den Figuren dargestellten. Zum Beispiel wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

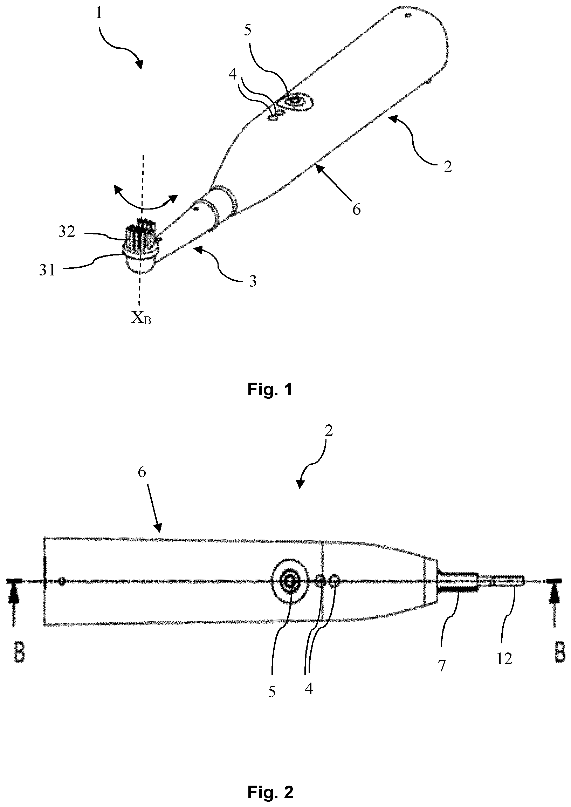

In den Fig. 1 bis 17 wird eine elektrische Zahnbürste 1 in Übereinstimmung mit der vorliegenden Offenbarung für insbesondere die oszillierende Variante veranschaulicht.

Die in Fig. 1 dargestellte elektrische Zahnbürste 1 umfasst ein elektrisches Zahnbürstenhandteil 2 sowie eine darauf aufgebrachte Aufsteckbürste 3. Das elektrische Zahnbürstenhandteil 1 umfasst einen Ein-/Ausschalter 5 sowie Signalelemente 4, wie etwa LED-Lämpchen. Die Aufsteckbürste 3 umfasst einen Bürstenkopf 31 mit mehreren darauf angeordneten Borstenbündeln 32, welche zusammen das Borstenfeld bilden. Der Bürstenkopf 31 ist hier für die oszillierende Variante rund ausgebildet. Der Bürstenkopf 31 ist bei der oszillierenden Variante so ausgestaltet, dass er eine periodische Hin- und Her-Drehbewegung um die Bürstenkopfachse X_{B} ausführt (vgl. Doppelpfeil). Die Aufsteckbürste 3 ist dabei fix gegenüber dem elektrischen Zahnbürstenhandteil montiert.

Die Fig. 2 bis 4 zeigen das zugehörige elektrische Zahnbürstenhandteil 2 ohne Aufsteckbürste 3 von oben, von der Seite sowie von unten her. Am vorderen Ende des elektrischen Zahnbürstenhandteils 1 ist ein Schlüsselelement 7 aufgebracht, welches als Schnittstelle bzw. als Kopplungsstruktur für die Aufsteckbürste 3 dient.

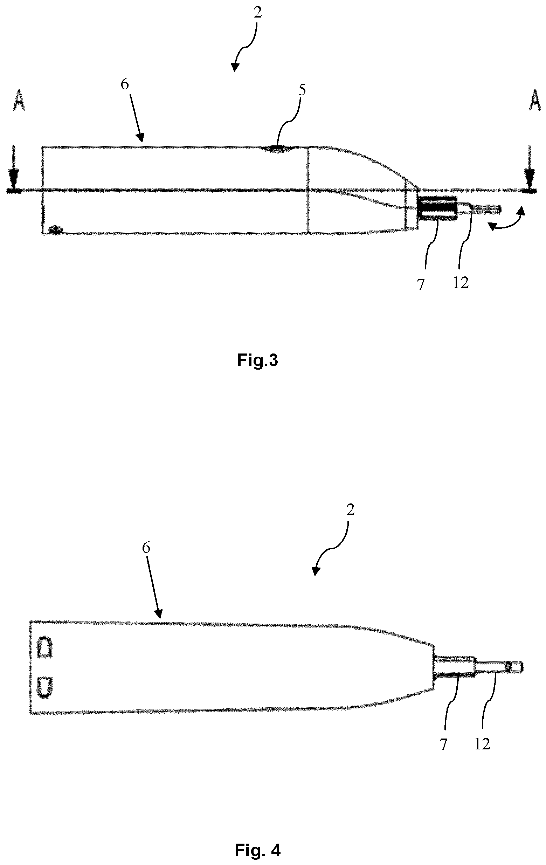

Die Aufsteckbürste 3 ist hier fix gegenüber dem Handteil 2 und fix gegenüber der Antriebswelle 12 angeordnet. Die Antriebswelle 12 führt aus ihrer in Fig. 3 gezeigten Grundstellung eine periodisch hin- und her-schwenkende Bewegung aus (vgl. Doppelpfeil), welche ggf. von einer entsprechenden Umwandlungseinheit in der entsprechenden Aufsteckbürste in die vorgenannte Hin- und Her-Drehbewegung für den Bürstenkopf einer oszillierenden Aufsteckbürste umgewandelt werden kann.

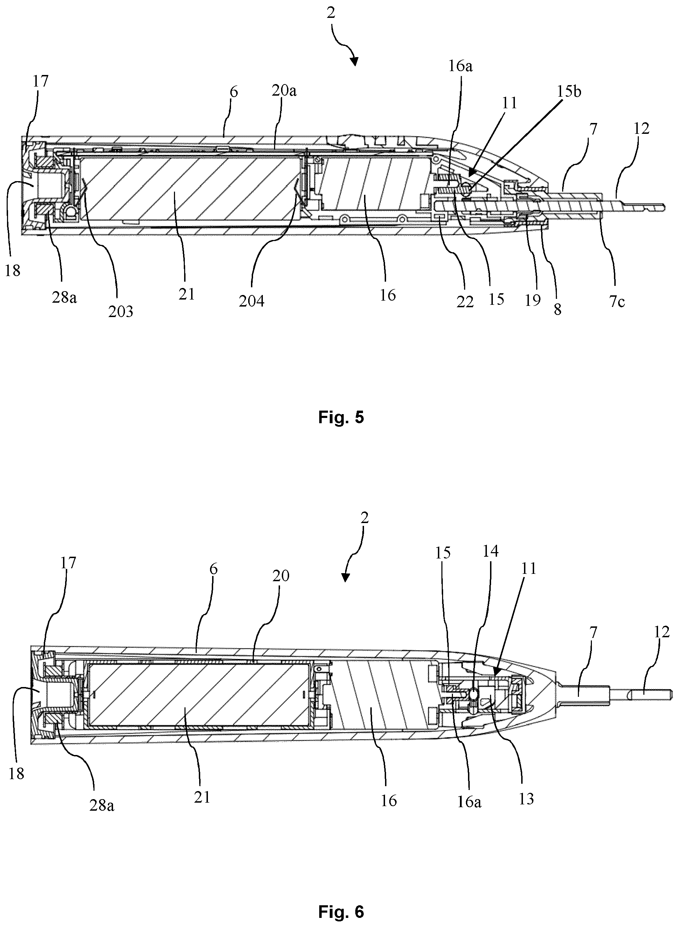

Die Fig. 5 zeigt einen Längsschnitt des elektrischen Zahnbürstenhandteils 2 entlang der Linie B - B in Fig. 2. Dieses umfasst zunächst das Gehäuse 6 sowie an seinem rückwärtigen Ende einen Gehäusedeckel 17, welcher das Gehäuse 6 abschliesst. Der Gehäusedeckel 17 weist eine Öffnung 18 in Form eines Sacklochs zum Einbringen eines Ferritkerns eines entsprechenden Ladegeräts auf. Eine auf einem Spulenträger angeordnete Ladespule 28a umgibt insofern die Öffnung 18.

Aus dem vorderen Ende des Gehäuses 6 ragt das Schlüsselelement 7 hervor, welches mit seinem hinteren Endbereich innerhalb des Gehäuses 6 gelagert ist. Über das Schlüsselelement 7 ist ein Dicht-/Dämpfelement 8 gestülpt, welches für eine Abdichtung zwischen dem Schlüsselelement 7 und dem Gehäuse 6 sorgt sowie für eine gedämpfte Lagerung des Schlüsselelements 7 innerhalb des Gehäuses 6. Weiter sorgt dieses für eine gewisse gedämpfte Lagerung der Rahmeneinheit, von der hier die erste halbschalenartige Hälfte 20a zu sehen ist, im Gehäuse.

Im vorderen Bereich des Gehäuses 6 ist auch das Getriebe 11 angeordnet, welches die Antriebswelle 12 antreibt. Die Antriebswelle 12 ist mit ihrem hinteren Ende in einer ersten Lagereinrichtung 22 gelagert und im Bereich ihres vorderen Endes in einer zweiten Lagereinrichtung 7c, welche vom vorderen Ende des Schlüsselelements 7 gebildet wird. Durch die relativ weit auseinanderliegenden Lagereinrichtungen 22 und 7c kann ein besonders ruhiger und stabiler Lauf der Antriebswelle 12 gewährleistet werden.

Im Schlüsselelement 7, das heisst in der Ausnehmung 7d des Schlüsselelements 7, ist als Dichtungselement eine Balgdichtung 19 angeordnet, welche konfiguriert ist das Gehäuse gegen die Antriebswelle 12 abzudichten. Die Balgdichtung 19 ist rotationssymmetrisch aufgebaut. Ein ringförmiges Element der Balgdichtung, das Innen ausgebildet ist, liegt an der Antriebswelle 12 an. Ein ringförmiges Element der Balgdichtung, das Aussen ausgebildet ist, liegt am Schlüsselelement 7 an. Die Sicherung der Position der Balgdichtung erfolgt in Längsrichtung der Antriebswelle 12 einmal vorne mittels eines Anschlags im Schlüsselelement und einmal hinten mittels eines Anschlags an der Rahmeneinheit.

Unmittelbar hinter dem Getriebe 11 ist der Elektromotor 16 angeordnet, welcher mittels seiner Motorwelle 16a das Getriebe 11 antreibt. Auf die Motorwelle 16a ist (direkt) ein Exzenter 15 aufgebracht. Hinter dem Elektromotor 16 ist ein Akku 21 angeordnet, welcher zwischen einem vorderen Federblech 204 und einem hinteren Federblech 203 klemmend gehalten wird. In der Fig. 5 sind die Federbleche 203, 204 in ihrer entlasteten Lage gezeigt - es ist durch die Darstellung des Akku 21 sichtbar, um wieviel die Federbleche 203, 204 zurückgebogen werden, um die Klemmung zu realisieren.

In Fig. 6 wird ein Längsschnitt des elektrischen Zahnbürstenhandteils 2 entlang der Linie A - A in Fig. 3 veranschaulicht. Man erkennt im Wesentlichen dieselben Bauteile wie in Fig. 5, allerdings ist hier die auf den Exzenter 15 und auf das Gelenkstück 13 der Antriebswelle 12 aufgebrachte Pleuelstange 14 gut zu sehen.

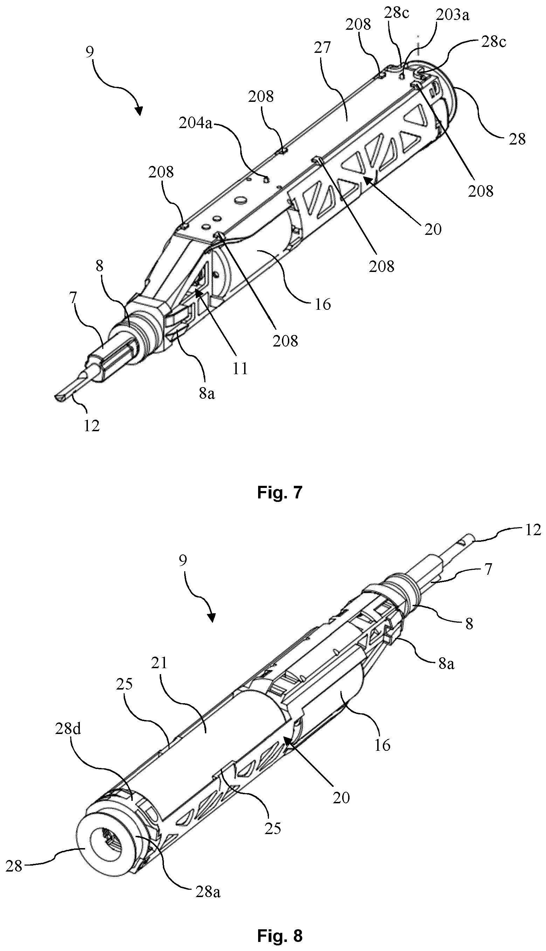

Die beiden Ansichten gemäss Fig. 7 und 8 zeigen im Wesentlichen das Innenleben des Handteils 2 ohne das Gehäuse 6, welches in der vorliegend montierten Form auch als Einschubeinheit 9 bezeichnet wird. Die Rahmeneinheit 20 stellt dabei eine Art Chassis dar, an welchem sämtliche Komponenten bzw. Bauteile befestigt sind, um bei der Endmontage ein sicheres und zielgerichtetes Einführen in das Gehäuse 6 sicherzustellen.

Oben auf der Rahmeneinheit 20 ist eine Printplatte 27 aufgebracht. Diese weist Öffnungen auf, durch welche hindurch ein erstes Verbindungstück 204b des ersten Federblechs 204 sowie ein erstes Verbindungsstück 203b des hinteren Federblechs 203 ragen, welche mit der Printplatte 27 verlötet werden. Hierdurch wird die elektrische Verbindung mit den elektrischen Leitungen auf der Printplatte 27 hergestellt. Zudem dienen die Verbindungsstücke 203b und 204b als Orientierungshilfen bei der Montage der Printplatte 27. Die Printplatte wird vorzugsweise in eine Vertiefung der Rahmeneinheit eingesetzt und mittel Klemmarmen 208 gehalten. Am rückwärtigen Ende der Einschubeinheit 9 erkennt man den Spulenträger 28.

Der Akku 21 wird von unten her in die Rahmeneinheit 20 eingebracht, wie in Fig. 8 ersichtlich, und mittels Rasteinrichtungen bzw. Vorspannflächen 25 sowie der Federbleche 203, 204 gehalten. Auch der Elektromotor 16 wird form-/kraftschlüssig von der Rahmeneinheit 20 aufgenommen. Von der Vorderseite der Rahmeneinheit ragen weiterhin zwei Schnappelemente 201 ab, welche mit korrespondierenden Rastvorrichtungen im Schlüsselelement 7 verrasten (hier vom Dicht-/Dämpfelement 8 verdeckt). Das Dicht-/Dämpfelement 8 weist Führungsschienen 8a auf, welche beim Einführen/Positionieren der Einschubeinheit 9 ins Handteils 2 helfen und ggf. mit entsprechenden Schienen an der Innenseite des Gehäuses 6 zusammenwirken.

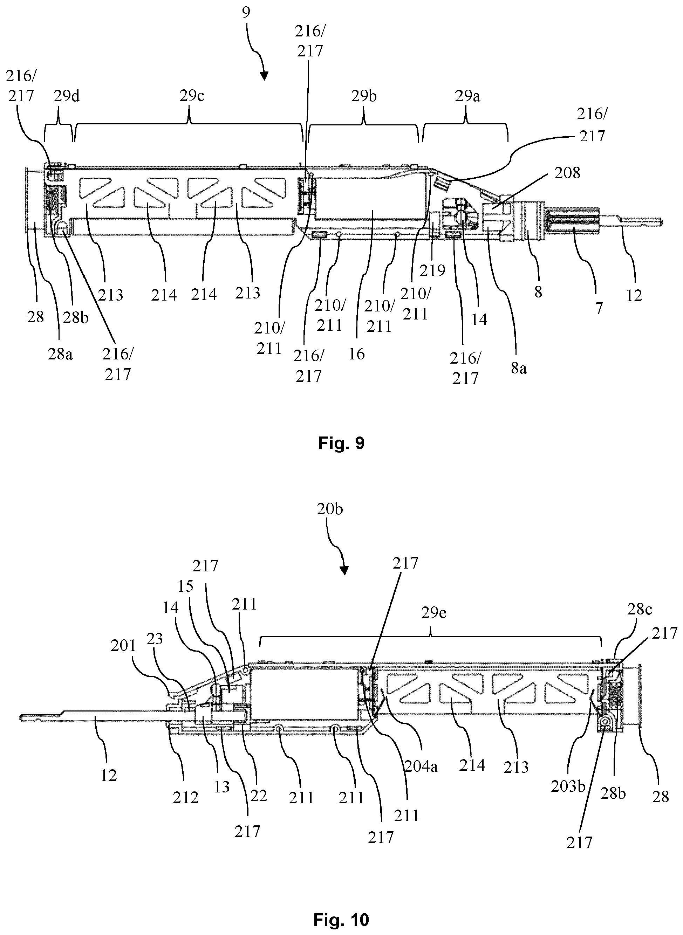

Anhand der Fig. 9 und 10 wird zunächst verdeutlicht, dass die Rahmeneinheit 20 aus zwei halbschalenartigen Hälften 20a und 20b gebildet ist. In Fig. 9 wird insoweit die Einschubeinheit 9 von der Seite gezeigt und in Fig. 10 wird die zweite halbschalenartige Hälfte 20b der Rahmeneinheit 20 (die erste halbschalenartige Hälfte 20a wurde entfernt) von der Seite gezeigt.

Die halbschalenartigen Hälften 20a, 20b der Rahmeneinheit 20 verfügen über mehrere Zonen für die Aufnahme von Bauteilen des Innenlebens. In Fig. 9 erkennt man, vom hinteren Ende her gesehen, zunächst die Spulenzone 29d, die Akkuzone 29c, die Motorzone 29b sowie die Getriebezone 29a der Rahmeneinheit 20. Beide halbschalenartigen Hälften der Rahmeneinheit 20 weisen eine im Wesentlichen korrespondierende Ausgestaltung beziehungsweise im Wesentlichen gespiegelte Ausgestaltung auf.

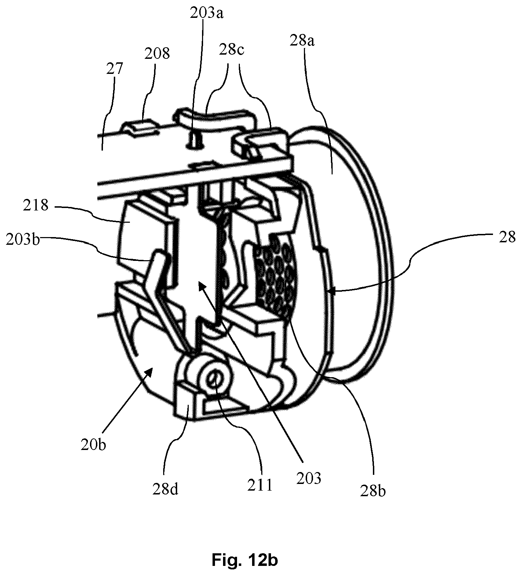

In der Spulenzone 29d wird der Spulenträger 28 auf die Rahmeneinheit 20 aufgesteckt. Der Spulenträger 28 umfasst ein Längenausgleichsmittel 28b, welches im montierten Zustand die Rahmeneinheit 20 gegenüber dem Gehäusedeckel 17 federnd abstützt. Das Längenausgleichsmittel 28b ist dabei in Form eines elastischen Abschnitts des Spulenträgers 28 ausgebildet, auf welcher einen Längenausgleich zwischen Rahmeneinheit 20 und Spulenträger 28 erreicht werden sowie eine schwimmende Lagerung der Rahmeneinheit 20 innerhalb des Gehäuses 6. Das Längenausgleichsmittel 28b kann dabei insbesondere auch komprimierbar ausgebildet sein. Zudem umfasst der Spulenträger 28 obere und untere Aufschnappmittel 28c, 28d (vgl. auch Fig. 12b), mit denen er (zusätzlich) auf das rückwärtige Ende der Rahmeneinheit 20 aufschnappt, um so einen noch besseren Halt an der Rahmeneinheit 20 zu gewährleisten.

An die Spulenzone 29d schliesst sich die, hier leere, Akkuzone 29c an. In der Akkuzone 29c sind in die Seitenwände der Rahmeneinheit mehrere Durchbrüche 214 und Verbindungsstege 213 eingebracht, welche zusammen eine fachwerkartige Struktur ergeben. Auf diese Weise kann einerseits Material eingespart werden, andererseits verleiht die fachwerkartige Struktur der Akkuzone 29c auch vorteilhafte Flexibilitätseigenschaften, welche etwa für die Aufnahme sowie den Halt des Akkus 21 massgeblich sind. Die Durchbrüche 214 und die Verbindungsstege 213 sind dabei vorzugsweise im Wesentlichen symmetrisch zueinander angeordnet.

An die Akkuzone 29c schliesst sich die Motorzone 29b an. In der Motorzone 29b ist der Elektromotor 16 aufgenommen. Zudem sind im Bereich der Motorzone 29b Führungszylinder 210 sowie korrespondierende Sacklöcher 211 angeordnet, welche insbesondere der Positionierung der beiden halbschalenartigen Hälften 20a, 20b der Rahmeneinheit 20 dienen. Des Weiteren sind im Bereich der Motorzone 29b Schnappvorrichtungen 216 sowie korrespondierende Einschnappöffnungen 217 vorgesehen, welche für einen sicheren Halt der beiden halbschalenartigen Hälften 20a, 20b nach der Montage sorgen. Die Schnappvorrichtungen 216 und die Einschnappöffnungen 217 sowie die Führungszylinder 210 und die Sacklöcher 211 sind jeweils oberhalb und unterhalb des Elektromotors 16 an der Rahmeneinheit 20 angeordnet und dabei vorzugsweise im Wesentlichen gleichmässig verteilt, um optimale Führungs- und Festigkeitseigenschaften für die Rahmeneinheit 20 bereitzustellen. Weiter sind Schnappvorrichtungen 216 und die Einschnappöffnungen 217 im Bereich der Getriebezone 29a und der Spulenzone 29d angeordnet. In der Spulenzone 29d sind weiter Führungszylinder 210 sowie korrespondierende Sacklöcher 211 angeordnet.

An die Motorzone 29b schliesst sich die Getriebezone 29a an. In der Getriebezone 29a sind der Exzenter 15, die Pleuelstange 14 sowie der hintere Teil der Antriebswelle 12 mit dem aufgespritzten Gelenkstück 13 angeordnet. Das hintere Ende der Antriebswelle 12 ist in einer ersten Lagereinrichtung 22 aufgenommen, welche vorzugsweise als Gleitlager ausgebildet ist. In der vom Elektromotor 16 abgewandten Seite des Gelenkstücks 13 ist weiterhin ein Spannarm 23 vorgesehen, welcher auf die Antriebswelle 12 drückt, um ggf. ein Rattern der Antriebswelle 12 zu unterbinden. Die Getriebezone 29a wird vorne abgeschlossen durch den Führungszapfen 212 der Rahmeneinheit 20. Oberhalb des Führungszapfens 212 befindet sich das Schnappelement 201 für das Schlüsselelement 7. Über das Schlüsselelement 7 wird regelmässig vor dem Einschieben in das Gehäuse noch das Dicht-/Dämpfelement 8 (vgl. Fig. 9) aufgebracht bzw. übergestülpt.

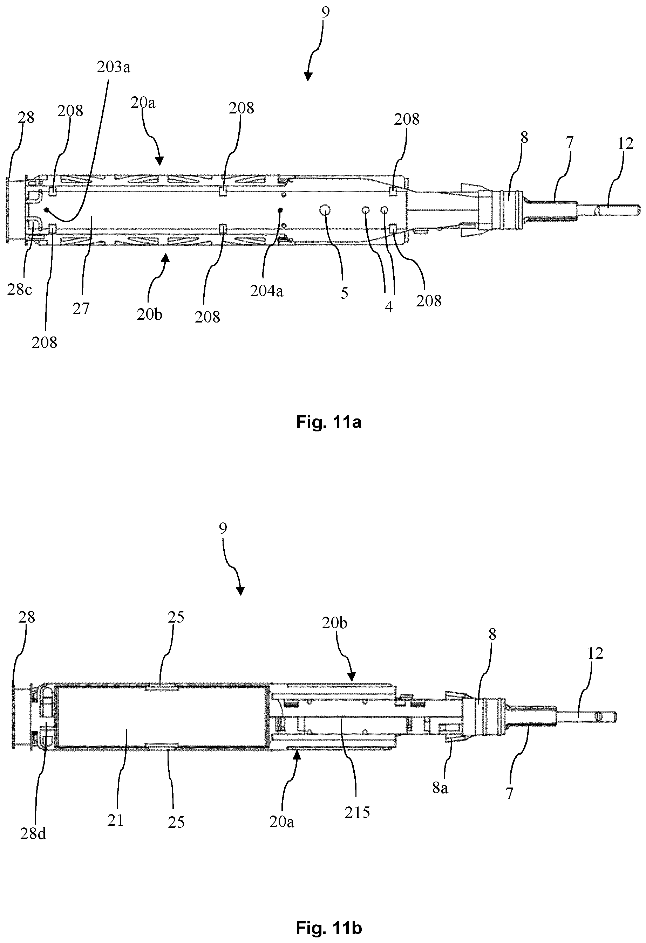

Die Fig. 11 a und 11b entsprechen im Wesentlichen den vorbeschriebenen Fig. 7 und 8. In Fig. 11a wird noch einmal die auf beiden Seiten der Rahmeneinheit 20 bevorzugte symmetrische Ausgestaltung der Fachwerkstruktur in der Akkuzone 29c veranschaulicht. Weiter sind die Klemmarme 208 für das Halten der Printplatte 27 gut sichtbar. Fig. 11b zeigt die untere Anstosslinie 215 der ersten halbschalenartigen Hälfte 20a und der zweiten halbschalenartigen Hälfte 20b im Bereich der Motorzone 29b und der Getriebezone 29a. Weiter sind die Vorspannflächen 25 für das Halten des Akkus 21 gut ersichtlich.

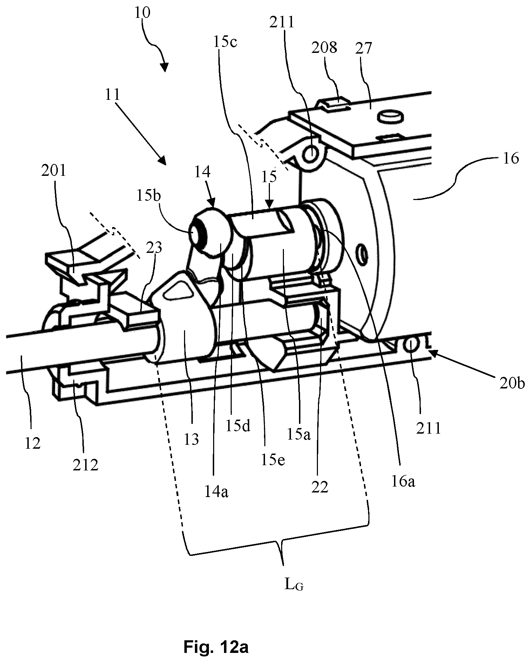

Die Fig. 12a zeigt insbesondere eine Detailansicht der Antriebseinheit 10 mit dem Getriebe 11 und dem Motor 16 gemäss der vorliegenden Offenbarung. Das Getriebe 11 umfasst die Antriebswelle 12 mit dem aufgespritzten Gelenkstück 13, die Pleuelstange 14 und den Exzenter 15. Der Grundkörper 15a des Exzenters 15 ist dabei mit seinem rückwärtigen bzw. motorseitigen Ende auf die Motorwelle 16a des Elektromotors 16 aufgebracht bzw. aufgepresst. Die Motorwelle 11a und die Achse des Grundkörpers fallen dabei zusammen. Der Grundkörper 15a des Exzenters 15 umfasst vorzugsweise zwei Ausnehmungen 15c, von denen hier nur eine zu sehen ist. Die Ausnehmungen 15c dienen zur Erzeugung einer optimierten Unwucht.

An seiner Stirnseite umfasst der Grundkörper 15a des Exzenters 15 einen Absatz 15e sowie entsprechend eine podestartige Erhebung 15d. Diese Ausgestaltung der Stirnfläche des Exzentergrundkörpers 15a dient insbesondere dazu, den Exzenter 15 und die Pleuelstange 14 mit so wenig Zwischenraum wie möglich betreiben zu können. Der Absatz 15e ist dabei so dimensioniert, dass er in der Bewegung des Getriebes 11 der Exzentergrundkörper 15a gerade am unteren, hier nicht zu sehenden, Lager 14b der Pleuelstange 14 vorbeikommt, ohne es zu berühren. Das obere Lager 14a der Pleuelstange 14 ist auf den Exzenterzapfen 15b aufgesteckt. Die Lager 14a, 14b der Pleuelstange 14 sind vorzugsweise als Gleitlager direkt im Körper der Pleuelstange 14 ausgestaltet. Das nicht gezeigte untere Lager 14b der Pleuelstange 14 ist auf einen dem Exzenterzapfen 15b entsprechenden Gelenkzapfen 13a des Gelenkstücks 13 aufgesteckt. Hierdurch kann eine besonders kompakte und effiziente Bauweise des Getriebes 11 erreicht werden.

Die einzelnen Teile des Getriebes 11 sind dabei lediglich ineinandergesteckt mit geringstmöglichen Abständen und Toleranzen dazwischen. Das hintere Ende der Antriebswelle 12 ist in einer ersten Lagereinrichtung 22 der zweiten halbschalenartigen Hälfte 20b gelagert. Die erste Lagereinrichtung 22 ist dabei vorzugsweise als Gleitlager ausgebildet und wird von der ersten halbschalenartigen Hälfte 20a bei der Montage an der zweiten halbschalenartigen Hälfte 20b verschlossen mittels einer korrespondierenden Abdeckung 219 (vgl. Fig. 9). Das Gelenkstück 13 liegt vorzugsweise an dem Spannarm 23 an, in welchen die Antriebswelle 12 bei der Montage eingeklickt wird und welcher von oben auf die Antriebswelle 12 drückt, um ein Rattern zu unterbinden und einen besonders ruhigen Lauf zu ermöglichen. Die Antriebswelle 12 wird durch den von beiden halbschalenartigen Hälften 20a, 20b gebildeten Führungszapfen 212 aus der Rahmeneinheit 20 hinausgeführt.

Die Länge L_{G} des Getriebes 11 vom rückwärtigen bzw. motorseitigen Ende des Exzentergrundkörpers 15a bis zum vorderen Ende der Fixierung des Gelenkstücks 13 an der Antriebswelle 12 beträgt von 8 mm bis 20 mm vorzugsweise von 11 mm bis 17 mm.

In Fig. 12b wird eine Detailansicht der Anordnung des Spulenträgers 28 am rückwärtigen Ende der Rahmeneinheit 20 veranschaulicht. Auf den Spulenträger 28 ist zunächst die Ladespule 28a aufgewickelt. Der Spulenträger 28 umfasst obere Aufschnappmittel 28c und untere Aufschnappmittel 28d mit welchen ein sicherer Halt an der Rahmeneinheit 20 bzw. der Printplatte 27 erreicht wird. Die oberen Aufschnappmittel 28c sind dabei in Form von zwei nach aussen gebogenen Flexarmen ausgebildet, welche auf die Printplatte 27 aufschnappen, und das untere Aufschnappmittel 28d in Form eines Rasthakens, welches hier eines der Sacklöcher 211 an der zweiten halbschalenartigen Hälfte 20b hintergreift.

Der Spulenträger 28 umfasst weiterhin ein Längenausgleichsmittel 28b in Form eines elastisch ausgestalteten Abschnitts, welcher sich in Richtung des hinteren Federblechs 203 erstreckt, dieses aber nicht berührt. Zwischen dem hinteren Federblech 203 und dem elastischen Abschnitt des Spulenträgers ist regelmässig ein Steg 221 der Rahmeneinheit vorgesehen. Das elastische Abschnitt bzw. das Längenausgleichsmittel 28b stützt somit die Rahmeneinheit 20 gegenüber dem Gehäusedeckel 17 (vgl. Fig. 5) ab und sorgt für einen Längenausgleich sowie für eine schwimmende Lagerung der Rahmeneinheit 20 innerhalb des Gehäuses.

Das hintere Federstück 203 ist in eine korrespondierende seitliche Aufnahme der zweiten halbschalenartigen Hälfte 20b eingesteckt und wird von einem Haltearm 218 der zweiten halbschalenartigen Hälfte 20b klemmend in Position gehalten. Die erste halbschalenartige Hälfte 20a weist eine korrespondierende Ausgestaltung zur Aufnahme des hinteren Federblechs 203 auf. Die Montage des vorderen Federblechs 204 hinter der Motorzone 29b erfolgt auf analoge Weise (vgl. etwa Fig. 10).

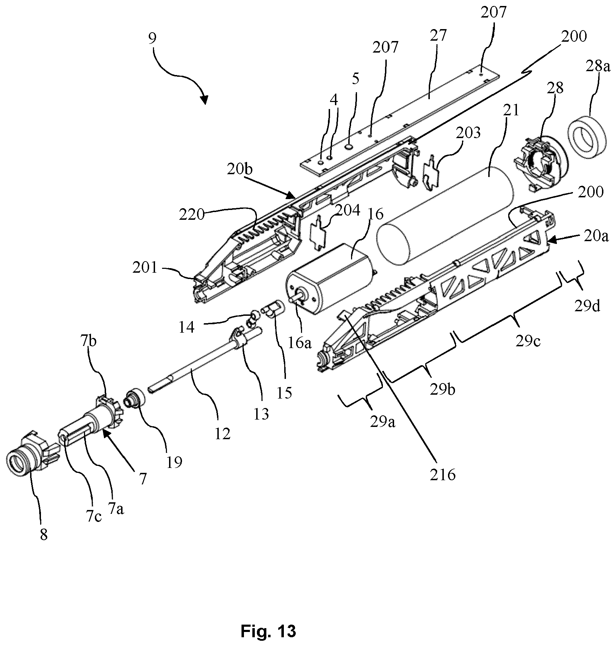

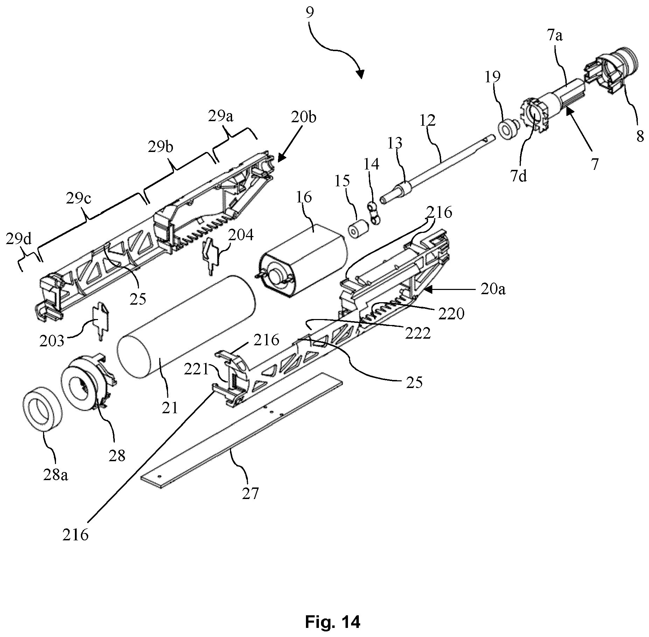

In den Fig. 13 und 14 werden nochmals sämtliche wesentlichen Bauteile des Innenlebens bzw. einer Einschubeinheit 9 für ein elektrisches Zahnbürstenhandteil 2 in jeweils einer Explosionsansicht von oben sowie einer Explosionsansicht von unten illustriert.

Anhand der Fig. 13 und 14 lässt sich (auch in Verbindung mit den vorherigen Fig. 5 bis 12b) anschaulich die Montage der Einschubeinheit 9 für das elektrische Zahnbürstenhandteil 2 veranschaulichen.

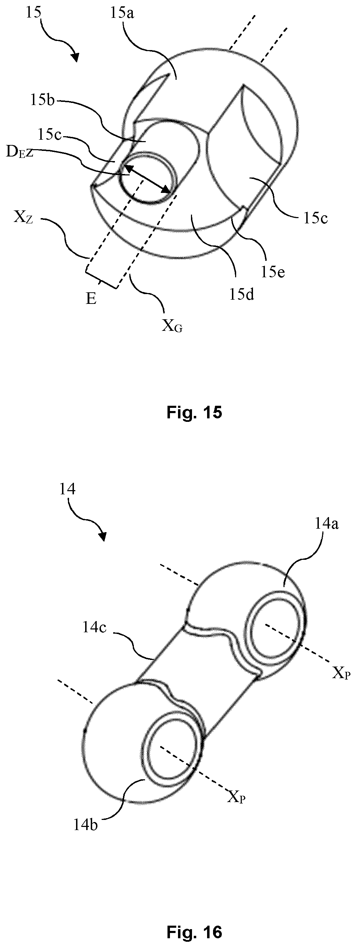

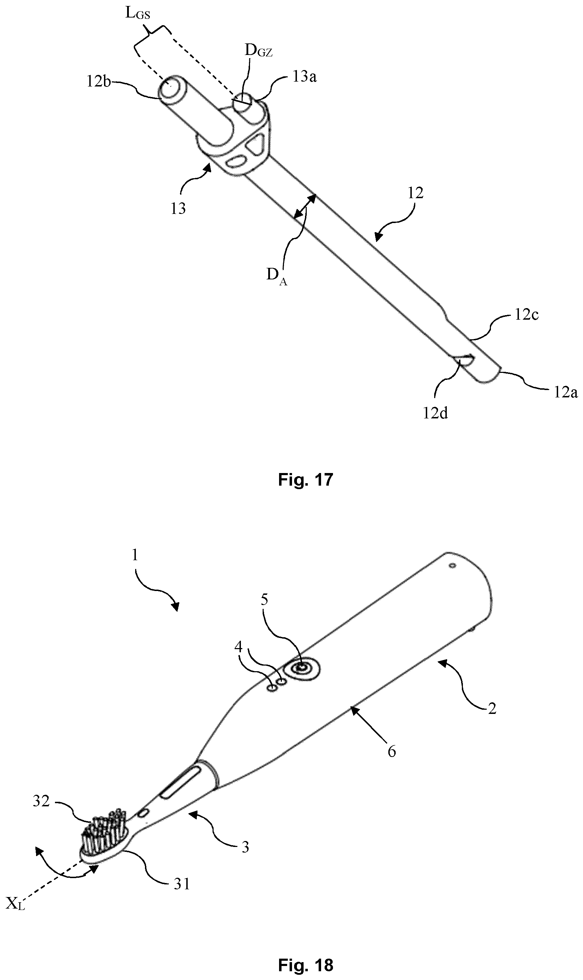

Zunächst wird die zweite halbschalenartige Hälfte 20b der Rahmeneinheit 20 bereitgelegt. Nun wird die Antriebseinheit 10 mit dem Elektromotor 16 und dem Getriebe 11 montiert, wobei der Elektromotor 16 mit dem Getriebe 11 verbunden wird und der Elektromotor 16 in der Motorzone 29b und das Getriebe 11 in einer Getriebezone 29a der zweiten halbschalenartigen Hälfte 20b positioniert und dort verrastet werden. Hierbei wird der Exzenter 15 auf eine Motorwelle 16a des Elektromotors 16 aufgepresst und die Pleuelstange 14 wird auf den Exzenter 15 bzw. den Exzenterzapfen 15b sowie auf das auf die Antriebswelle 12 aufgespritzte Gelenkstück 13 bzw. den Gelenkzapfen 13a aufgesteckt (vgl. auch Fig. 15 und 17). Die Antriebswelle 12 verrastet dabei mit dem Spannarm 23 und wird in der ersten Lagereinrichtung 22 gelagert.

Nunmehr werden das hintere Federblech 203 und das vordere Federblech 204 von der Seite her in entsprechende Aufnahmen der zweiten halbschalenartigen Hälfte 20b eingesteckt, wobei das hintere und das vordere Federblech 203, 204 vorzugsweise jeweils von Haltearmen 218 in Position gehalten werden.

Nun wird die Printplatte 27 in der Printzone 29e der zweiten halbschalenartigen Hälfte 20b montiert, wobei jeweils zumindest ein erstes Verbindungsstück 203a des hinteren Federblechs 203 und ein erstes Verbindungsstück 204a des vorderen Federblechs 204 durch korrespondierende Ausnehmungen 207 in der Printplatte 27 geführt werden und die Printplatte 27 vorzugsweise in einer (beidseitigen) Vertiefung 200 der Printzone 29e aufgenommen wird und dort ggf. verrastet. An der Oberseite der Motorzone 29b sind beidseitig Stützstreben 220 vorgesehen, welche die Printplatte 27 im vorderen Bereich abstützen, wo insbesondere der Ein-/Aus-Schalter 5 angeordnet ist. Auf diese Weise kann der Druck der von einem Benutzer auf den Ein-/Aus-Schalter 5 ausgeübt wird besser aufgenommen werden. Die Stützstreben 220 bilden dabei eine Art Boden der Vertiefung 200 für die Printplatte 27. In der Akkuzone 29c sind regelmässig keine Stützstreben 220 vorgesehen. Entsprechende Ausgestaltungen wären grundsätzlich aber denkbar.

Anschliessend erfolgt die Montage der ersten halbschalenartigen Hälfte 20a an der zweiten halbschalenartigen Hälfte 20b, wobei die beiden halbschalenartigen Hälften der Rahmeneinheit 20 vorzugsweise an mehreren Stellen ineinander gesteckt und/oder geklickt werden (vgl. insoweit die Führungszylinder 210 sowie die korrespondierenden Sacklöcher 211 sowie die Schnappvorrichtungen 216 und die korrespondierenden Einschnappöffnungen 217 in den Fig. 9 und 10).

Nun erfolgt die Montage des Schlüsselelements 7 an der zusammengesetzten Rahmeneinheit 20, wobei das Schlüsselelement 7 über die Antriebswelle 12 aufgeschoben wird und vorzugsweise mit den Schnappelementen 201 der Rahmeneinheit 20 verrastet. Zuvor wird üblicherweise aber noch eine Balgdichtung 19 (insbesondere bevorzugt für die oszillierende Variante) in den Innengeometriebereich 7d des Schlüsselelements 7 eingebracht. Anschliessend wird noch das Dicht-/Dämpfelement 8 an der Rahmeneinheit 20 montiert, wobei das Dicht-/Dämpfelement 8 über das Schlüsselelement 7 aufgeschoben wird und vorzugsweise vorne auf die Rahmeneinheit 20 aufschnappt.

Dann wird der Spulenträger 28 mit einer Ladespule 28a an der zusammengesetzten Rahmeneinheit 20 montiert, wobei der Spulenträger 28 auf den hinteren Endbereich der Rahmeneinheit 20 aufgesteckt bzw. aufgeschnappt wird (vgl. Fig. 12b).

Anschliessend erfolgt üblicherweise das Herstellen der nötigen elektrischen Verbindungen (hier nicht gezeigt), wobei in der Regel Drähte von der Printplatte 27 zum Elektromotor 16 (oder umgekehrt) geführt werden und die ersten Verbindungsstücke 203a, 204a des hinteren und des vorderen Federblechs 203, 204 sowie die Enden der Kabel der Ladespule 28a mit der Printplatte 27 verlötet werden.

Schliesslich wird der Akku 21 von unten her durch eine Öffnung 222 in die Akkuzone 29c der zusammengesetzten Rahmeneinheit 20 eingebracht, wo er klemmend zwischen dem Federstück 203b des hinteren Federelements 203 und dem Federstück 204b des vorderen Federelements 204 aufgenommen wird und ggf. zusätzlich von den seitlichen Vorspannflächen 25 gehalten wird.

Schlussendlich wird die vollständig bestückte Rahmeneinheit 20 als Einschubeinheit 9 in das Gehäuse 6 des Handteils 2 eingeschoben und es wird ggf. noch der Gehäusedeckel 17 aufgebracht. Das Einschieben der Rahmeneinheit 20 in das Gehäuse 6 des Handteils 2 wird regelmässig unterstützt durch Einschubhilfen, vorzugsweise durch Einschubrippen/-schienen, welche seitlich an der Rahmeneinheit 20 bzw. am Dicht-/Dämpfelement 8 und/oder seitlich an der Innenwand des Gehäuses 6 angeordnet sind. Das Dicht-/Dämpfelement 8 umfasst insbesondere zwei Führungsschienen 8a auf jeder Seite, welche beim Einführen/Positionieren des Innenlebens des Handteils 2 helfen und ggf. mit entsprechenden Schienen des Gehäuses zusammenwirken.

In Fig.15 wird nun ein Exzenter 15 für das Getriebe 11 des elektrischen Zahnbürstenhandteils 2 in Einzelansicht gezeigt. Der Aufbau ist für die oszillierende Variante und die Sonic-Variante grundsätzlich derselbe, lediglich bei der Dimensionierung der einzelnen Komponenten kann es Unterschiede geben.

Der Exzenter 15 umfasst einen zylinderförmigen Grundkörper 15a, auf welchem - parallel versetzt zur Grundkörperachse X_{G} - ein zylinderförmiger Exzenterzapfen 15b mit einer Exzenterzapfenachse X_{Z} angeordnet ist. Der Abstand von der Grundkörperachse X_{G} zu der Exzenterzapfenachse X_{Z} bildet die Exzentrizität E. Die Exzentrizität E liegt zwischen 0.2 mm und 3 mm und bevorzugt zwischen 0.3 mm und 2 mm. Für die oszillierende Variante liegt die Exzentrizität E besonders bevorzugt zwischen 1.4 mm und 2 mm, wohingegen die Exzentrizität für die Sonic-Variante besonders bevorzugt zwischen 0.3 mm und 1 mm liegt.

In den Grundkörper 15a des Exzenters 15 sind seitliche Ausnehmungen 15c eingebracht bzw. eingefräst. Die Ausnehmungen 15c sind derart konfiguriert, hier in Form von zwei seitlichen Einfräsungen, dass im Betrieb der Massenschwerpunkt des Exzenters 15 auf der Achse der Motorwelle 16a des Elektromotors 16 liegt (welche mit der Grundkörperachse zusammenfällt), auf welchen der Exzenter 15 aufgebracht ist. Der Exzenter 15 weist daher einen verbesserten Aufbau auf mit einer entsprechend optimierten Unwucht auf.

Auf seiner Stirnseite weist der Exzentergrundkörper 15a zudem einen Absatz 15e sowie eine entsprechende podestartige Erhebung 15d auf. Hierdurch kann der Exzenter 15 letztlich näher an einer entsprechenden Pleuelstange des Getriebes angeordnet werden, was zu einer besonders kompakten Bauweise des Getriebes führt. Der Exzenterzapfen 15b ist auf der podestartigen Erhebung 15d angeordnet.

Der Grundkörper 15a des Exzenters 15 hat eine Länge (von der podestartigen Erhebung bis zu seinem rückwärtigen Ende) von 4 mm bis 9 mm vorzugsweise von 5.5 mm bis 7.5 mm und einen Durchmesser (ohne die Ausnehmungen) von 3 mm bis 8 mm vorzugsweise von 4.5 mm bis 6.5 mm.

Der Exzenterzapfen 15b des Exzenters 15 hat eine Länge von 1 mm bis 6 mm vorzugsweise von 2 mm bis 4 mm und einen Durchmesser D_{Z} von 1 mm bis 4 mm vorzugsweise von 1.5 mm bis 2.5 mm.

In Fig.16 wird eine Pleuelstange 14 für das Getriebe 11 eines Antriebs für ein elektrisches Zahnbürstenhandteil 2 veranschaulicht. Der Aufbau ist für die oszillierende Variante und die Sonic-Variante grundsätzlich derselbe.

Die Pleuelstange 14 umfasst zwei Lager 14a und 14b, welche durch ein Stangenelement 14c verbunden sind. Die Lager 14a und 14b weisen jeweils eine Lagerachse Xp sowie vorzugsweise denselben (Innen- und Aussen-) Durchmesser auf.

Die Länge der Pleuelstange 14 (von Lagerachse zu Lagerachse) beträgt von 3 mm bis 8 mm vorzugsweise von 4.5 mm bis 6.5 mm.

Die Dicke der Pleuelstange 14 (in Richtung der Lagerachsen) beträgt von 1 mm bis 5 mm vorzugsweise von 1.5 mm bis 3.5 mm.

Die Breite der Pleuelstange (senkrecht zu den Lagerachsen) beträgt von 1.5 mm bis 6.5 mm vorzugsweise von 3 mm bis 5 mm.

Das Stangenelement 14c weist ggf. eine etwas geringere Dicke und Breite auf als die Lager 14 und 14b, so dass eine knochenartige Form für die Pleuelstange 14 resultiert.

In Fig.17 wird eine Antriebswelle 12 mit einem aufgespritzten Gelenkstück 13 für das Getriebe 11 eines elektrisches Zahnbürstenhandteils 2 veranschaulicht. Der Aufbau ist für die oszillierende Variante und die Sonic-Variante grundsätzlich derselbe.

Die Antriebswelle 12 umfasst ein vorderes Ende 12a sowie ein hinteres Ende 12b. Am vorderen Ende 12a weist die Antriebswelle eine Abflachung 12c auf sowie eine Einkerbung 12d auf. Die Abflachung 12c und die Einkerbung 12d dienen regelmässig der Verbindung mit bzw. der Fixierung an einem korrespondierenden Wellenabschnitt einer Umwandlungseinheit einer oszillierenden Aufsteckbürste 3.

Das auf die Antriebswelle 12 aufgespritzte Gelenkstück 13 umschliesst die Antriebswelle 12 vorzugsweise vollständig und weist einen Gelenkzapfen 13 auf, welcher einen Durchmesser D_{GZ} aufweist, welcher vorzugsweise dem Durchmesser D_{EZ} des Exzenterzapfens entspricht (d.h. sowohl bei der Sonic- als auch bei der oszillierenden Variante).

Das Gelenkstück 13 hat eine Länge L_{GS} (von "Lagermitte" zu "Lagermitte") von 2 mm bis 6 mm vorzugsweise von 3.5 mm bis 4.5 mm.

Die Antriebswelle 12 hat einen Durchmesser D_{A} von 1.5 mm bis 4.5 mm vorzugsweise von 2.5 mm bis 3.5 mm. Im Bereich der Abflachung 12c können diese Werte entsprechend kleiner sein, bzw. ist der Durchmesser als Durchmesser-Fortführung der nicht abgeflachten Teile zu verstehen.

In den Fig. 18 bis 25 wird eine elektrische Zahnbürste 1 in Übereinstimmung mit der vorliegenden Offenbarung für insbesondere die Sonic-Variante veranschaulicht.

Die in Fig. 18 dargestellte elektrische Zahnbürste 1 umfasst ein elektrisches Zahnbürstenhandteil 2 sowie eine darauf aufgebrachte Aufsteckbürste 3. Das elektrische Zahnbürstenhandteil 1 umfasst einen Ein-/Aus-Schalter 5 sowie Signalelemente 4, wie etwa LED-Lämpchen. Die Aufsteckbürste 3 umfasst einen Bürstenkopf 31 mit mehreren darauf abgeordneten Borstenbündeln 32, welche zusammen das Borstenfeld bilden. Der Bürstenkopf 31 ist hier im Wesentlichen oval ausgebildet. Der Bürstenkopf 31 ist bei der Sonic-Variante so ausgestaltet, dass er eine periodische Hin- und Her-Schwenkbewegung um die Längsachse der Aufsteckbürste X_{L} ausführt (vgl. Doppelpfeil). Hier bewegt sich die gesamte Aufsteckbürste 3, d.h. die Aufsteckbürste 3 ist nicht fix gegenüber dem elektrischen Zahnbürstenhandteil 2 montiert.

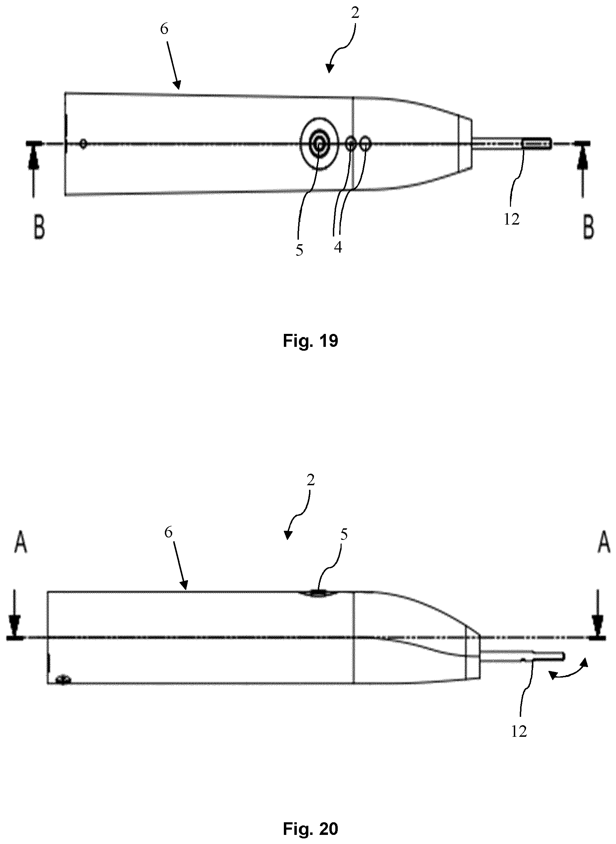

Die Fig. 18 bis 20 zeigen das zugehörige elektrische Zahnbürstenhandteil 2 ohne Aufsteckbürste 3 von oben, von der Seite sowie von unten her. Am vorderen Ende des elektrischen Zahnbürstenhandteils 2 ist kein Schlüsselelement 7 zu erkennen, da für die Sonic-Variante keine Kopplungsstruktur dieser Art für die Aufsteckbürste 3 benötigt wird. Die Fixierung der Aufsteckbürste 3 erfolgt hier über die Geometrie der Antriebswelle 12 zusammen mit einer korrespondierenden Innengeometrie der Aufsteckbürste 3. Die Antriebswelle 12 führt auch hier aus ihrer in Fig. 20 gezeigten Grundstellung eine periodisch hin- und her-schwenkende Bewegung aus (vgl. Doppelpfeil), welche unmittelbar auf eine entsprechende (Sonic-) Aufsteckbürste 3 übertragen werden kann.

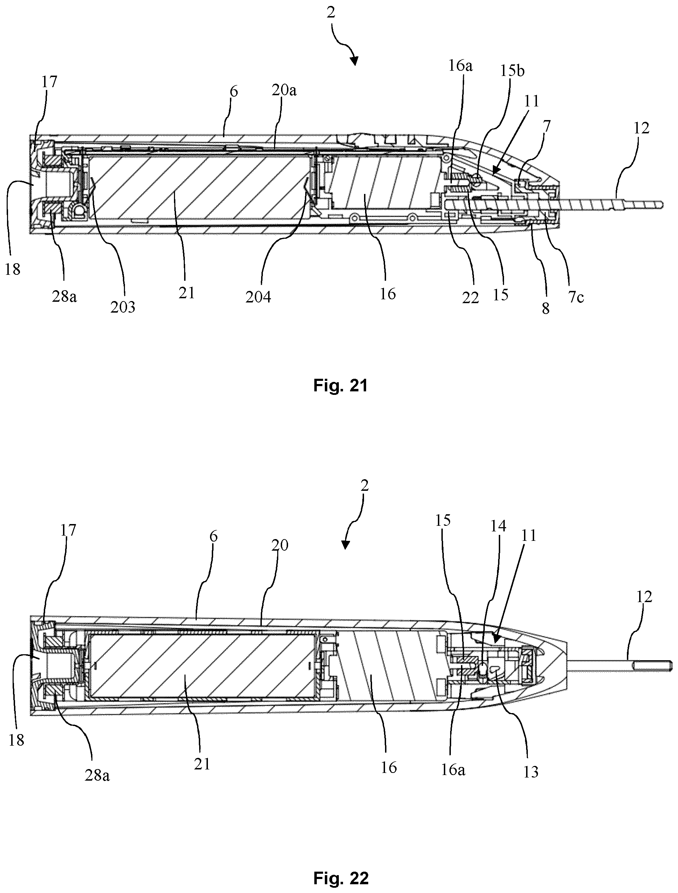

Die Fig. 21 zeigt einen Längsschnitt des elektrischen Zahnbürstenhandteils 2 entlang der Linie B - B in Fig. 19. Dieses umfasst zunächst das Gehäuse 6 sowie an seinem rückwärtigen Ende einen Gehäusedeckel 17, welcher das Gehäuse 6 abschliesst. Der Gehäusedeckel 17 weist eine Öffnung 18 in Form eines Sacklochs zum Einbringen eines Ferritkerns eines entsprechenden Ladegeräts auf. Eine auf einem Spulenträger angeordnete Ladespule 28a umgibt insofern die Öffnung 18.

Im vorderen Endbereich des Gehäuses 6 ist das Schlüsselelement 7 gelagert, welches hier keine nach aussen ragende Schlüsselgeometrie aufweist, wie oben erläutert. Über das Schlüsselelement 7 ist aber wiederum ein Dicht-/Dämpfelement 8 gestülpt, welches für eine Abdichtung zwischen dem Schlüsselelement 7 und dem Gehäuse 6 sorgt sowie für eine gedämpfte Lagerung des Schlüsselelements 7 innerhalb des Gehäuses 6. Weiter dichtet das Dicht-/Dämpfelement 8 gegenüber der Antriebswelle 12 und sorgt eine gewisse gedämpfte Lagerung der Rahmeneinheit 20 im Gehäuse.

Im vorderen Bereich des Gehäuses 6 ist auch das Getriebe 11 angeordnet, welches die Antriebswelle 12 antreibt. Die Antriebswelle 12 ist mit ihrem hinteren Ende in einer ersten Lagereinrichtung 22 gelagert und im Bereich ihres vorderen Endes in einer zweiten Lagereinrichtung 7c, welche vom Schlüsselelement 7 gebildet wird. Durch die auch hier noch relativ weit auseinanderliegenden Lagereinrichtungen 22 und 7c kann ein besonders ruhiger und stabiler Lauf der Antriebswelle 12 gewährleistet werden.

Unmittelbar hinter dem Getriebe 11 ist der Elektromotor 16 angeordnet, welcher mittels seiner Motorwelle 16a das Getriebe 11 antreibt. Auf die Motorwelle 16a ist ein Exzenter 15 aufgebracht. Hinter dem Elektromotor 16 ist ein Akku 21 angeordnet, welcher zwischen einem vorderen Federblech 204 und einem hinteren Federblech 203 klemmend gehalten wird. In der Figur 21 sind die Federbleche 203, 204 in ihrer entlasteten Lage gezeigt - es ist durch die Darstellung des Akku 21 sichtbar, um wieviel die Federbleche 203, 204 zurückgebogen werden um die Klemmung zu realisieren.

In Fig. 22 wird ein Längsschnitt auf das elektrische Zahnbürstenhandteil 2 entlang der Linie B - B in Fig. 2 veranschaulicht. Man erkennt im Wesentlichen dieselben Bauteile wie in Fig. 21, allerdings ist hier die auf den Exzenter 15 und auf das Gelenkstück 13 der Antriebswelle 12 aufgebrachte Pleuelstange 14 gut zu sehen.

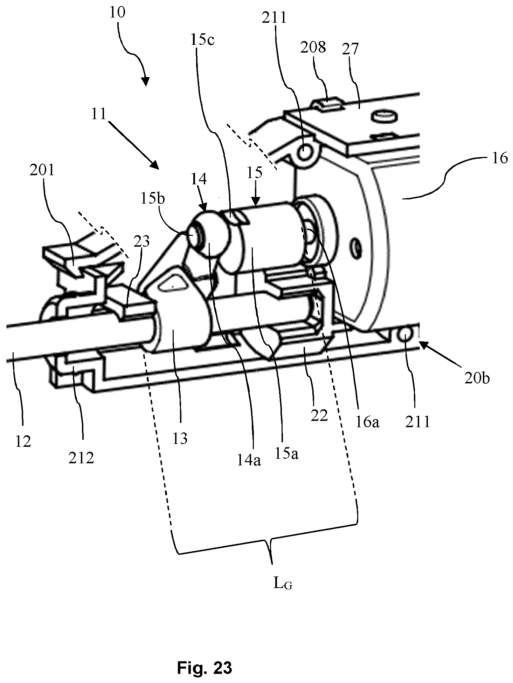

Die Fig. 23 zeigt insbesondere eine Detailansicht der Antriebseinheit 10 mit dem Getriebe 11 und dem Motor 16 gemäss der vorliegenden Offenbarung. Das Getriebe 11 umfasst die Antriebswelle 12 mit dem aufgespritzten Gelenkstück 13, die Pleuelstange 14 und den Exzenter 15. Der Grundkörper 15a des Exzenters 15 ist dabei mit seinem rückwärtigen bzw. motorseitigen Ende auf die Motorwelle 16a des Elektromotors 16 aufgebracht bzw. aufgepresst. Die Motorwelle 16a und die Achse des Grundkörpers fallen dabei zusammen. Der Grundkörper 15a des Exzenters 15 umfasst vorzugsweise zwei Ausnehmungen 15c, von denen hier nur eine zu sehen ist. Die Ausnehmungen 15c dienen wiederum zur Erzeugung einer optimierten Unwucht und fallen bei der Sonic-Variante regelmässig etwas kleiner aus als bei der oszillierenden Variante (wo auch die Exzentrizität üblicherweise grösser ist, vgl. Fig. 12a).

Das obere Lager 14a der Pleuelstange 14 ist auf den Exzenterzapfen 15b aufgesteckt. Die Lager 14a, 14b der Pleuelstange 14 sind vorzugsweise als Gleitlager direkt im Körper der Pleuelstange 14 ausgestaltet. Das nicht gezeigte untere Lager 14b der Pleuelstange 14 ist auf einen dem Exzenterzapfen 15b entsprechenden Gelenkzapfen 13a des Gelenkstücks 13 aufgesteckt. Hierdurch kann eine besonders kompakte und effiziente Bauweise des Getriebes erreicht werden.

Die einzelnen Teile des Getriebes sind wiederum lediglich ineinandergesteckt mit geringstmöglichen Abständen und Toleranzen dazwischen. Das hintere Ende der Antriebswelle 12 ist in einer ersten Lagereinrichtung 22 der zweiten halbschalenartigen Hälfte 20b gelagert. Die erste Lagereinrichtung 22 ist dabei vorzugsweise als Gleitlager ausgebildet und wird von der ersten halbschalenartigen Hälfte 20a bei der Montage an der zweiten halbschalenartigen Hälfte 20b verschlossen mittels einer korrespondierenden Abdeckung 219 (vgl. analog Fig. 9 der oszillierenden Variante). Das Gelenkstück 13 liegt vorzugsweise an einem Spannarm 23 an, in welchen die Antriebswelle 12 bei der Montage eingeklickt wird und welcher von oben auf die Antriebswelle 12 drückt, um ein Rattern zu unterbinden und einen besonders ruhigen Lauf zu ermöglichen. Die Antriebswelle 12 wird durch den von beiden halbschalenartigen Hälften 20a, 20b gebildeten Führungszapfen 212 aus der Rahmeneinheit 20 hinausgeführt.

Die Länge L_{G} des Getriebes 11 vom rückwärtigen bzw. motorseitigen Ende des Exzentergrundkörpers 15a bis zum vorderen Ende der Fixierung des Gelenkstücks 13 an der Antriebswelle 12 beträgt von 8 mm bis 20 mm vorzugsweise von 11 mm bis 17 mm.

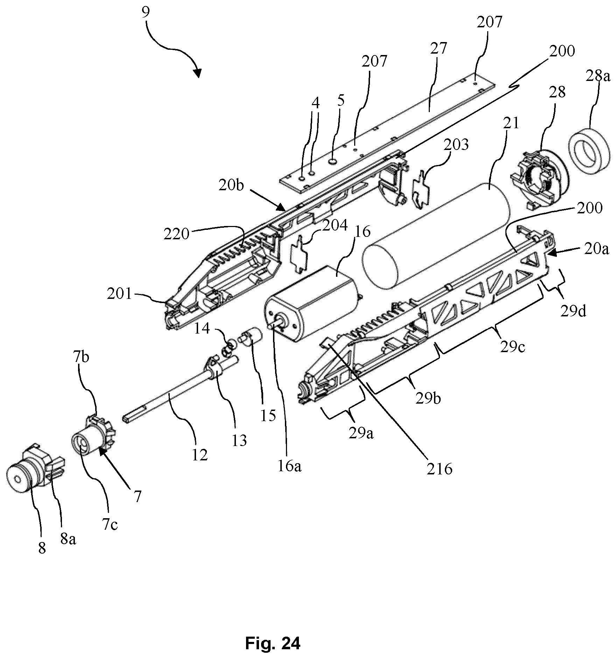

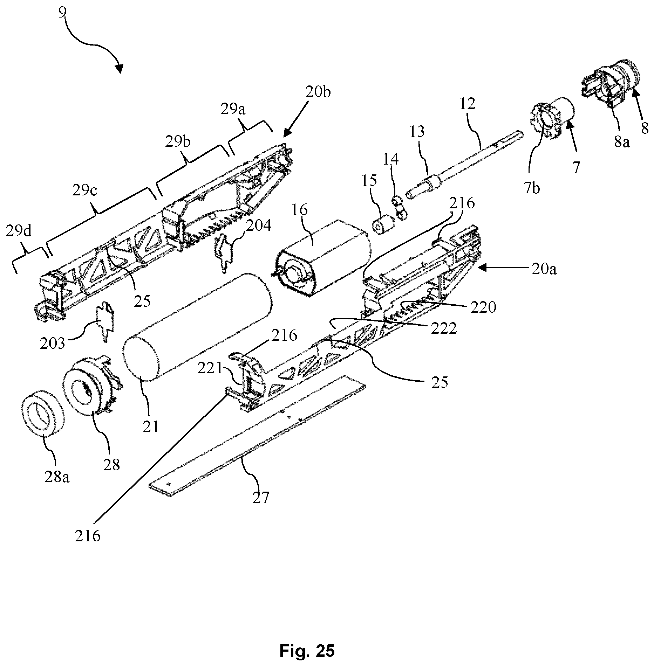

In den Fig. 24 und 25 werden nochmals sämtliche Bauteile des Innenlebens bzw. einer Einschubeinheit 9 für ein elektrisches Zahnbürstenhandteil 2 in jeweils einer Explosionsansicht von oben sowie einer Explosionsansicht von unten illustriert.

Anhand der Fig. 24 und 25 lässt sich (auch in Verbindung mit den Fig. 21 bis 23) anschaulich die Montage der Einschubeinheit 9 für das elektrische Zahnbürstenhandteil 2 veranschaulichen.

Zunächst wird die zweite halbschalenartige Hälfte 20b der Rahmeneinheit 20 bereitgelegt. Nun wird die Antriebseinheit 10 mit dem Elektromotor 16 und dem Getriebe 11 montiert, wobei der Elektromotor 16 mit dem Getriebe 11 verbunden wird und der Elektromotor 16 in der Motorzone 29b und das Getriebe 11 in einer Getriebezone 29a der zweiten halbschalenartigen Hälfte 20b positioniert und dort verrastet werden. Hierbei wird konkret der Exzenter 15 auf eine Motorwelle 16a des Elektromotors 16 aufgepresst und die Pleuelstange 14 wird auf den Exzenter 15 bzw. den Exzenterzapfen 15b sowie auf das auf die Antriebswelle 12 aufgespritzte Gelenkstück 13 bzw. den Gelenkzapfen 13a aufgesteckt. Die Antriebswelle 12 verrastet dabei mit dem Spannarm 23 und wird in der ersten Lagereinrichtung 22 gelagert.

Nunmehr werden das hintere Federblech 203 und das vordere Federblech 204 von der Seite her in entsprechende Aufnahmen der zweiten halbschalenartigen Hälfte 20b eingesteckt, wobei das hintere und das vordere Federblech 203, 204 vorzugsweise jeweils von Haltearmen 218 in Position gehalten werden.

Nun wird die Printplatte 27 in der Printzone 29e der zweiten halbschalenartigen Hälfte 20b montiert, wobei jeweils zumindest ein erstes Verbindungsstück 203a des hinteren Federblechs 203 und ein erstes Verbindungsstück 204a des vorderen Federblechs 204 durch korrespondierende Ausnehmungen 207 in der Printplatte 27 geführt werden und die Printplatte 27 vorzugsweise in einer (beidseitigen) Vertiefung 200 der Printzone 29e aufgenommen wird und dort ggf. verrastet. An der Oberseite der Motorzone 29b sind beidseitig Stützstreben 220 vorgesehen, welche die Printplatte 27 im vorderen Bereich abstützen, wo insbesondere der Ein-/Aus-Schalter 5 angeordnet ist. Auf diese Weise kann der Druck der von einem Benutzer auf den Ein-/Aus-Schalter 5 ausgeübt wird besser aufgenommen werden. Die Stützstreben 220 bilden dabei eine Art Boden der Vertiefung 200 für die Printplatte 27. In der Akkuzone sind regelmässig keine Stützstreben 220 vorgesehen. Entsprechende Ausgestaltungen wären aber denkbar.

Anschliessend erfolgt die Montage der ersten halbschalenartigen Hälfte 20a an der zweiten halbschalenartigen Hälfte 20b, wobei die beiden halbschalenartigen Hälften der Rahmeneinheit 20 vorzugsweise an mehreren Stellen ineinander gesteckt und/oder geklickt werden (vgl. insoweit die Führungszylinder 210 sowie die korrespondierenden Sacklöcher 211 sowie die Schnappvorrichtungen 216 und die korrespondierenden Einschnappöffnungen 217 in den Fig. 9 und 10).

Nun erfolgt die Montage des (hier um die Schlüsselgeometrie verkürzten) Schlüsselelements 7 an der zusammengesetzten Rahmeneinheit 20, wobei das Schlüsselelement 7 über die Antriebswelle 12 aufgeschoben wird und vorzugsweise mit den Schnappelementen 201 der Rahmeneinheit 20 verrastet. Bei der Sonic-Variante wird regelmässig keine Balgdichtung 19 in das Schlüsselelement 7 eingebracht (dies ist allerdings grundsätzlich auch möglich). Anschliessend wird noch das Dicht-/Dämpfelement 8 an der Rahmeneinheit 20 montiert, wobei das Dicht-/Dämpfelement 8 über das Schlüsselelement 7 aufgeschoben wird und vorzugsweise vorne auf die Rahmeneinheit 20 aufschnappt.

Dann wird der Spulenträger 28 mit einer Ladespule 28a an der zusammengesetzten Rahmeneinheit 20 montiert, wobei der Spulenträger 28 auf den hinteren Endbereich der Rahmeneinheit 20 aufgesteckt bzw. aufgeschnappt wird (vgl. auch Fig. 12b).

Anschliessend erfolgt üblicherweise das Herstellen der nötigen elektrischen Verbindungen (hier nicht gezeigt), wobei in der Regel Drähte von der Printplatte 27 zum Elektromotor 16 (oder umgekehrt) geführt werden und die ersten Verbindungsstücke 203a, 204a des hinteren und des vorderen Federblechs 203, 204 sowie die Enden der Kabel der Ladespule 28a mit der Printplatte 27 verlötet werden.

Schliesslich wird der Akku 21 von unten her durch eine Öffnung 222 in die Akkuzone 29c der zusammengesetzten Rahmeneinheit 20 eingebracht, wo er klemmend zwischen dem Federstück 203b des hinteren Federelements 203 und dem Federstück 204b des vorderen Federelements 204 aufgenommen wird und ggf. zusätzlich von den seitlichen Vorspannflächen 25 gehalten wird.

Schlussendlich wird die vollständig bestückte Rahmeneinheit 20 als Einschubeinheit 9 in das Gehäuse 6 des Handteils 2 eingeschoben und es wird ggf. noch der Gehäusedeckel 17 aufgebracht. Das Einschieben der Einschubeinheit 9 in das Gehäuse 6 des Handteils 2 wird regelmässig unterstützt durch Einschubhilfen, vorzugsweise durch Einschubrippen/-schienen, welche seitlich an der Rahmeneinheit 20 bzw. am Dicht-/Dämpfelement 8 und/oder seitlich an der Innenwand des Gehäuses 6 angeordnet sind. Das Dicht-/Dämpfelement 8 umfasst insbesondere zwei Führungsschienen 8a auf jeder Seite, welche beim Einführen/Positionieren des Innenlebens des Handteils 2 helfen und ggf. mit entsprechenden Schienen des Gehäuses zusammenwirken.

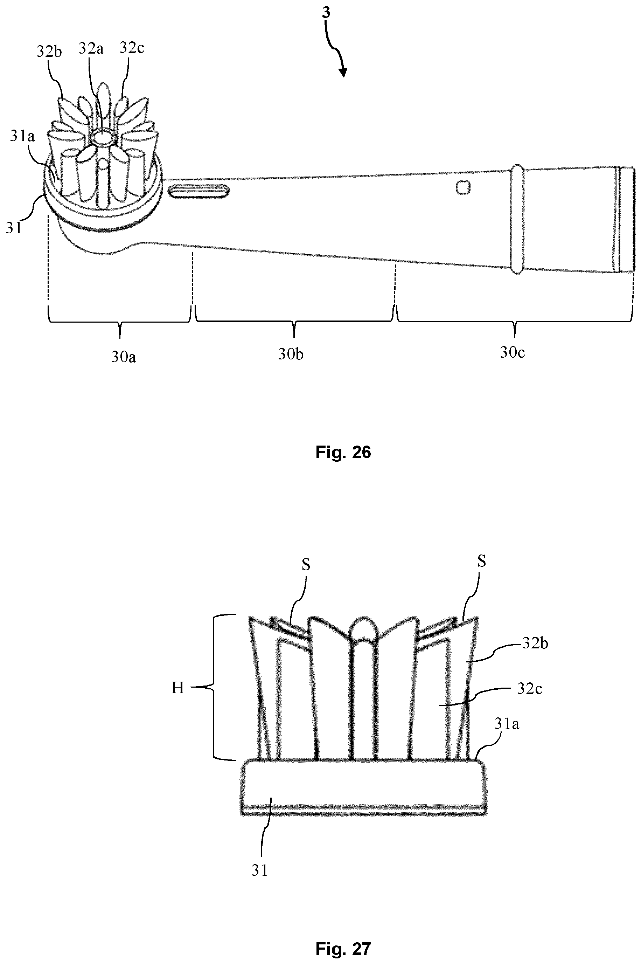

Anhand der Fig. 26 bis 34 werden nunmehr drei besonders bevorzugte Ausführungsformen für eine Aufsteckbürste 3, insbesondere für die oszillierende Variante, illustriert. Die Verwendung der entsprechenden Borstenfeldgeometrien ist allerdings auch im Zusammenhang mit der Sonic-Variante vorstellbar.

Bei der in den Fig. 26 bis 28 gezeigten, ersten bevorzugten Ausführungsform umfasst die Aufsteckbürste 3 einen Kopfabschnitt 30a, der einen runden Bürstenkopf 31 aufweist, einen Aufsteckabschnitt 30c, sowie einen den Kopfabschnitt 30a mit dem Aufsteckabschnitt 30c verbindenden Halsabschnitt 30b, wobei der Bürstenkopf 31 ein Borstenfeld aufweist, welches aus mehreren Borstenbündeln gebildet wird.

Das Borstenfeld auf dem Bürstenkopf 31 wird hier von drei unterschiedlichen Formen von Borstenbündeln gebildet, nämlich von kreissegmentförmigen Borstenbündeln 32a (erste Form), kleinen ovalen Borstenbündel 32c (zweite Form) und grossen ovalen Borstenbündeln 32b (dritte Form).

Die einzelnen Borstenbündel sind dabei auf drei zur Bürstenkopfachse X_{B} konzentrischen Kreisen K₁, K₂ und K₃ angeordnet. Die gepunktet eingezeichneten Kreise K₁, K₂ und K₃ verlaufen dabei jeweils etwa durch den Mittelpunkt der einzelnen Borstenbündel 32a, 32b, 32c hindurch. Das Zentrum der Kreise entspricht vorzugsweise dem Drehzentrum der oszillierenden Bewegung.

Auf dem inneren Kreis K₁ sind hier die kreissegmentförmigen Borstenbündel 32a der ersten Form vorgesehen, auf dem mittleren Kreis K₂ die grossen ovalen Borstenbündeln 32b der dritten Form und auf dem äusseren Kreis K₃ die kleinen ovalen Borstenbündel 32c der zweiten Form.

Zwischen den einzelnen Borstenbündeln 32a, 32b, 32c auf jedem der Kreise K₁, K₂ und K₃ bleiben Lücken 33a, 33b, 33c welche nicht mit den entsprechenden Borstenbündeln besetzt sind.

Allerdings können, wie hier zu sehen, die grossen ovalen Borstenbündel 32b der dritten Form auf dem mittleren Kreis K₂ versetzt zu den kleinen ovalen Borstenbündeln der zweiten Form 32c auf dem äusseren Kreis K₃ angeordnet sein. Dabei greifen die grossen ovalen Borstenbündel 32b der dritten Form auf dem mittleren Kreis K₂ jedenfalls teilweise in die Lücken 33c zwischen den kleinen ovalen Borstenbündeln der zweiten Form 32c auf dem äusseren Kreis K₃.

Die grossen ovalen Borstenbündel 32b der dritten Form auf dem mittleren Kreis K₂ und die kleinen ovalen Borstenbündel 32c der zweiten Form auf dem äusseren Kreis K₃ weisen in Richtung der Bürstenkopfachse X_{B} eine Abschrägung S auf, wobei die Differenz zwischen dem höchsten und dem tiefsten Punkt von 1 mm bis 4 mm vorzugsweise von 2 mm bis 3 mm beträgt. Es ist auch denkbar, dass nur die grossen ovalen Borstenbündel 32b der dritten Form oder nur die kleinen ovalen Borstenbündel 32c der zweiten Form eine entsprechende Abschrägung S aufweisen.

Der innere Kreis K₁ umfasst hier beispielhaft zwei identische kreissegmentförmige Borstenbündel 32a (die bevorzugte Anzahl liegt zwischen 1 und 8, noch bevorzugter zwischen 2 und 5), welche regelmässig eine einheitliche, gleichbleibende Höhe aufweisen. Die kreissegmentförmigen Borstenbündel 32a auf dem inneren Kreis sind hier entsprechend durch zwei Lücken 33a getrennt.

Die Länge der einzelnen Kreissegmente ist abhängig von der Anzahl der jeweils verwendeten Borstenbündel 32a und den zwischen ihnen liegenden Lücken. Die Breite der einzelnen kreissegmentförmigen Borstenbündel 32a beträgt von 0.2 mm bis 1 mm vorzugsweise von 0.3 mm bis 0.6 mm. Die Höhe der einzelnen kreissegmentförmigen Borstenbündel 32a beträgt von 4 mm bis 8 mm vorzugsweise von 5.5 bis 6.5 mm (d.h. gemessen ab der Borstenaustrittsfläche 31a).

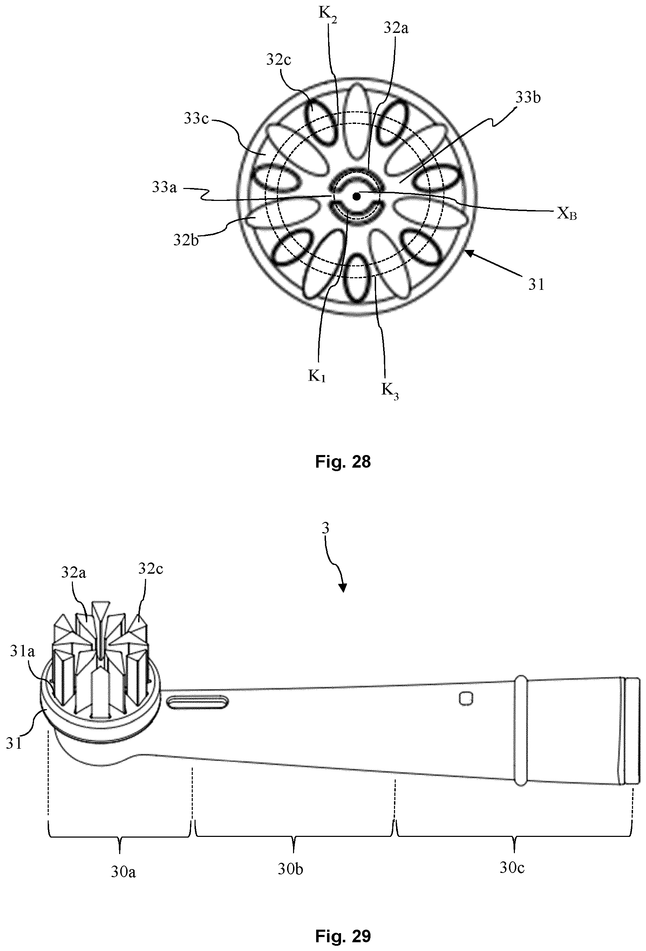

Die Fläche der kreissegmentförmigen Borstenbündel 32a beträgt von 2 mm² bis 4.5 mm² vorzugsweise von 2.3 mm² bis 3 mm² (d.h. entsprechend der Draufsicht gemäss Fig. 28).

Die Länge der Lücken 33a zwischen den einzelnen kreissegmentförmigen Borstenbündeln 32a entlang des Kreises K₁ beträgt von 0.5 mm bis 1.4 mm vorzugsweise von 0.7 mm bis 1.1 mm.

Der mittlere Kreis K2 umfasst hier beispielhaft sieben identische Borstenbündel in Form 32b von grossen Ovalen (die bevorzugte Anzahl liegt zwischen 4 und 11 noch bevorzugter zwischen 6 und 9). Die Mittelpunkte der grossen Ovale liegen dabei etwa auf dem Kreis K2. Die grossen ovalen Borstenbündel 32b weisen regelmässig eine in Richtung des Bürstenkopfachse XB abfallende Abschrägung S auf.

Die Länge der grossen ovalen Borstenbündel 32b beträgt von 3 mm bis 6 mm vorzugsweise von 4 mm bis 5 mm.

Die Breite der grossen ovalen Borstenbündel 32b beträgt 0.8 mm bis 2.4 mm vorzugsweise von 1.2 mm bis 1.8 mm.

Die äussere Höhe H der grossen ovalen Borstenbündel 32b (d.h. weg von der Bürstenkopfachse X_{B}) beträgt von 7 mm bis 10 mm vorzugsweise von 8 mm bis 9 mm. Die innere Höhe (d.h. hin zu der Bürstenkopfachse X_{B}) der grossen ovalen Borstenbündel 32b beträgt von 5.5 mm bis 8.5 mm vorzugsweise von 6.5 mm bis 7.5 mm.

Die Fläche der grossen ovalen Borstenbündel 32b beträgt von 3 mm² bis 14 mm² vorzugsweise von 4.5 mm² bis 7 mm² (d.h. entsprechend der Draufsicht gemäss Fig. 28)

Die Borstenbündel 32a, 32b des mittleren und äusseren Kreises K₁, K₂ wechseln sich hier in umfänglicher Richtung ab.

Das Verhältnis der Fläche der kleinen ovalen Borstenbündel 32c zu der Fläche der grossen ovalen Borstenbündel 32b beträgt von 1:7 bis 5:7 vorzugsweise von 2:7 bis 1:2.

Der äussere Kreis K₃ umfasst hier beispielhaft sieben identische Borstenbündel 32c in Form von kleinen Ovalen (die bevorzugte Anzahl liegt zwischen 4 und 11, noch bevorzugter zwischen 6 und 7). Die Mittelpunkte der kleinen Ovale liegen dabei etwa auf dem Kreis K₃. Die kleinen ovalen Borstenbündel 32c weisen regelmässig eine in Richtung des Bürstenkopfachse X_{B} abfallende Abschrägung S auf.

Die Länge der kleinen ovalen Borstenbündel 32c beträgt von 2 mm bis 3.5 mm vorzugsweise von 2.5 mm bis 3 mm.

Die Breite der kleinen ovalen Borstenbündel 32c beträgt 0.5 mm bis 2mm vorzugsweise von 1 mm bis 1.5 mm.

Die äussere Höhe der kleinen ovalen Borstenbündel 32c (d.h. weg von der Bürstenkopfachse X_{B}) beträgt von 5.5 mm bis 8.5 mm vorzugsweise von 6.5 mm bis 7.5 mm. Die innere Höhe der kleinen ovalen Borstenbündel 32c (d.h. hin zu der Bürstenkopfachse X_{B}) beträgt von 4.5 mm bis 7.5 mm vorzugsweise von 5.5 mm bis 6.7 mm.

Die Fläche der kleinen ovalen Borstenbündel 32c beträgt von 2 mm² bis 7 mm² vorzugsweise von 3 mm² bis 4.5 mm² (d.h. in der Draufsicht gemäss Fig. 28).

Bei der in den Fig. 29 bis 31 gezeigten, zweiten bevorzugten Ausführungsform umfasst die Aufsteckbürste 3 wiederum einen Kopfabschnitt 30a, der einen Bürstenkopf 31 aufweist, mit einem Aufsteckabschnitt 30c, sowie mit einem den Kopfabschnitt 30a mit dem Aufsteckabschnitt 30c verbindenden Halsabschnitt 30b, wobei der Bürstenkopf 31 ein Borstenfeld aufweist, welches aus mehreren Borstenbündeln gebildet wird.

Das Borstenfeld auf dem Bürstenkopf 31 wird hier von zwei unterschiedlichen Formen von Borstenbündeln gebildet, nämlich von rautenförmigen Borstenbündeln 32a (erste Form) und dreieckförmigen Borstenbündeln 32c (zweite Form).

Die einzelnen Borstenbündel sind dabei auf zwei zur Bürstenkopfachse X_{B} konzentrischen Kreisen K₁ und K₃ angeordnet. Die gepunktet eingezeichneten Kreise K₁ und K₃ verlaufen dabei jeweils etwa durch den Mittelpunkt der einzelnen Borstenbündel 32a, 32c hindurch.

Auf dem inneren Kreis K₁ sind hier die rautenförmigen Borstenbündel 32a der ersten Form vorgesehen und auf dem äusseren Kreis K₃ die dreieckförmigen Borstenbündel 32c der zweiten Form.

Zwischen den einzelnen Borstenbündeln 32a und 32c auf jedem der Kreise K₁ und K₃ bleiben Lücken 33a und 33c welche nicht mit den entsprechenden Borstenbündeln besetzt sind.

Allerdings können, wie hier zu sehen, die rautenförmigen Borstenbündel 32a der ersten Form auf dem inneren Kreis K₁ versetzt zu den dreieckförmigen Borstenbündeln der zweiten Form 32c auf dem äusseren Kreis K₃ angeordnet sein. Dabei greifen die rautenförmigen Borstenbündel 32a der ersten Form auf dem inneren Kreis K₁ jedenfalls teilweise in die Lücken 33c zwischen den dreieckförmigen Borstenbündeln 32c der zweiten Form auf dem äusseren Kreis K₃.

Die rautenförmigen Borstenbündel 32a der ersten Form auf dem inneren Kreis K₁ und die dreieckförmigen Borstenbündel 32c der dritten Form auf dem äusseren Kreis K₃ weisen in Richtung der Bürstenkopfachse X_{B} eine Abschrägung S auf. Es ist auch denkbar, dass nur die rautenförmigen Borstenbündel 32a der ersten Form oder nur die dreieckförmigen Borstenbündel 32c der zweiten Form eine entsprechende Abschrägung S aufweisen.

Der innere Kreis K₁ umfasst vorliegend beispielhaft sechs identische rautenförmige Borstenbündel 32a (die bevorzugte Anzahl liegt zwischen 3 und 12, noch bevorzugter zwischen 5 und 8), insbesondere mit dachförmiger Endfläche, wobei vorzugsweise die Rautenachse den First bildet. Die rautenförmigen Borstenbündel 32a sind mit einer Spitze gegen die Bürstenkopfachse X_{B} gerichtet.

Die Länge der einzelnen rautenförmigen Borstenbündel 32a beträgt von 3 mm bis 6 mm vorzugsweise von 4 mm bis 5 mm.

Die Breite der einzelnen rautenförmigen Borstenbündel 32a beträgt von 0.7 mm bis 2.5 mm vorzugsweise von 1.2 mm bis 2 mm.

Die Höhe der einzelnen rautenförmigen Borstenbündel 32a an den Ecken (die Ecken innen und die Ecken aussen sind vorzugsweise auf derselben Höhe angeordnet) beträgt von 5 mm bis 8 mm vorzugsweise von 6 mm bis 7 mm (gemessen ab der Borstenaustrittsfläche 31a).

Die Höhe der einzelnen rautenförmigen Borstenbündel 32a am First beträgt von 7 mm bis 9 mm vorzugsweise von 7.5 mm bis 8 mm (gemessen ab der Borstenaustrittsfläche 31a).

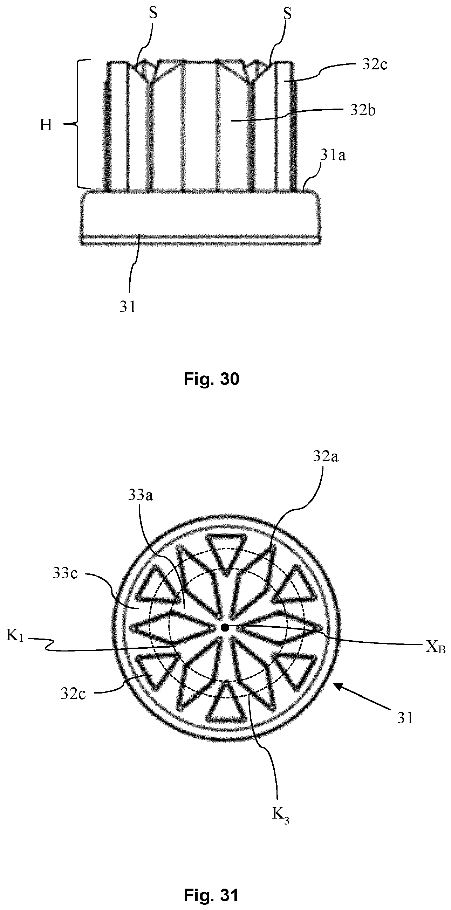

Die Fläche der einzelnen rautenförmigen Borstenbündel 32a beträgt von 2 mm² bis 7 mm² vorzugsweise von 5 mm² bis 7 mm² (d.h. in der Draufsicht gemäss Fig. 31).

Die Anzahl der rautenförmigen Borstenbündel 32a beträgt hier beispielhaft sechs.

Die Borstenbündel 32a und 32c des inneren und äusseren Kreises K1 und K3 wechseln sich hier in umfänglicher Richtung ab.

Der äussere Kreis K₃ umfasst hier beispielhaft sechs identische Borstenbündel 32c in Form von Dreiecken (die bevorzugte Anzahl liegt zwischen 3 und 12, noch bevorzugter zwischen 5 und 8). Jeweils eine Spitze der Dreiecke ist dabei gegen die Bürstenkopfachse X_{B} gerichtet.

Die dreieckförmigen Borstenbündel 32c weisen eine Abschrägung S in Richtung der Bürstenkopfachse X_{B} auf. Die dreieckförmigen Borstenbündel 32c sind bevorzugt kleiner als die rautenförmigen Borstenbündel 32a des inneren Kreises.

Die Seitenlänge der Dreieckbasis beträgt von 1.5 mm bis 4 mm vorzugsweise von 2.2 mm bis 3.2 mm.

Die Seitenlänge der Dreieckschenkel (d.h. der zwei zur Bürstenkopfachse X_{B} gerichteten Seiten) beträgt jeweils von 2 mm bis 4 mm vorzugsweise von 2.5 mm bis 3.5 mm.

Die äussere Höhe der dreieckförmigen Borstenbündel beträgt von 6.5 mm bis 9.5 mm vorzugsweise von 7.5 mm bis 8.5 mm (gemessen von der Borstenaustrittsfläche 31a).

Die innere Höhe der dreieckförmigen Borstenbündel beträgt von 5 mm bis 8 mm vorzugsweise von 6 mm bis 7 mm (gemessen ab der Borstenaustrittsfläche 31a).

Die Fläche der dreieckförmigen Borstenbündel 32c beträgt von 1 mm² bis 5.5 mm² vorzugsweise von 3 mm² bis 4.5 mm² (d.h. in der Draufsicht gemäss Fig. 31)

Die Anzahl der dreieckförmigen Borstenbündel 32c beträgt hier beispielhaft sechs. Die Anzahl der dreieckförmigen Borstenbündel 32c des äusseren Kreises K₃ ist regelmässig bevorzugt gleich gross wie die Anzahl der rautenförmigen Borstenbündel 32a des inneren Kreises K₁, da die Borstenbündel vorzugsweise abwechselnd angeordnet sind.

Das Verhältnis der Fläche der rautenförmigen Borstenbündel 32a zu der Fläche der dreieckförmigen Borstenbündel 32c beträgt von 1:5 bis 5:7 vorzugsweise von 1:3 bis 4:7.

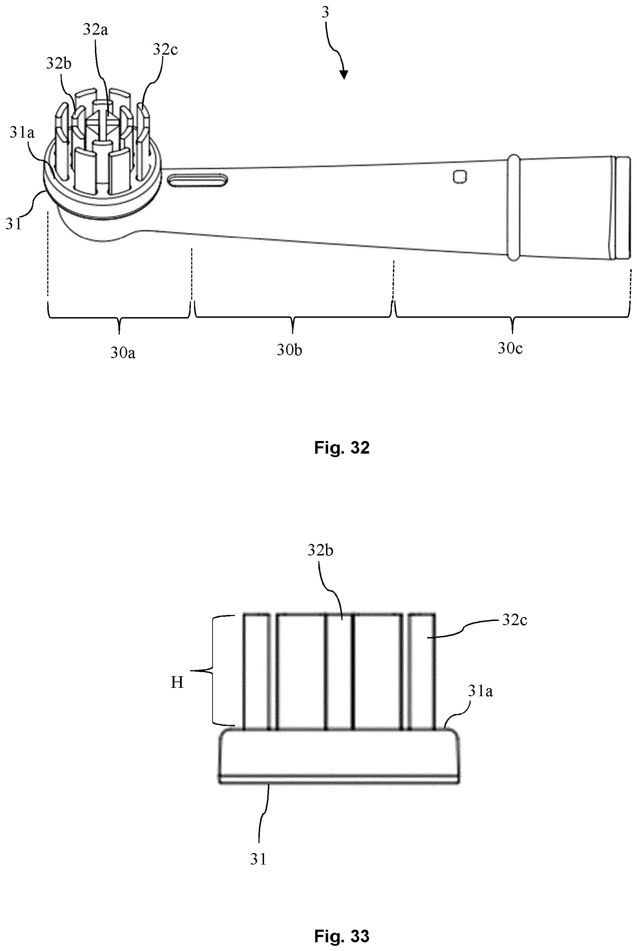

Bei der in den Fig. 32 bis 34 gezeigten, dritten bevorzugten Ausführungsform umfasst die Aufsteckbürste 3 wiederum einen Kopfabschnitt 30a, der einen Bürstenkopf 31 aufweist, einen Aufsteckabschnitt 30c sowie einen den Kopfabschnitt 30a mit dem Aufsteckabschnitt 30c verbindenden Halsabschnitt 30b, wobei der Bürstenkopf 31 ein Borstenfeld aufweist, welches aus mehreren Borstenbündeln gebildet wird.

Das Borstenfeld auf dem Bürstenkopf 31 wird hier von drei Formen von unterschiedlichen Borstenbündeln gebildet, nämlich von dreieckförmigen Borstenbündeln 32a (erste Form), ersten kreissegmentförmigen Borstenbündeln 32c (zweite Form) und zweiten kreissegmentförmigen Borstenbündeln 32b (dritte Form).

Die einzelnen Borstenbündel sind dabei auf drei zur Bürstenkopfachse X_{B} konzentrischen Kreisen K₁, K₂ und K₃ angeordnet. Die gepunktet eingezeichneten Kreise K₁, K₂ und K₃ verlaufen dabei jeweils etwa durch den Mittelpunkt der einzelnen Borstenbündel 32a, 32b, 32c hindurch.

Auf dem inneren Kreis K₁ sind hier die dreieckförmigen Borstenbündel 32a der ersten Form vorgesehen, auf dem mittleren Kreis K₂ die ersten kreissegmentförmigen Borstenbündel 32b der dritten Form und auf dem äusseren Kreis K₃ die zweiten kreissegmentförmigen Borstenbündel 32c der zweiten Form.

Zwischen den einzelnen Borstenbündeln 32a, 32b, 32c auf jedem der Kreise K₁, K₂ und K₃ bleiben Lücken 33a, 33b, 33c welche nicht mit Borstenbündeln besetzt sind.

Der innere Kreis K₁ umfasst hier identische dreieckförmige Borstenbündel 32a mit vorzugsweise einheitlicher, gleichbleibender Höhe. Die hier beispielhaft gezeigten vier dreieckförmigen Borstenbündel 32a (die bevorzugte Anzahl liegt zwischen 1 und 8, noch bevorzugter zwischen 3 und 5) bilden regelmässig eine im Wesentlichen quadratische Struktur mit Lücken 33a dazwischen (wobei die entsprechenden Lücken 33a etwa eine Kreuzform ausbilden).

Die Seitenlänge der Dreieckbasis beträgt von 1.5 mm bis 3.5 mm vorzugsweise von 1.7 mm bis 2.7 mm.

Die Seitenlänge der Dreieckschenkel (d.h. der zwei Seiten, welche in Richtung der Bürstenkopfachse X_{B} gerichtet sind) beträgt jeweils von 0.8 mm bis 2.5 mm vorzugsweise von 1.2 mm bis 2 mm.

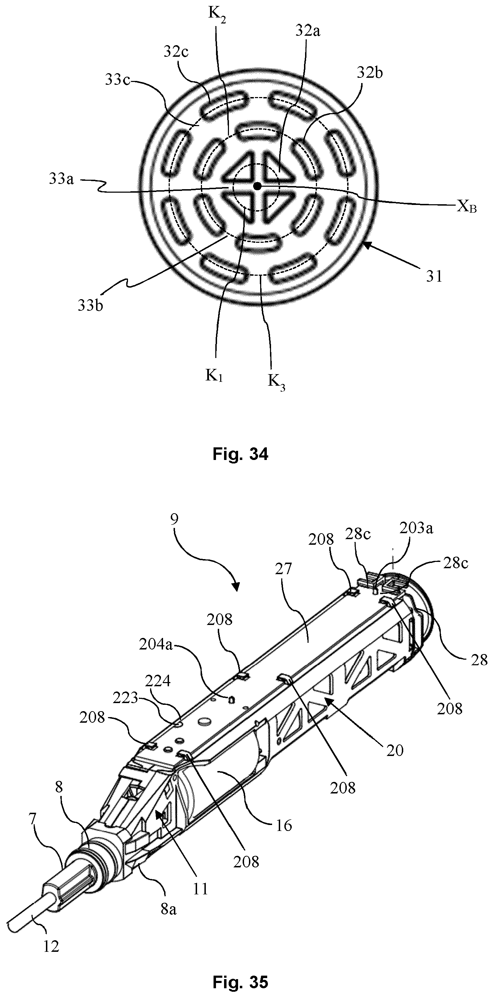

Die Fläche der dreieckförmigen Borstenbündel 32a beträgt von 1 mm² bis 4 mm² vorzugsweise von 2 mm² bis 3 mm² (d.h. in der Draufsicht gemäss Fig. 34).

Die Länge der Lücken 33a zwischen den dreieckförmigen Borstenbündeln 32a beträgt von 0.5 mm bis 1.5 mm.

Der mittlere Kreis K₂ umfasst hier vorzugsweise identische Borstenbündel 32b mit vorzugsweise einheitlicher, gleichbleibender Höhe in Form von ersten Kreissegmenten, welche einen unterbrochenen Kreisring bilden. Dieser umfasst hier beispielhaft sechs erste kreissegmentförmige Borstenbündel 32b (die bevorzugte Anzahl liegt zwischen 2 und 12, noch bevorzugter zwischen 4 und 8). Die ersten kreissegmentförmigen Borstenbündel 32b sind dabei kleiner als die zweiten kreissegmentförmigen Borstenbündel 32c des äusseren Kreises K₃.

Die Breite der ersten kreissegmentförmigen Borstenbündel 32b beträgt 0.3 mm bis 1.5 mm vorzugsweise von 0.5 mm bis 1 mm.

Die Fläche der ersten kreissegmentförmigen Borstenbündel 32b beträgt von 1.5 mm² bis 5 mm² vorzugsweise von 2 mm² bis 3.5 mm² (d.h. in der Draufsicht gemäss Fig. 34).

Der Radius der ersten kreissegmentförmigen Borstenbündel 32b beträgt von 5.5 mm bis 8.5 mm vorzugsweise von 6.5 mm bis 7.5 mm (ausgehend von der Bürstenkopfachse X_{B}).

Die Länge der Lücke 33b zwischen den ersten kreissegmentförmigen Borstenbündeln 32b beträgt von 0.8 mm bis 2 mm vorzugsweise von 1 mm bis 1.5 mm.

Der äussere Kreis K₃ umfasst hier vorzugsweise identische Borstenbündel mit einheitlicher, gleichbleibender Höhe, in Form von zweiten Kreissegmenten, welche einen unterbrochenen Kreisring bilden. Dieser umfasst hier beispielhaft acht erste kreissegmentförmige Borstenbündel 32b (die bevorzugte Anzahl liegt zwischen 2 und 12, noch bevorzugter zwischen 6 und 10). Die zweiten kreissegmentförmigen Borstenbündel 32c sind dabei grösser als die ersten kreissegmentförmigen Borstenbündel 32b des mittleren Kreises K₂.

Die Breite der zweiten kreissegmentförmigen Borstenbündel 32c beträgt 0.3 mm bis 1.5 mm vorzugsweise von 0.5 mm bis 1 mm (d.h. vorzugsweise gleiche Abmessungen wie bei den ersten kreissegmentförmigen Borstenbündeln 32b).

Die Fläche der zweiten kreissegmentförmigen Borstenbündel 32c beträgt von 2 mm² bis 7 mm² vorzugsweise von 2.5 mm² bis 4 mm² (d.h. in der Draufsicht gemäss Fig. 34).

Der Durchmesser (durch das Zentrum des Bürstenkopfs) beträgt von 8 mm bis 14 mm vorzugsweise von 10 mm bis 12 mm (ausgehend von der Bürstenkopfachse X_{B}).

Die Länge der Lücke 33c zwischen den zweiten kreissegmentförmigen Borstenbündeln 32c beträgt von 0.8 mm bis 2.4 mm vorzugsweise von 1.2 mm bis 2 mm.

Das Verhältnis der Fläche der ersten kreissegmentförmigen Borstenbündel 32b zur Fläche der zweiten kreissegmentförmigen Borstenbündel 32c beträgt von 1:5 bis 4.5:5 vorzugsweise von 2:5 bis 4:5.

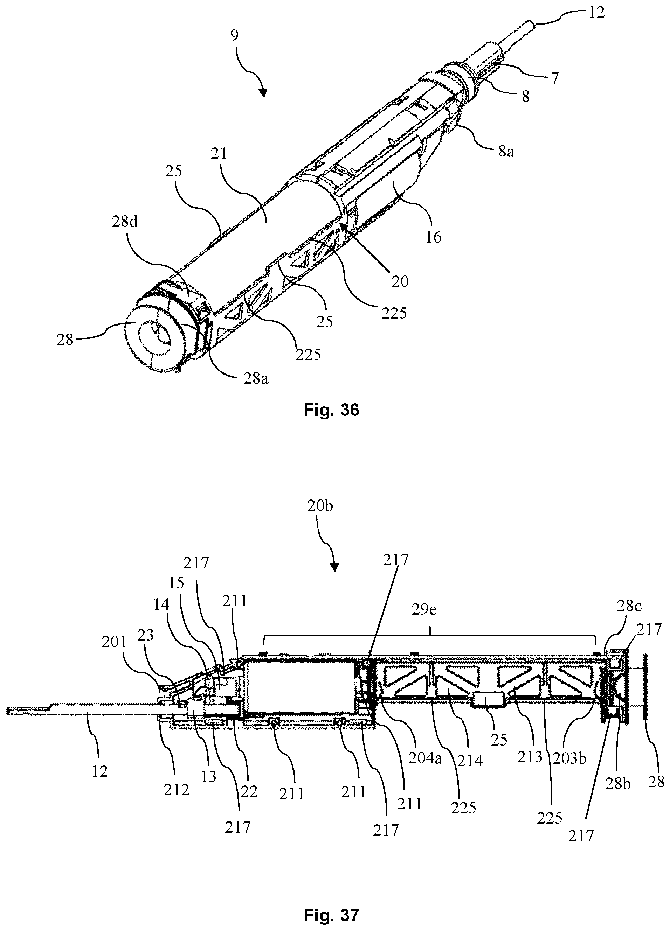

Die beiden Ansichten gemäss Fig. 35 und 36 zeigen analog zu den Fig. 7 und 8 eine alternative Ausführungsform. Es wird im Wesentlichen das Innenleben des Handteils 2 ohne das Gehäuse 6 gezeigt, welches in der vorliegend montierten Form auch als Einschubeinheit 9 bezeichnet wird. Die Rahmeneinheit 20 stellt dabei eine Art Chassis dar, an welchem sämtliche Komponenten bzw. Bauteile befestigt sind, um bei der Endmontage ein sicheres und zielgerichtetes Einführen in das Gehäuse 6 sicherzustellen.

Oben auf der Rahmeneinheit 20 ist eine Printplatte 27 aufgebracht. Diese weist Öffnungen auf, durch welche hindurch ein erstes Verbindungstück 204a des ersten Federblechs 204 sowie ein erstes Verbindungsstück 203a des hinteren Federblechs 203 ragen, welche mit der Printplatte 27 verlötet werden. Hierdurch wird die elektrische Verbindung mit den elektrischen Leitungen auf der Printplatte 27 hergestellt. Zudem dienen die Verbindungsstücke 203a und 204a als Orientierungshilfen bei der Montage der Printplatte 27. Die Printplatte 27 wird vorzugsweise in eine Vertiefung der Rahmeneinheit 20 eingesetzt und mittels Klemmarmen 208 gehalten. Am rückwärtigen Ende der Einschubeinheit 9 erkennt man den Spulenträger 28. Ergänzend zur Vertiefung ist eine Kombination von einer Nase 223 an der Rahmeneinheit mit einer Ausnehmung 224 an der Printplatte 27, vorgesehen. Die Nase 223 der Rahmeneinheit greift dabei in die Ausnehmung 224 an der Printplatte 27 ein. Dadurch kann die Printplatte 27 ausgerichtet werden (d.h. im Sinne einer eindeutigen Montage) und ein Verschieben in Längsrichtung kann verhindert werden.

Der Akku 21 wird von unten her in die Rahmeneinheit 20 eingebracht, wie in Fig. 36 ersichtlich, und mittels Rasteinrichtungen bzw. Vorspannflächen 25 sowie der Federbleche 203, 204 gehalten. Unterstützend sind seitlich neben den Vorspannflächen 25 an der Rahmeneinheit, an der Kante der Öffnung der Rahmeneinheit Halterippen 225 angebracht, die den Akku bzw. die Batterie ebenfalls halten bzw. das Halten unterstützen. Auch der Elektromotor 16 wird form-/kraftschlüssig von der Rahmeneinheit 20 aufgenommen. Von der Vorderseite der Rahmeneinheit ragen weiterhin zwei Schnappelemente 201 ab, welche mit korrespondierenden Rastvorrichtungen im Schlüsselelement 7 verrasten (hier vom Dicht-/Dämpfelement 8 verdeckt). Das Dicht-/Dämpfelement 8 weist Führungsschienen 8a auf, welche beim Einführen/Positionieren der Einschubeinheit 9 ins Handteils 2 helfen und ggf. mit entsprechenden Schienen an der Innenseite des Gehäuses 6 zusammenwirken.

Anhand der Fig. 37 sollen verschiedene Details gezeigt werden, welche abweichend zu Fig. 9 und 10 gestaltet sind.

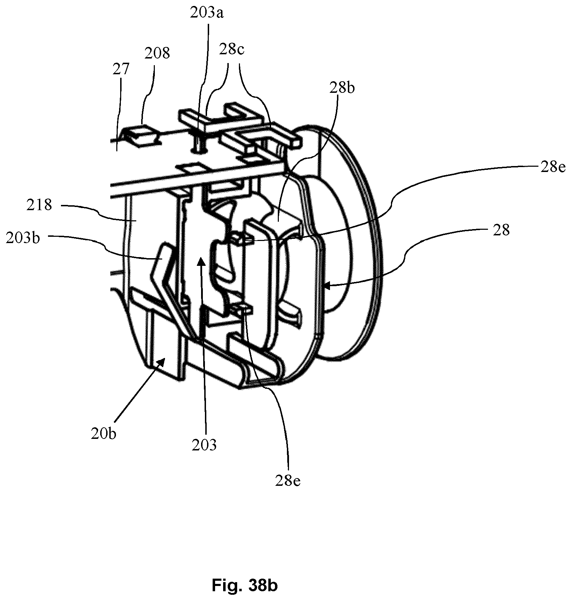

In der Spulenzone 29d wird der Spulenträger 28 auf die Rahmeneinheit 20 aufgesteckt. Der Spulenträger 28 umfasst ein Längenausgleichsmittel 28b, welches im montierten Zustand die Rahmeneinheit 20 gegenüber dem Gehäusedeckel 17 federnd abstützt. Das Längenausgleichsmittel 28b ist dabei in Form eines elastischen Abschnitts des Spulenträgers 28 ausgebildet, auf welchem einen Längenausgleich zwischen Rahmeneinheit 20 und Spulenträger 28 erreicht wird sowie eine schwimmende Lagerung der Rahmeneinheit 20 innerhalb des Gehäuses 6. Das Längenausgleichsmittel 28b kann dabei insbesondere auch komprimierbar ausgebildet sein. Zudem umfasst der Spulenträger 28 obere Aufschnappmittel 28c und seitliche Aufschnappmittel 28e (vgl. auch Fig. 38b), mit denen er (zusätzlich) auf das rückwärtige Ende der Rahmeneinheit 20 aufschnappt, um so einen noch besseren Halt an der Rahmeneinheit 20 zu gewährleisten.

Das Längenausgleichsmittel 28b ist als federnde Brücke gestaltet, mit einem Brückenelement links und einem Brückenelement rechts gestaltet. Die beiden Brückenelemente können jeweils individuell federn und sind somit nicht direkt gekoppelt, als dass sie einander beeinflussen würden. Damit ist die individuelle Anpassung an das Gehäuse mit dem Längenausgleich optimiert.

Weiter sind in der Darstellung die Halterippen 225 gut sichtbar, welche seitlich der Vorspannfläche 25 angeordnet sind. Sie unterstützen das Halten des Akkus bzw. der Batterie.

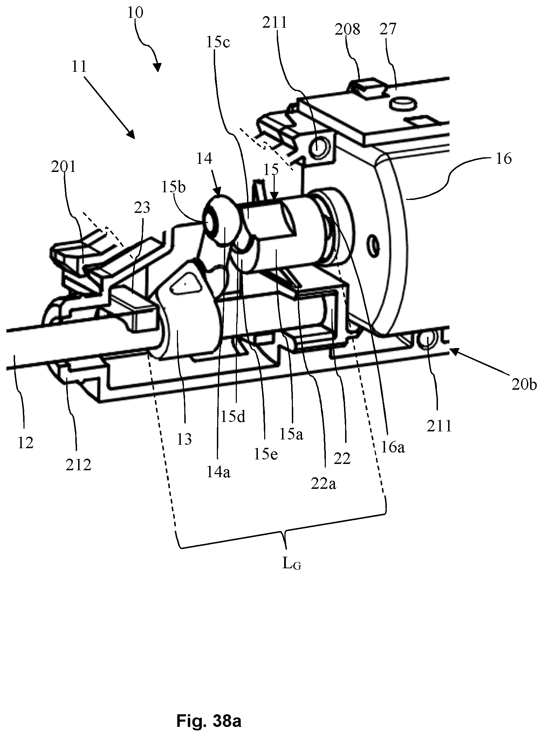

Die Fig. 38a zeigt insbesondere eine Detailansicht der Antriebseinheit 10 mit dem Getriebe 11 und dem Motor 16 gemäss der vorliegenden Offenbarung. Das Getriebe 11 umfasst die Antriebswelle 12 mit dem aufgespritzten Gelenkstück 13, die Pleuelstange 14 und den Exzenter 15. Der Grundkörper 15a des Exzenters 15 ist dabei mit seinem rückwärtigen bzw. motorseitigen Ende auf die Motorwelle 16a des Elektromotors 16 aufgebracht bzw. aufgepresst. Die Motorwelle 16a und die Achse des Grundkörpers fallen dabei zusammen. Der Grundkörper 15a des Exzenters 15 umfasst vorzugsweise zwei Ausnehmungen 15c, von denen hier nur eine zu sehen ist. Die Ausnehmungen 15c dienen zur Erzeugung einer optimierten Unwucht.

An seiner Stirnseite umfasst der Grundkörper 15a des Exzenters 15 einen Absatz 15e sowie entsprechend eine podestartige Erhebung 15d. Diese Ausgestaltung der Stirnfläche des Exzentergrundkörpers 15a dient insbesondere dazu, den Exzenter 15 und die Pleuelstange 14 mit so wenig Zwischenraum wie möglich betreiben zu können. Der Absatz 15e ist dabei so dimensioniert, dass er in der Bewegung des Getriebes 11 der Exzentergrundkörper 15a gerade am unteren, hier nicht zu sehenden, Lager 14b der Pleuelstange 14 vorbeikommt, ohne es zu berühren. Das obere Lager 14a der Pleuelstange 14 ist auf den Exzenterzapfen 15b aufgesteckt. Die Lager 14a, 14b der Pleuelstange 14 sind vorzugsweise als Gleitlager direkt im Körper der Pleuelstange 14 ausgestaltet. Das nicht gezeigte untere Lager 14b der Pleuelstange 14 ist auf einen dem Exzenterzapfen 15b entsprechenden Gelenkzapfen 13a des Gelenkstücks 13 aufgesteckt. Hierdurch kann eine besonders kompakte und effiziente Bauweise des Getriebes 11 erreicht werden.

Die einzelnen Teile des Getriebes 11 sind dabei lediglich ineinandergesteckt mit geringstmöglichen Abständen und Toleranzen dazwischen. Das hintere Ende der Antriebswelle 12 ist in einer ersten Lagereinrichtung 22 der zweiten halbschalenartigen Hälfte 20b gelagert. Die erste Lagereinrichtung 22 ist dabei vorzugsweise als Gleitlager ausgebildet und wird von der ersten halbschalenartigen Hälfte 20a bei der Montage an der zweiten halbschalenartigen Hälfte 20b verschlossen mittels einer korrespondierenden Abdeckung 219 (vgl. Fig. 9). Die Lagereinrichtung 22 kann verstärkt ausgebildet sein, damit auf die Antriebswelle 12 einwirkende Kräfte besser aufgefangen werden. Die Verstärkung kann beispielsweise mit einer Verstärkungsrippe 22a auf der Oberseite der Lagereinrichtung 22 passieren. Das Gelenkstück 13 liegt vorzugsweise an dem Spannarm 23 an, in welchen die Antriebswelle 12 bei der Montage eingeklickt wird und welcher von oben auf die Antriebswelle 12 drückt, um ein Rattern zu unterbinden und einen besonders ruhigen Lauf zu ermöglichen. Die Antriebswelle 12 wird durch den von beiden halbschalenartigen Hälften 20a, 20b gebildeten Führungszapfen 212 aus der Rahmeneinheit 20 hinausgeführt.

In Fig. 38b wird eine Detailansicht der Anordnung des Spulenträgers 28 am rückwärtigen Ende der Rahmeneinheit 20 veranschaulicht. Auf den Spulenträger 28 ist zunächst die Ladespule 28a (nicht gezeigt) aufgewickelt. Der Spulenträger 28 umfasst obere Aufschnappmittel 28c und seitliche Aufschnappmittel 28e mit welchen ein sicherer Halt an der Rahmeneinheit 20 bzw. der Printplatte 27 erreicht wird. Die oberen Aufschnappmittel 28c sind dabei in Form von zwei nach aussen gebogenen Flexarmen ausgebildet, welche auf die Printplatte 27 aufschnappen, und die seitlichen Aufschnappmittel 28e in Form von pro Seite zwei Rasthaken, welches in entsprechende Ausnehmungen an der Rahmeneinheit einrasten.

Der Spulenträger 28 umfasst weiterhin ein Längenausgleichsmittel 28b in Form eines elastisch ausgestalteten Abschnitts in Form einer federnden Brücke (links und rechts), welcher sich in Richtung des hinteren Federblechs 203 erstreckt, dieses aber nicht berührt. Das elastische Abschnitt bzw. das Längenausgleichsmittel 28b stützt somit die Rahmeneinheit 20 gegenüber dem Gehäusedeckel 17 ab und sorgt für einen Längenausgleich sowie für eine schwimmende Lagerung der Rahmeneinheit 20 innerhalb des Gehäuses.

Das hintere Federstück 203 ist in eine korrespondierende seitliche Aufnahme der zweiten halbschalenartigen Hälfte 20b eingesteckt und wird von einem Haltearm 218 der zweiten halbschalenartigen Hälfte 20b klemmend in Position gehalten. Die erste halbschalenartige Hälfte 20a weist eine korrespondierende Ausgestaltung zur Aufnahme des hinteren Federblechs 203 auf. Die Montage des vorderen Federblechs 204 hinter der Motorzone 29b erfolgt auf analoge Weise.

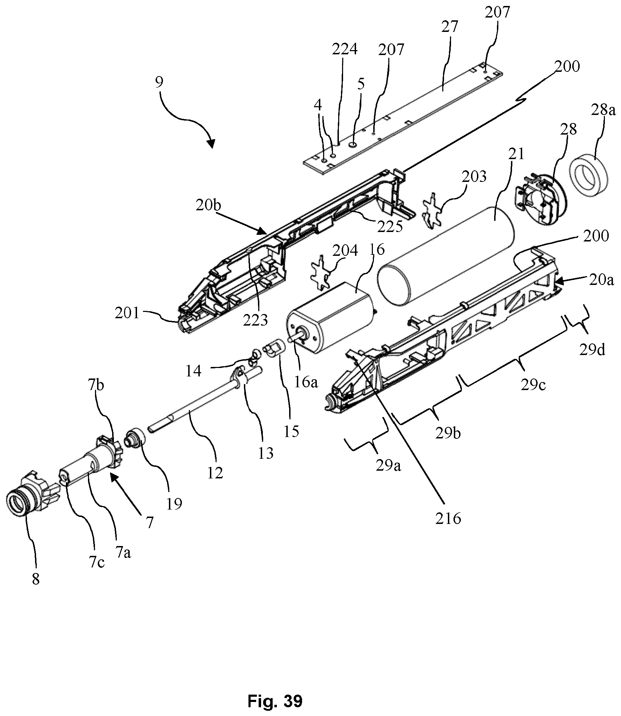

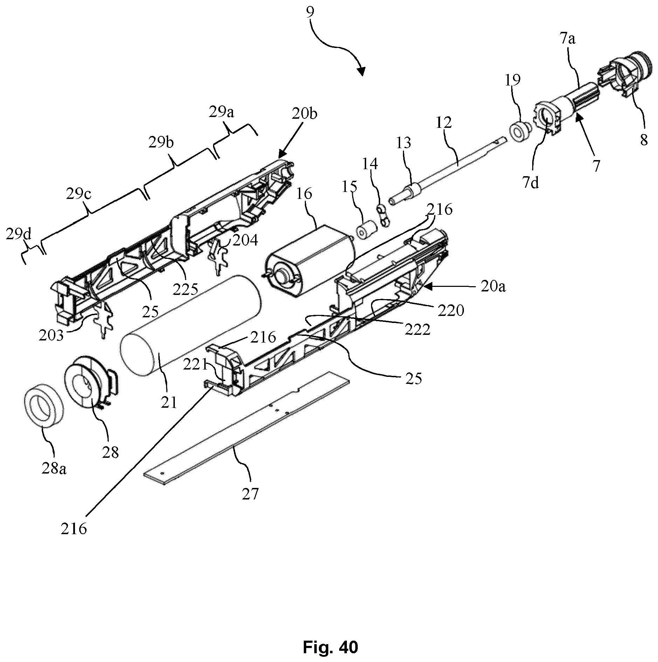

In den Fig. 39 und 40 werden nochmals sämtliche wesentlichen Bauteile des Innenlebens bzw. einer Einschubeinheit 9 für ein elektrisches Zahnbürstenhandteil 2 in jeweils einer Explosionsansicht von oben sowie einer Explosionsansicht von unten illustriert.

Anhand der Fig. 39 und 40 lässt sich anschaulich die Montage der Einschubeinheit 9 für das elektrische Zahnbürstenhandteil 2 veranschaulichen. In Fig. 39 sind noch einmal die Nase 223 an der Rahmeneinheit und die korrespondierende Ausnehmung 224 an der Printplatte 27 (vgl. Fig. 35) zu erkennen. Des Weiteren wird auf die Beschreibung zu den Fig. 13 und 14 verwiesen.

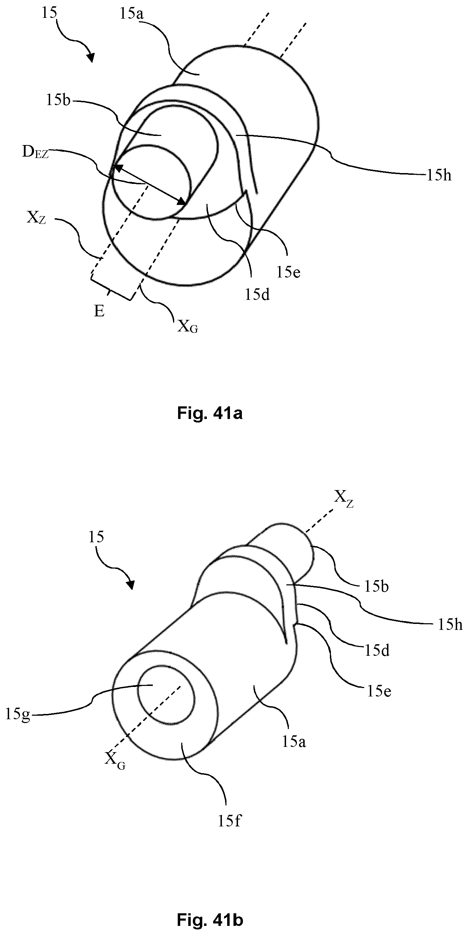

In den Fig. 41a und 41b wird eine Variante eines Exzenters 15 für das Getriebe 11 des elektrischen Zahnbürstenhandteils 2 für die oszillierende Variante in Einzelansicht gezeigt.

Der Exzenter 15 umfasst einen zylinderförmigen Grundkörper 15a, auf welchem - parallel versetzt zur Grundkörperachse XG - ein zylinderförmiger Exzenterzapfen 15b mit einer Exzenterzapfenachse XZ angeordnet ist. Der Abstand von der Grundkörperachse XG zu der Exzenterzapfenachse XZ bildet die Exzentrizität E. Die Exzentrizität E liegt zwischen 0.2 mm und 3 mm und bevorzugt zwischen 0.3 mm und 2 mm. Die Verbindung zwischen dem Grundkörper 15a und dem Exzenterzapfen 15b passiert über eine Verbindungsfläche 15h. Der Exzenterzapfen 15b ist hierbei auf einer podestartigen Erhebung 15d auf der Verbindungsfläche 15h angebracht. Hierdurch kann der Exzenter 15 letztlich näher an einer entsprechenden Pleuelstange des Getriebes angeordnet werden, was zu einer besonders kompakten Bauweise des Getriebes führt. Der Exzenterzapfen 15b ist ganz auf der podestartigen Erhebung 15d angeordnet.

In die Hinterseite 15f des Exzenters 15 ist die Aufnahmeöffnung 15g für die Motorwelle eingebracht. Die Grundkörperachse XG kann, muss aber nicht, mit der Mittelpunktsachse des Grundkörpers 15a zusammenfallen. Um die Grundkörperachse XG dreht sich der Exzenter 15.

Der Aufbau des Exzenters 15 ist derart gestaltet, dass er durch das optimierte Volumen des Körpers einen verbesserten Aufbau bezüglich dem Masseschwerpunkt des Exzenters 15 aufweist und somit auch eine optimierte Unwucht bringt.

Der Grundkörper 15a des Exzenters 15 hat eine Länge (von der podestartigen Erhebung 15d bis zu seinem rückwärtigen Ende bzw. der Hinterseite 15f) von 4 mm bis 9 mm vorzugsweise von 5.5 mm bis 7.5 mm und einen Durchmesser von 3 mm bis 8 mm vorzugsweise von 3.5 mm bis 5.5 mm.

Der Exzenterzapfen 15b des Exzenters 15 hat eine Länge von 1 mm bis 6 mm vorzugsweise von 2 mm bis 4 mm und einen Durchmesser DEZ von 1 mm bis 4 mm vorzugsweise von 1.5 mm bis 2.5 mm.

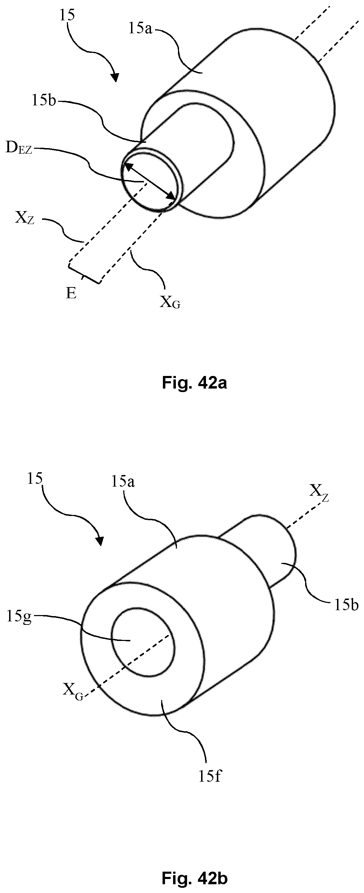

In den Fig. 42a und 42b wird eine Variante eines Exzenters 15 für das Getriebe 11 des elektrischen Zahnbürstenhandteils 2 für die Sonic-Variante in Einzelansicht gezeigt.

Der Exzenter 15 umfasst einen zylinderförmigen Grundkörper 15a, auf welchem - parallel versetzt zur Grundkörperachse X_{G} - ein zylinderförmiger Exzenterzapfen 15b mit einer Exzenterzapfenachse X_{Z} angeordnet ist. Der Abstand von der Grundkörperachse X_{G} zu der Exzenterzapfenachse X_{Z} bildet die Exzentrizität E. Die Exzentrizität E liegt zwischen 0.2 mm und 3 mm und bevorzugt zwischen 0.3 mm und 2 mm.

Der Grundkörper 15a des Exzenters 15 hat eine Länge von 3 mm bis 7 mm vorzugsweise von 3.5 mm bis 5.5 mm und einen Durchmesser von 3 mm bis 8 mm vorzugsweise von 3.5 mm bis 5.5 mm.

Der Exzenterzapfen 15b des Exzenters 15 hat eine Länge von 1 mm bis 6 mm vorzugsweise von 2 mm bis 4 mm und einen Durchmesser D_{EZ} von 1 mm bis 4 mm vorzugsweise von 1.5 mm bis 2.5 mm.

In die Hinterseite 15f des Exzenters 15 ist die Aufnahmeöffnung 15g für die Motorwelle eingebracht. Die Grundkörperachse XG kann, muss aber nicht, mit der Mittelpunktsachse des Grundkörpers 15a zusammenfallen. Um die Grundkörperachse XG dreht sich der Exzenter 15.

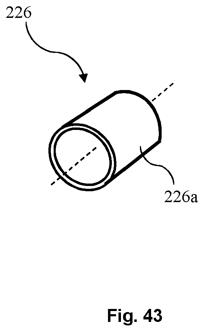

In Fig. 43 wird schliesslich beispielhaft eine Hülse 226 dargestellt, wie sie vorliegend für den Exzenterzapfen 15b, den Gelenkzapfen 13a und/oder die Pleuelstange 14 bzw. deren Lager 14a, 14b vorgesehen sein kann (d.h. insbesondere wenn letztere aus Kunststoff gefertigt sind) bzw. auf letztere auf- oder eingebracht werden kann. Die Hülse 226 ist dabei bevorzugt in Form einer Lager- bzw. Gleitlagerhülse ausgebildet, welche die Gleiteigenschaften der bewegten Teile des Getriebes verbessert. Die Hülse 226 ist vorzugsweise aus Metall, insbesondere aus Messing, gebildet. Die Hülse 226 kann des Weiteren an beiden Enden offen ausgestaltet sein (d.h. etwa in Form eines Rohrstücks) oder aber an einem Ende geschlossen ausgestaltet sein (d.h. etwa in Form eines Fingerhuts). Die Hülse 226 weist bevorzugt eine im Wesentlichen zylinderförmige Seitenwand 226a auf.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können. Der Umfang der Erfindung wird durch den Wortlaut der folgenden Ansprüche definiert.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

### Liste der Bezugszeichen:

- 1: Elektrische Zahnbürste
- 2: Elektrisches Zahnbürstenhandteil (Handteil)
- 3: Aufsteckbürste
- 4: Signalelemente
- 5: Ein-/Aus-Schalter
- 6: Gehäuse
- 7: Schlüsselelement
- 7a: Schlüsselgeometrie
- 7b: Ausnehmung
- 7c: zweite Lagereinrichtung
- 7d: Innengeometrie
- 8: Dicht-/Dämpfelement
- 8a: Führungsschienen
- 9: Einschubeinheit
- 10: Antriebseinheit
- 11: Getriebe
- 12: Antriebswelle
- 12a: Vorderes Ende Antriebswelle
- 12b: Hinteres Ende Antriebswelle
- 12c: Abflachung
- 12d: Einkerbung
- 13: Gelenkstück
- 13a: Gelenkzapfen
- 14: Pleuelstange
- 14a: erstes Lager
- 14b: zweites Lager
- 14c: Stangenelement
- 15: Exzenter
- 15a: Grundkörper
- 15b: Exzenterzapfen
- 15c: Ausnehmungen
- 15d: Podestartige Erhebung
- 15e: Absatz
- 15f: Hinterseite
- 15g: Aufnahmeöffnung
- 15h: Verbindungsfläche
- 16: Elektromotor
- 16a: Motorwelle
- 17: Gehäusedeckel
- 18: Öffnung
- 19: Balgdichtung
- 20: Rahmeneinheit
- 20a: erste halbschalenartige Hälfte
- 20b: zweite halbschalenartige Hälfte
- 21: Energiequelle (Akku)
- 22: erste Lagereinrichtung
- 22a: Verstärkungsrippe
- 23: Spannarm
- 24: Rasteinrichtung (Motor)
- 25: Vorspannflächen (Akkuzone)
- 26: Halteinrichtung (Spule)
- 27: Printplatte
- 28: Spulenträger
- 28a: Ladespule
- 28b: Längenausgleichsmittel
- 28c: Aufschnappmittel (oben)
- 28d: Aufschnappmittel (unten)
- 28e: Aufschnappmittel (seitlich)
- 29a: Getriebezone
- 29b: Motorzone
- 29c: Energiequellenzone (Akkuzone)
- 29d: Spulenzone
- 29e: Printzone
- 200: Vertiefung für Printplatte
- 201: Schnappelement (vorne)
- 203: hinteres Federblech
- 203a: erstes Verbindungsstück
- 203b: Federstück
- 204: vorderes Federblech
- 204a: erstes Verbindungsstück
- 204b: Federstück
- 207: Ausnehmungen Printplatte
- 208: Klemmarme für Printplatte
- 210: Führungszylinder Rahmen (Positionierhilfen)
- 211: Sacklöcher (Positionierhilfen)
- 212: Führungszapfen (Rahmen vorne)
- 213: Verbindungsstege
- 214: Durchbrüche
- 215: Anstosslinie (unten)
- 216: Schnappvorrichtungen
- 217: Einschnappöffnungen
- 218: Haltearme (Federbleche)
- 219: Abdeckung
- 220: Stützstreben
- 221: Steg
- 222: Öffnung Akku
- 223: Nase (Rahmen)
- 224: Ausnehmung (Printplatte)
- 225: Halterippen
- 226: Hülse
- 226a: Seitenwand Hülse
- 30a: Kopfabschnitt
- 30b: Halsabschnitt
- 30c: Aufsteckabschnitt
- 31: Bürstenkopf
- 31a: Austrittsfläche Borsten
- 32: Borstenbündel (allg.)
- 32a: Borstenbündel (erste Form)
- 32b: Borstenbündel (dritte Form)
- 32c: Borstenbündel (zweite Form)
- 33a: Lücken
- 33b: Lücken
- 33c: Lücken
- D_{A}: Durchmesser Antriebswelle
- D_{EZ}: Durchmesser Exzenterzapfen
- D_{GZ}: Durchmesser Gelenkzapfen
- E: Exzentrizität
- H: Höhe Borstenbündel (aussen)
- K₁: innerer Kreis
- K₂: mittlerer Kreis
- K₃: äusserer Kreis
- L_{G}: Länge des Getriebes
- L_{GS}: Länge Gelenkstück
- S: Abschrägung
- X_{B}: Bürstenkopfachse
- X_{G}: Grundkörperachse
- X_{L}: Längsachse Aufsteckbürste
- X_{Z}: Exzenterzapfenachse
- X_{P}: Lagerachse Pleuelstange

## Patentansprüche

1. Elektrisches Zahnbürstenhandteil (2) mit einem Gehäuse (6), einer Rahmeneinheit (20), einer Energiequelle (21), einem Schlüsselelement (7) sowie mit einer Antriebseinheit (10), mit einem Getriebe (11) und einem Elektromotor (16) wobei
das Gehäuse (6) die Rahmeneinheit (20), die Antriebseinheit (10) und die Energiequelle (21) umgibt,
die Rahmeneinheit (20) eine erste halbschalenartige Hälfte (20a) und eine zweite halbschalenartige Hälfte (20b) umfasst und zumindest eine Getriebezone (29a), eine Motorzone (29b) sowie eine Energiequellenzone (29c) aufweist, wobei die Getriebezone (29a) konfiguriert ist das Getriebe (11) aufzunehmen, die Motorzone (29b) konfiguriert ist den Elektromotor (16) aufzunehmen, und die Energiequellenzone (29c) konfiguriert ist die Energiequelle (21) aufzunehmen,
das Schlüsselelement (7) an einem vorderen Teil des Gehäuses (6) angeordnet ist und zum Verbinden der beiden halbschalenartigen Hälften (20a, 20b) dient, wobei das Schlüsselelement (7) jeweils über deren als Führungszapfen ausgebildetes vorderes Ende geschoben ist, damit die beiden halbschalenartigen Hälften (20a, 20b) insbesondere im vorderen Bereich der Rahmeneinheit (20) sicher zusammengehalten sind, wobei das Schlüsselelement (7) aus einer Hartkomponente gebildet ist und eine Schlüsselgeometrie (7a) aufweist, welche konfiguriert ist eine Kopplung mit einer korrespondierenden Schlüsselkopplungsgeometrie einer Aufsteckbürste einzugehen.
die Energiequelle (21) konfiguriert ist die Antriebseinheit (10) mit Energie zu versorgen, und
die Antriebseinheit (10) konfiguriert ist, eine Bewegung einer Antriebswelle (12) des Getriebes (11) zu erzeugen, wobei sich die Antriebswelle (12) durch das Schlüsselelement (7) hindurch erstreckt.

2. Elektrisches Zahnbürstenhandteil (2) nach Anspruch 1, wobei
die halbschalenartigen Hälften (20a, 20b) seitlich miteinander verbunden werden und zwar vorzugsweise mittels Rasteinrichtungen (24, 25) und Positionierhilfen (210, 211), wie etwa weiter vorzugsweise mittels einer Kombination aus Rasten/Einklicken und Überstülpen/Führen.

3. Elektrisches Zahnbürstenhandteil (2) nach Anspruch 2, wobei pro halbschalenartiger Hälfte (20a, 20b) 2 bis 10 vorzugsweise 4 bis 8 Positionierhilfen (210, 211) vorgesehen sind und bevorzugt 4 bis 12 vorzugsweise von 4 bis 8 Rasteinrichtungen.

4. Elektrisches Zahnbürstenhandteil (2) nach einem der Ansprüche 1 bis 3, wobei die Rahmeneinheit (20) Materialeinsparungen in Form von Ausnehmungen in den halbschalenartigen Hälften (20a, 20b) aufweist, wobei vorzugsweise im Bereich der Energiequellenzone (29c) eine fachwerkähnliche Konstruktion mit Durchbrüchen (214) und Verbindungsstegen (213) vorgesehen ist.

5. Elektrisches Zahnbürstenhandteil (2) nach einem der Ansprüche 1 bis 4, wobei der Elektromotor bevorzugt als Gleichstrommotor mit einer kontinuierlichen 360°-Drehung vorgesehen ist.

6. Elektrisches Zahnbürstenhandteil (2) nach einem der Ansprüche 1 bis 5, wobei die bestückte Rahmeneinheit (20) eine Einschubeinheit bildet, welche in das Gehäuse (6) einschiebbar ist.

7. Elektrisches Zahnbürstenhandteil (2) nach einem der Ansprüche 1 bis 6, wobei die halbschalenartigen Hälften (20a, 20b) in Längsrichtung ausgerichtet sind.

8. Elektrisches Zahnbürstenhandteil (2) nach einem der Ansprüche 1 bis 7, weiterhin aufweisend einen Spulenträger (28), wobei die Rahmeneinheit (20) eine Spulenzone (29d) aufweist, welche konfiguriert ist den Spulenträger (28) aufzunehmen, welcher vorzugsweise aus einer Weichkomponente gebildet ist.

9. Elektrisches Zahnbürstenhandteil (2) nach Anspruch 8, wobei der Spulenträger (28) mit in der Spulenzone (29d) ausgebildeten Schnappvorrichtungen (216) und/oder Positionierhilfen (211) der Rahmeneinheit (20), vorzugweise in Form von Führungszylindern oder Sacklöchern, in Eingriff gelangen und mit diesen verrasten kann.

10. Elektrisches Zahnbürstenhandteil (2) nach Anspruch 8 oder 9, wobei der Spulenträger (28) ein, vorzugsweise elastisches, Längenausgleichsmittel (28b) aufweist, welches die Rahmeneinheit (20) gegenüber einem Gehäusedeckel des Handteils (2) abstützt.

11. Elektrisches Zahnbürstenhandteil (2) nach einem der Ansprüche 1 bis 10, wobei das Schlüsselelement (7) an seinem dem Handteil (2) zugewandten, hinteren Ende konfiguriert ist mit der Rahmeneinheit (20) zu verrasten.

12. Elektrisches Zahnbürstenhandteil (2) nach einem der Ansprüche 1 bis 11, wobei das Schlüsselelement (7) eine Durchgangsbohrung für die Antriebswelle (12) sowie eine Lagereinrichtung (7c) für einen vorderen Bereich der Antriebswelle (12) aufweist, wobei die Lagereinrichtung (7c) vorzugsweise an dem dem Handteil (2) abgewandten Ende des Schlüsselelements (7) angeordnet ist.

13. Elektrisches Zahnbürstenhandteil (2) nach einem der Ansprüche 1 bis 12, wobei das Schlüsselelement (7) eine Innengeometrie (7d) aufweist, in welcher ein Dichtungselement, vorzugsweise eine Balgdichtung (19), angeordnet ist, welches konfiguriert ist das Gehäuse (2) gegen die Antriebswelle (12) abzudichten.

14. Elektrisches Zahnbürstenhandteil (2) nach einem der Ansprüche 1 bis 13, wobei auf das der Rahmeneinheit (20) zugewandte Ende des Schlüsselelements (7) ein Dicht-/Dämpfelement (8) aus einer Weichkomponente aufgebracht ist, welches konfiguriert ist das Gehäuse (6) gegen das Schlüsselelement (7) abzudichten und welches konfiguriert ist eine dämpfende Lagerung für das Schlüsselelement (7) bereitzustellen.

15. Elektrisches Zahnbürstenhandteil (2) nach Anspruch 14, wobei das Dicht- und Dämpfelement (8) über das Schlüsselelement (7) stülpbar und somit zwischen dem Schlüsselelement (7) und dem Gehäuse (6) positionierbar ist.

16. Elektrisches Zahnbürstenhandteil (2) nach Anspruch 14 oder 15, wobei das Dicht-/Dämpfelement (8) seitliche Führungsschienen (8a) aufweist, welche beim Einführen/Positionieren des Innenlebens der Einschubeinheit ins Zahnbürstenhandteil (2) helfen und welche vorzugsweise mit entsprechenden Schienen an der Innenseite des Gehäuses (6) zusammenwirken.

## Claims

1. Electric toothbrush handpiece (2) comprising a housing (6), a frame unit (20), an energy source (21), a key element (7), and a drive unit (10) comprising a gear mechanism (11) and an electric motor (16), wherein
the housing (6) surrounds the frame unit (20), the drive unit (10), and the energy source (21),
the frame unit (20) comprises a first half-shell-like half (20a) and a second half-shell-like half (20b) and includes at least a gear zone (29a), a motor zone (29b), and a energy source zone (29c), wherein the gear zone (29a) is configured to accommodate the gear mechanism (11), the motor zone (29b) is configured to accommodate the electric motor (16), and the energy source zone (29c) is configured to accommodate the energy source (21),
the key element (7) is arranged on a front portion of the housing (6) and serves to connect the two half-shell-like halves (20a, 20b), wherein the key element (7) is slid over the front end of each half, which is formed as a guide pin, so that the two half-shell-like halves (20a, 20b) are securely held together, particularly in the front region of the frame unit (20), wherein the key element (7) is formed from a hard component and has a key geometry (7a) that is configured to engage with a corresponding key engagement geometry of an attachment brush,
the energy source (21) is configured to supply energy to the drive unit (10), and
the drive unit (10) is configured to generate movement of a drive shaft (12) of the gear mechanism (11), wherein the drive shaft (12) extends through the key element (7).

2. Electric toothbrush handpiece (2) according to claim 1, wherein the half-shell-like halves (20a, 20b) are connected to one another laterally, preferably by means of locking means (24, 25) and positioning aids (210, 211), such as, more preferably, by means of a combination of snapping into place and sliding over/guiding.

3. Electric toothbrush handpiece (2) according to claim 2, wherein per half-shell-like half (20a, 20b) 2 to 10, preferably 4 to 8, positioning aids (210, 211) are provided, and preferred 4 to 12, preferably 4 to 8, locking means.

4. Electric toothbrush handpiece (2) according to any one of claims 1 to 3, wherein the frame unit (20) comprises material savings in the form of recesses in the half-shell-like halves (20a, 20b), wherein a truss-like structure with through openings (214) and connecting webs (213) is preferably provided in the area of the energy source zone (29c).

5. Electric toothbrush handpiece (2) according to any one of claims 1 to 4, wherein the electric motor is preferably provided as a direct-current motor with continuous 360° rotation.

6. Electric toothbrush handpiece (2) according to any one of claims 1 to 5, wherein the assembled frame unit (20) forms a slide-in unit that can be inserted into the housing (6).

7. Electric toothbrush handpiece (2) according to any one of claims 1 to 6, wherein the half-shell-like halves (20a, 20b) are aligned in the longitudinal direction.

8. Electric toothbrush handpiece (2) according to any one of claims 1 to 7, further comprising a coil carrier (28), wherein the frame unit (20) comprises a coil zone (29d) configured to accommodate the coil carrier (28), which is preferably formed from a soft component.

9. Electric toothbrush handpiece (2) according to claim 8, wherein the coil carrier (28) can engage with and lock into latching devices (216) and/or positioning aids (211) of the frame unit (20), preferably in the form of guide cylinders or blind holes, and can engage and lock with them.

10. Electric toothbrush handpiece (2) according to claim 8 or 9, wherein the coil carrier (28) comprises a, preferably elastic, length-compensating means (28b) that supports the frame unit (20) relative to a housing cover of the handpiece (2).

11. Electric toothbrush handpiece (2) according to any one of claims 1 to 10, wherein the key element (7) is configured at its rear end facing the handpiece (2) to engage with the frame unit (20).

12. Electric toothbrush handpiece (2) according to any one of claims 1 to 11, wherein the key element (7) comprises a through-bore for the drive shaft (12) as well as a bearing assembly (7c) for a front portion of the drive shaft (12), wherein the bearing assembly (7c) is preferably arranged at the end of the key element (7) facing away from the handpiece (2).

13. Electric toothbrush handpiece (2) according to any one of claims 1 to 12, wherein the key element (7) has an internal geometry (7d) in which a sealing element, preferably a bellows seal (19), is arranged, which is configured to seal the housing (2) against the drive shaft (12).

14. Electric toothbrush handpiece (2) according to any one of claims 1 to 13, wherein a sealing/damping element (8) made of a soft component is applied to the end of the key element (7) facing the frame unit (20), which is configured to seal the housing (6) against the key element (7) and which is configured to provide a damping mount for the key element (7).

15. Electric toothbrush handpiece (2) according to Claim 14, wherein the sealing/damping element (8) can be slipped over the key element (7) and thus positioned between the key element (7) and the housing (6).

16. Electric toothbrush handpiece (2) according to claim 14 or 15, wherein the sealing/damping element (8) comprises lateral guide rails (8a) that assist in inserting/positioning the inner components of the insert unit into the toothbrush handpiece (2) and that preferably cooperate with corresponding rails on the inner side of the housing (6).

## Revendications

1. Partie manche de brosse à dents électrique (2) comprenant un boîtier (6), une unité format cadre (20), une source d'énergie (21), un élément formant ergot (7) et comportant une unité d'entraînement (10), comprenant une transmission (11) et un moteur électrique (16), dans laquelle
le boîtier (6) entoure l'unité formant cadre (20), l'unité d'entraînement (10) et la source d'énergie (21),
l'unité formant cadre (20) comprend une première moitié en forme de demi-coque (20a) et une deuxième moitié en forme de demi-coque (20b) et comporte au moins une zone de transmission (29a), une zone de moteur (29b) ainsi qu'une zone de source d'énergie (29c), la zone de transmission (29a) étant configurée pour loger la transmission (11), la zone de moteur (29b) étant configurée pour loger le moteur électrique (16), et la zone de source d'énergie (29c) étant configurée pour loger la source d'énergie (21),
l'élément formant ergot (7) est disposé sur une partie avant du boîtier (6) et sert à relier les deux moitiés en forme de demi-coques (20a, 20b), l'élément de verrouillage (7) étant enfilé respectivement sur l'extrémité avant de chacune d'elles, conçue comme un tenon de guidage, afin que les deux moitiés en forme de demi-coques (20a, 20b) soient maintenues solidement ensemble, en particulier dans la zone avant de l'unité formant cadre (20), l'élément formant ergot (7) étant constitué d'un composant dur et présentant une géométrie d'ergot (7a) configurée pour s'accoupler avec une géométrie d'ergot correspondante d'une brosse enfichable,
la source d'énergie (21) est configurée pour alimenter l'unité d'entraînement (10) en énergie, et
l'unité d'entraînement (10) est configurée pour générer un mouvement d'un arbre d'entraînement (12) de la transmission (11), l'arbre d'entraînement (12) s'étendant à travers l'élément d'ergot (7).

2. Partie manche de brosse à dents électrique (2) selon la revendication 1, dans lequel les moitiés en forme de demi-coques (20a, 20b) sont reliées latéralement l'une à l'autre, de préférence au moyen de dispositifs d'encliquetage (24, 25) et d'aides au positionnement (210, 211), et plus particulièrement au moyen d'une combinaison d'encliquetage et d'emboîtement/guidage.

3. Partie manche de brosse à dents électrique (2) selon la revendication 2, dans lequel il est prévu, par demi-coque (20a, 20b), de 2 à 10, de préférence de 4 à 8, aides au positionnement (210, 211) et, préféré, de 4 à 12, de préférence de 4 à 8, dispositifs d'encliquetage.

4. Partie manche de brosse à dents électrique (2) selon l'une des revendications 1 à 3, dans lequel l'unité formant cadre (20) présente des économies de matière sous forme d'évidements dans les moitiés en forme de demi-coques (20a, 20b), une structure de type treillis comportant des ouvertures (214) et des entretoises de liaison (213) étant de préférence prévue dans la zone de la source d'énergie (29c).

5. Partie manche de brosse à dents électrique (2) selon l'une des revendications 1 à 4, dans lequel le moteur électrique est de préférence un moteur à courant continu permettant une rotation continue à 360°.

6. Partie manche de brosse à dents électrique (2) selon l'une des revendications 1 à 5, dans lequel l'unité formant cadre (20) forme une unité enfichable qui peut être insérée dans le boîtier (6).

7. Partie manche de brosse à dents électrique (2) selon l'une des revendications 1 à 6, dans lequel les moitiés en forme de demi-coques (20a, 20b) sont alignées dans le sens longitudinal.

8. Partie manche de brosse à dents électrique (2) selon l'une des revendications 1 à 7, comportant en outre un support de bobine (28), l'unité formant cadre (20) comportant une zone de bobine (29d) qui est configurée pour recevoir le support de bobine (28), lequel est de préférence constitué d'un composant souple.

9. Partie manche de brosse à dents électrique (2) selon la revendication 8, dans lequel le support de bobine (28) peut s'engager avec des dispositifs d'encliquetage (216) et/ou des aides au positionnement (211) de l'unité formant cadre (20), de préférence sous la forme de cylindres de guidage ou de trous borgnes, et s'enclencher avec ceux-ci.

10. Partie manche de brosse à dents électrique (2) selon la revendication 8 ou 9, dans lequel le support de bobine (28) comporte un moyen de compensation de longueur (28b), de préférence élastique, qui soutient l'unité formant cadre (20) par rapport à un couvercle de boîtier du manche (2).

11. Partie manche de brosse à dents électrique (2) selon l'une des revendications 1 à 10, dans lequel l'élément d'ergot (7) est configuré, au niveau de son extrémité arrière tournée vers le manche (2), pour s'enclencher avec l'unité formant cadre (20).

12. Partie manche de brosse à dents électrique (2) selon l'une des revendications 1 à 11, dans lequel l'élément d'ergot (7) comporte un alésage traversant pour l'arbre d'entraînement (12) ainsi qu'un dispositif de palier (7c) pour une partie avant de l'arbre d'entraînement (12), le dispositif de palier (7c) étant de préférence disposé à l'extrémité de l'élément d'ergot (7) opposée au manche (2).

13. Partie manche de brosse à dents électrique (2) selon l'une des revendications 1 à 12, dans lequel l'élément d'ergot (7) présente une géométrie interne (7d) dans laquelle est disposé un élément d'étanchéité, de préférence un joint à soufflet (19), qui est configuré pour assurer l'étanchéité du boîtier (2) par rapport à l'arbre d'entraînement (12).

14. Partie manche de brosse à dents électrique (2) selon l'une des revendications 1 à 13, dans lequel, sur l'extrémité de l'élément clé tournée vers l'unité formant cadre (20) (7) est appliqué un élément d'étanchéité/d'amortissement (8) constitué d'un composant souple, qui est conçu pour assurer l'étanchéité du boîtier (6) par rapport à l'élément d'ergot (7) et qui est conçu pour fournir un support amortissant à l'élément d'ergot (7).

15. Partie manche de brosse à dents électrique (2) selon la revendication 14, dans lequel l'élément d'étanchéité/d'amortissement (8) peut être enfilé sur l'élément d'ergot (7) et ainsi être positionné entre l'élément d'ergot (7) et le boîtier (6).

16. Partie manche de brosse à dents électrique (2) selon la revendication 14 ou 15, dans lequel l'élément d'étanchéité/d'amortissement (8) comporte des rails de guidage latéraux (8a) qui facilitent l'insertion et le positionnement de l'ensemble interne de l'unité enfichable dans le partie manche de brosse à dents (2) et qui coopèrent de préférence avec des rails correspondants situés à l'intérieur du boîtier (6).
